# EUROPÄISCHE PATENTSCHRIFT

(11) **EP 1 833 331 B1**
(45) Veröffentlichungstag und Bekanntmachung des Hinweises auf die Patenterteilung: **29.12.2010**
(21) Anmeldenummer: 06829498.2
(22) Anmeldetag: 11.12.2006
(51) Int. Cl.: A47F 10/06

(54) **RESTAURANTSYSTEM**
RESTAURANT SYSTEM
SYSTEME DE RESTAURANT

(30) Priorität: 12.12.2005 DE 102005059188
(43) Veröffentlichungstag der Anmeldung: 19.09.2007
(73) Patentinhaber: Heinemack GmbH, 90427 Nürnberg (DE)
(72) Erfinder: MACK, Michael, 90427 Nürnberg (DE)
(74) Vertreter: Schlögl, Markus
(86) Internationale Anmeldenummer: PCT/EP2006/011908
(87) Internationale Veröffentlichungsnummer: WO 2007/068426

(56) Entgegenhaltungen:
- DE-A1- 2 527 188
- DE-C1- 3 602 342
- GB-A- 695 999
- GB-A- 895 714
- GB-A- 2 207 406

## Beschreibung

Die Erfindung betrifft ein Restaurantsystem (auch: Gastronomiesystem).

Grundsätzlich sind zwei verschiedene Restaurantsysteme bekannt, das Bedienrestaurant und das Selbstbedienrestaurant.

In Bedienrestaurants werden die Gäste durch Kellner am Tisch bedient. Der Kellner nimmt die Bestellung auf und gibt sie an die Küche weiter, er serviert die Speisen und Getränke, trägt das verschmutzte Geschirr ab, bringt die Rechnung und nimmt die Bezahlung entgegen. Dies bietet zwar für die Gäste einen hohen Service, ist aber zeit- und personalintensiv und demzufolge mit hohen Kosten verbunden.

In Selbstbedienrestaurants übernimmt der Gast einen Großteil der angesprochenen Serviceleistungen selbst. Er bestellt an einer Bestelltheke und nimmt von dort die zusammengestellten Speisen und Getränke mit oder er stellt sich selbst die Speisen und Getränke zusammen und bezahlt im Vorbeigehen an einer Kasse. Anschließend trägt er die Speisen und Getränke an einen Tisch. Das verschmutzte Geschirr räumt er üblicherweise selbst wieder ab. Dies alles ist zwar aus Kostensicht sehr effizient, ist aber für die Gäste insgesamt eher ungemütlich. Hinzu kommt, dass in Schnellrestaurants billiges Geschirr, häufig auch Einweggeschirr, eingesetzt wird. Dementsprechend spricht die Esskultur in Schnellrestaurants viele Bevölkerungskreise wenig oder nicht an.

Aus DE 36 02 342 C1 ist eine Selbstbedienungseinrichtung für Restaurants bekannt. Hierbei wird das zu Servierende von einem Raum oberhalb des Gastraumes zu diesem mittels einer durch einen Mechanismus durch die Decke herabsenkbaren Tragplatte serviert.

Der vorliegenden Erfindung liegt daher die Aufgabe zugrunde, die vorgenannten Nachteile der bekannten Restaurantsysteme zu überwinden, d.h. insbesondere ein Restaurantsystem anzugeben, bei dem eine ansprechende Esskultur mit gutem Service kosteneffizient verwirklicht ist.

Diese Aufgabe wird gemäß der Erfindung durch ein Restaurantsystem mit den Merkmalen nach Patentanspruchs 1 gelöst. Vorteilhafte Ausgestaltungen und Weiterbildungen sind in den von Anspruch 1 abhängigen Ansprüchen angegeben.

Nach Anspruch 1 ist ein Restaurantsystem vorgesehen, umfassend
a) mindestens einen Arbeitsbereich zum Kochen und/oder Zubereiten von Speisen und/oder Getränken,
b) mindestens einen Gästebereich, insbesondere mit einem oder mehreren Tischen für Restaurantgäste,
c) wobei Arbeitsbereich und Gästebereich über ein Transportsystem für Speisen und/oder Getränke verbunden sind,
d) wobei das Transportsystem dazu ausgebildet ist, Speisen und/oder Getränke vom Arbeitsbereich zum Gästebereich zu transportieren,
e) wobei der Transport von Speisen und/oder Getränken vom Arbeitsbereich zum Gästebereich über das Transportsystem zumindest abschnittsweise mittels Schwerkraft erfolgt.

Bei dem Arbeitsbereich handelt es sich somit um einen Bereich, der Küche und/oder Bar umfasst. Dementsprechend ist dieser Bereich mit allen hierzu gehörenden Geräten, beispielsweise Küchengeräten, Herdplatten, Backofen, Kühlschränken, und den erforderlichen Arbeitsflächen ausgestattet.

Der Gästebereich ist der Bereich, in dem sich die Restaurantgäste aufhalten. Üblicherweise stehen hier Tische und Stühle. Es kann sich aber auch um eine Stehtheke handeln oder um einen Drive-in-Bereich, an dem Gäste Speisen und/oder Getränke an ihr Auto geliefert bekommen. Der Tisch ist in letzterem Fall Synonym für den Ausgabebereich der Speisen und Getränke an die Gäste.

Ein entscheidender Kern der Erfindung liegt in der Ausbildung des Transportsystems. Weder bringt ein Kellner Speisen und Getränke zu den Gästen noch müssen sich die Gäste die Speisen und Getränke selbst abholen. Auch sind keine vollständig elektrisch angetriebenen Transportsysteme für die Speisen und Getränke vorgesehen, beispielsweise Förderbänder, wie dies aus manchen Restaurants, insbesondere japanischen Restaurants, bekannt ist. Gemäß der Erfindung erfolgt der Transport der (üblicherweise zuvor bestellten) Speisen und/oder Getränke vielmehr durch die Schwerkraft. Die Schwerkraft bewegt die Speisen und Getränke vollständig oder zumindest abschnittsweise vom Arbeitsbereich zum Gästebereich, insbesondere an oder auf die Tische der Gäste und/oder zu Ausgabestellen, vorzugsweise in der Nähe der Tische, von denen der Gast seine Speisen und Getränke per Selbstbedienung abholt oder von denen aus eine Bedienung (Kellner) die Speisen und Getränke am jeweiligen Tisch serviert.

Nicht als Bestandteil des Transportsystems wird eine manuelle Tätigkeit (Tätigkeit durch Menschen) angesehen. Im vorgeschlagenen Restaurantsystem stellt gemäß einer Variante Arbeitspersonal im bzw. am Arbeitsbereich lediglich die Speisen und Getränke in das Transportsystem ein, der Gast entnimmt im Gästebereich die Speisen und Getränke aus dem Transportsystem. Weitere manuelle Tätigkeiten in direktem Zusammenhang mit dem Transportvorgang an sich sind hier nicht vorgesehen, insbesondere kein Transport der Speisen durch Menschen. Vielmehr erfolgt der gemäß dieser Variante der Erfindung vorgesehene Transport durch Schwerkraft ohne ergänzendes menschliches bzw. manuelles Zutun. Allenfalls erforderliche Steuerschritte zur Lenkung der transportierten Speisen und Getränke an das vorgesehene Ziel, beispielsweise das Einstellen von Weichen an Abzweigungen im Transportsystem, können durch das Arbeitspersonal erfolgen. Gemäß einer weiteren Variante ist eine Ergänzung der vorbeschriebenen Variante durch Bedienung vorgesehen, das heißt Bedienpersonal (Kellner) entnimmt die vom Transportsystem angelieferten Speisen und Getränke und serviert sie den Gästen am Tisch. Das Transportsystem ist in diesem Fall ergänzt durch manuelle Tätigkeiten von Bedienpersonal, so dass den Gästen der gewohnte Komfort durch Kellnerbedienung angeboten wird.

Die Vorteile der Erfindung liegen insbesondere darin, dass durch das Transportsystem die im normalen Bedienrestaurant personalintensive Servierarbeit entfällt. Der Koch im Arbeitsbereich kann die Speisen und/oder Getränke direkt auf das Transportsystem stellen, die Schwerkraft übernimmt im Wesentlichen den Transport an die Tische, dort können die Gäste sich die automatisch angelieferten Speisen und Getränke an ihren jeweiligen Platz heranholen. Ebenso entfällt aber auch das aus den Selbstbedienrestaurants bekannte unkomfortable Abholen der Speisen und/oder Getränke durch die Gäste. Somit lässt sich die aus Bedienrestaurants bekannte Esskultur mit gutem Service kosteneffizient, da wenig personalintensiv, verwirklichen. Im Ergebnis verbindet das vorgeschlagene Restaurantsystem hohe Effizienz mit deutlich niedrigen Kosten bei dennoch hervorragendem Service.

Besonders geeignet ist dieses Restaurantsystem für Restaurants, die eine überschaubare Anzahl verschiedener Gerichte anbieten, insbesondere für Restaurants, die als Spezialität ein bestimmtes Gericht in verschiedenen Varianten anbieten. In Betracht kommt hierbei beispielsweise die typisch fränkische Speise "Baggers", auch als Reibekuchen oder Kartoffelpuffer bezeichnet. Die "Baggers" werden klassisch mit Apfelmus serviert, aber auch mit verschiedensten anderen Soßen. Die "Baggers" können auch als Ummantelung bzw. Beilage bzw. Einlage von Fleisch und/oder Gemüse und/oder Salat und/oder Suppe und/oder Obst verwendet werden. Als weiteres Beispiel seien spanische Tapas angeführt, die in verschiedenen Varianten über ein Restaurantsystem nach der Erfindung angeboten und serviert werden könnten.

Ein derartiges Spezialitätenrestaurant kann einheitliches Geschirr einsetzen und sich somit hervorragend des vorgeschlagenen Restaurantsystems mit Schwerkraft-Transportsystem bedienen. Eine geeignete, ansprechende Geschirrauswahl sorgt für eine angemessene Esskultur. Die Küche ist überschaubar und lässt sich hervorragend zentral und zweckmäßigerweise erhöht innerhalb eines beispielsweise ringförmigen Bedienbereichs unterbringen. Selbstverständlich sind auch nahezu beliebige andere "Formgebungen" des Bedienbereichs und Anordnungsvarianten für die Küche vorstellbar, je nach den örtlichen Gegebenheiten.

Grundsätzlich ist das Restaurantsystem nach der Erfindung selbstverständlich nicht nur für bestimmte Spezialitäten wie "Baggers" oder Tapas geeignet, sondern auch für alle "normalen" Speisen.

Eine bevorzugte und zweckmäßige Weiterbildung sieht vor, dass bei dem vorgeschlagenen Restaurantsystem der Arbeitsbereich höher als der Gästebereich liegt. Die höhere Anordnung des Arbeitsbereichs gegenüber dem Gästebereich ist dabei allgemein zu verstehen, das heißt der Arbeitsbereich muss nicht direkt oberhalb des Gästebereichs angeordnet sein, in der Regel wird er sogar seitlich versetzt zum Gästebereich, jedoch gegenüber diesem höher liegend, vorgesehen sein. Der Höhenunterschied zwischen Arbeitsbereich und Gästebereich bringt automatisch die erforderliche Schwerkraft für die Wirksamkeit des Transportsystems auf. Der Höhenunterschied lässt sich für den Transport der Speisen und/oder Getränke durch die Schwerkraft ausnutzen.

Selbstverständlich ist es auch möglich, den für die Schwerkraftwirkung erforderlichen Höhenunterschied durch entsprechendes Hochfahren der Behältnisse mit den Speisen und Getränken im oder nahe dem Arbeitsbereich zu verwirklichen.

Von Vorteil ist natürlich, wenn das Transportsystem ausschließlich aufgrund der Schwerkraft funktioniert und auf anderweitige Energiezufuhr für den Transport verzichtet werden kann. Es ist aber auch denkbar, dass der Transport allein durch die Schwerkraft nur abschnittsweise verwirklicht ist. Beispielsweise können elektrische Systeme das Transportsystem abschnittsweise ergänzen. So kann es zum Beispiel am Startpunkt des Transportsystems notwendig sein, die Behältnisse mit den Speisen und Getränken zunächst auf eine bestimmte Höhe zu fahren, unter anderem durch ein Rollenband und/oder ein Fließband und/oder einen Aufzug. Von dort aus können dann die Behältnisse mittels Schwerkraft weiter transportiert werden. Es ist auch denkbar, das Transportsystem in einem beliebigen Teilabschnitt elektrisch und/oder elektronisch und/oder hydraulisch zu ergänzen.

Nach einer bevorzugten und vorteilhaften Weiterbildung ist vorgesehen, dass das Transportsystem ein Schienensystem mit einem oder mehreren Schienenwegen und/oder mit mindestens einer Schiene umfasst oder ist.

Ein Schienensystem ist ein eine oder mehrere Schienen umfassendes Transportsystem. Unter Schiene ist dabei ein in der Regel längliches Materialstück, üblicherweise aus Kunststoff und/oder Metall und/oder Holz, zu verstehen, das dazu bestimmt ist, andere Gegenstände zu führen. Da diese anderen Gegenstände hier durch die Schwerkraft entlang der Schiene bewegt werden, kann auch von einer Rutsche und damit von einem Rutschensystem gesprochen werden. Ein Schienenweg ist eine konkrete Verbindung des Arbeitsbereiches mit dem Gästebereich mittels Schienen, d.h. ein Schienenweg beginnt im Arbeitsbereich und endet im Gästebereich, vorzugsweise direkt an oder nahe einem Tisch für Restaurantgäste. Die für einen bestimmten Tisch vorgesehenen Speisen und/oder Getränke rutschen bzw. gleiten hierbei entlang des Schienenweges zielgerichtet vom Arbeitsbereich zu diesem Tisch im Restaurantbereich.

Bevorzugt umfasst das Schienensystem Gleitschienen. Diese weisen in einer Variante Gleitflächen auf, insbesondere eine ebene und glatte Gleitfläche, auf der die Speisen und Getränke, vorzugsweise in geeigneten Behältnissen und/oder mittels geeigneter Transporthilfsmittel, angetrieben von der Schwerkraft entlang gleiten. Gemäß einer Ausführungsvariante können in diesem Fall die Behältnisse zumindest im Wesentlichen vollflächig auf den Schienen aufliegen. In einer weiteren Variante weisen die Schienen Erhebungen und/oder Ausnehmungen auf, beispielsweise Rippen und/oder Nuten. Dabei können Erhebungen direkt an der Schiene ausgebildet oder zusätzlich aufgebracht sein, beispielsweise durch Aufkleben. Durch Ausnehmungen und/oder Erhebungen, insbesondere Rippen und/oder Nuten ist die Kontaktoberfläche zwischen Schiene und Behältnis geringer. Dies kann verbesserte Gleiteigenschaften mit sich bringen. Zu sehr guten Gleiteigenschaften der Schienen führt beispielsweise die Anbringung von glatten weißen Kunststofffurnieren, die beispielsweise in Küchenschränken oft verwendet werden, und/oder von gerippten Holzimitaten aus eine Mischung von Kunststoff und Holzspänen, die beispielsweise anstelle von Holz für den Terrassenbau verwendet werden, auf den Schienen. Interessant ist, dass auch gerippte und relativ raue Holzbretter, die beispielsweise für den Terrassenbau verwendet werden, recht gute Gleiteigenschaften aufweisen und daher ein geeignetes Material für die Schienen darstellen können.

Insgesamt ist festzuhalten, dass die Materialauswahl für die Rutsch- bzw. Gleitflächen nahezu unbegrenzt ist. Ein in Betracht kommendes Material kann erst dann als gut oder schlecht geeignet eingestuft werden, wenn klar ist, welche Art von Behälteroberfläche damit korrespondieren soll. Beispielsweise ist eine glatte Kunststoffunieroberfläche bei einem bestimmten Neigungswinkel der Schienen für Behälter aus nicht poliertem Edelstahl bestens geeignet. Bei gleichem Neigungswinkel ist dieses Material hingegen beispielsweise für emaillierte Blechtöpfe schlecht geeignet, da die Behälter viel zu schnell gleiten würden.

Gemäß einer Weiterbildung der Erfindung ist eine erste Art von Schienenweg von einer Schiene, insbesondere einer im Querschnitt kreisförmigen oder ovale oder rechteckigen Schiene oder einer U-förmigen Schiene mit Gleitfläche und Führungsrändern, gebildet. Die im Querschnitt kreisförmige oder ovale oder rechteckige Einzelschiene kann beispielsweise für den Transport der Speisen und Getränke mittels Transporthilfsmitteln, die die Schiene zumindest weitgehend umgreifen, eingesetzt werden. Die U-förmige Schiene kann beispielsweise für den Transport der Speisen und Getränke nach Art einer herkömmlichen Rutsche, bei der Behältnisse bzw. Transporthilfsmittel auf einer breiten Gleitfläche entlang rutschen, geführt von seitlichen Begrenzungen, eingesetzt werden.

Eine zweite Art von Schienenweg weist zwei zumindest im Wesentlichen parallel verlaufende Schienen, insbesondere zwei im Querschnitt zumindest im Wesentlichen kreisförmige oder ovale oder rechteckige Schienen, auf. Die Speisen und Getränke werden hierbei auf beiden Schienen gleitend und von diesen geführt an ihr Ziel transportiert, beispielsweise vergleichbar einer auf einem Einsenbahngleis mit Gefälle ohne Antrieb entlanggleitenden Lokomotive, wobei die Räder durch Gleitkufen ersetzt sein können.

Eine dritte Art von Schienenweg weist vier zumindest im Wesentlichen parallel verlaufende Schienen, insbesondere vier im Querschnitt zumindest im Wesentlichen kreisförmige oder ovale oder rechteckige Schienen, auf, wobei zwei innere Schienen einen geringeren Abstand zueinander aufweisen als zwei äußere Schienen, wobei die beiden inneren Schienen eine Gleitebene und die beiden äußeren Schienen eine Führungsebene definieren, und wobei die Gleitebene unterhalb der Führungsebene angeordnet ist. Insbesondere verläuft die Gleitebene unterhalb der Führungsebene. Die Speisen und Getränke gleiten hierbei in geeigneten Behältnissen und/oder Transporthilfsmitteln auf den beiden inneren Schienen (Gleitebene), die beiden äußeren Schienen (Führungsebene) verhindern ein seitliches Ausbrechen der Behältnisse bzw. Transporthilfsmittel, indem sie gegebenenfalls seitlich an diesen angreifen. Somit werden die Behältnisse bzw. Transporthilfsmittel durch die äußeren Schienen vergleichbar einem Geländer entlang des Schienenweges geführt.

Die Schienen können auch nach Art von Eisenbahn- oder Straßenbahnschienen ausgebildet bzw. angeordnet sein, wobei die Schienen selbst auch einen runden bzw. ovalen bzw. kreisförmigen Querschnitt aufweisen können. Bevorzugt laufen dann mindestens zwei Schienen nebeneinander (insbesondere parallel zueinander). Zweckmäßigerweise werden zusätzlich seitlich weitere Schienenstränge als eine Art Geländer vorgesehen. Diese seitlichen Schienenstränge dienen der Führung der Behältnisse in der Transportschiene und verhindern ein seitliches ausbrechen sowie ein Kippen der Behältnisse. Die Behältnisse können derart ausgebildet sein, dass sie seitlich fixiert auf den Gleitschienen sitzen. Es ist aber ebenso möglich, dass die Behältnisse mit ihrer Gleitfläche freibeweglich auf den Gleitschienen aufliegen. Um Behältnisse unterschiedlicher Größe transportieren zu können, sind bei einer Variante nicht nur zwei dieser nach Art von Bahnschienen ausgebildeten Gleitschienen nebeneinander in den Transportwegen angeordnet, sondern mehrere dieser Schienen, beispielsweise vier. Die inneren Schienen sind dann beispielsweise für den Transport kleinerer Behältnisse bestimmt, die äußeren für den Transport größerer Behältnisse. Es ist aber auch möglich, dass kleinere Behältnisse innerhalb der Schienenbreite hin und her rutschen können. Um ein Kippen oder Ausbrechen der Behältnisse zu verhindern, sollten auch hier zusätzliche seitliche Begrenzungsschienen vorgesehen sein. Die vier oder mehreren Gleitschienen könne auf einer Ebene liegend angeordnet sein, nur die seitlichen Führungsschienen liegen dann erhöht. Es kann aber auch vorgesehen sein, die (beiden) inneren Gleitschienen tiefer als die jeweils äußeren Gleitschiene zu legen. In diesem Fall gleiten kleinere Behältnisse auf den inneren Gleitschienen und werden durch die höherliegenden äußeren Gleitschienen seitlich geführt und gegen Ausbrechen und Umkippen gesichert. Größere Behältnisse hingegen gleiten auf den höherliegenden äußeren Gleitschienen, bei seitlicher Führung und Sicherung gegen Ausbrechen und Umkippen durch die nochmals höherliegenden Führungsschienen (Geländer). Dieses Prinzip lässt sich auf nahezu beliebige Art erweitern, das heißt zwischen den vorgenannten inneren Gleitschienen könnten nochmals tieferliegend weitere Gleitschienen für nochmals kleiner Behältnisse angeordnet sein, usw. Auf diese Weise können sehr unterschiedliche Behältnisse (vor allem Behältnisse unterschiedlichster Querschnittsgröße) im Schienensystem sicher transportiert werden. Es ist auch denkbar, Behältnisse unterschiedlicher Größe gleichzeitig in einem mehrstöckig aufgebauten System zu transportieren.

Das vorbeschriebene mehrteilige Transportsystem mit Gleitschienen auf unterschiedlichen Ebenen ist nicht nur mit Gleitschienen nach Art von Bahnschienen realisierbar. Es lässt sich auch analog mit Gleitflächen und/oder mit Roll- bzw. Kugelbahnen gestalten. Diese sind dann über die Breite des Transportweges gesehen in der Höhe zueinander versetzt angeordnet, wobei die tieferliegenden Flächen bevorzugt im Inneren des Transportweges vorgesehen sind. Auch kombinierte Systeme sind vorstellbar, beispielsweise Gleitflächen im Inneren und seitlich hierzu in erhöhter Position Gleitschienen nach Art von Bahnschienen, oder umgekehrt. Auch unterschiedliche Schienensysteme in verschiedenen "Stockwerken" eines mehrstöckigen Schienensystems sind denkbar.

Gemäß einer Ausführungsvarianten weist das Schienensystem in Transportrichtung Abzweigungen auf, an denen der Transportweg durch steuerbare Weichen einstellbar oder eingestellt ist, insbesondere über mindestens eine vom Arbeitsbereich aus betätigbare Bedieneinrichtung. Die in das Schienensystem integrierten Weichen flexibilisieren das Schienensystem. Auf diese Weise ist es möglich, durch eine Schiene, die sich in mehrere Abzweigungen aufspaltet, und über die entsprechende Steuerung einer an den Abzweigungen angeordneten Weiche, mehrere Tische zu bedienen. Die Abzweigung kann hierbei sowohl seitlich bzw. horizontal als auch vertikal erfolgen, d.h. die voneinander abzweigenden Schienenwege können zunächst sowohl im Wesentlichen horizontal nebeneinander als auch im Wesentlichen vertikal übereinander angeordnet sein. Über eine Weiche kann eine Abzweigung in zwei, aber auch in mehrere Schienenwege verwirklicht werden.

Die Weichensteuerung muss dabei selbstverständlich gewährleisten, dass die Speisen und Getränke auch am jeweils vorgesehenen Ziel (in der Regel ein Tisch) ankommen. Hierzu kann beispielsweise vorgesehen sein, dass das Personal am Arbeitsbereich zunächst eine Taste für die vorgesehene Tischnummer betätigt. Durch diesen Tastendruck wird automatisch die entsprechende Weiche (bzw. werden automatisch die entsprechenden Weichen) in die erforderliche Position gebracht. Nun stellt das Arbeitsbereich-Personal den Behälter mit den Speisen und/oder Getränken auf die Schiene, wobei diese Möglichkeit zum Aufstellen auf die Schiene zweckmäßigerweise erst nach Betätigung einer Tischwahltaste freigegeben ist. Dann rutscht der Behälter los. Die Steuerung kann aber auch automatisiert über ein Restaurant-Informationstechnologie(IT)-System erfolgen, beispielsweise unter Einsatz von RFID-Chips an Transporthilfsmitteln und entsprechenden Lesegeräten im Transportsystem.

Alternativ kann auch vorgesehen sein, dass das Personal die Behälter zunächst in die Schiene einstellt, das Losrutschen der Behälter aber noch verhindert wird, beispielsweise durch eine Schranke, bis das Personal die Taste für das anzusteuernde Ziel (in der Regel ein Tisch) gedrückt hat und damit die Weichen entsprechend gestellt sind.

Sinnvoll ist es, wenn der Behälter unmittelbar nach der Weiche einen Sensor, beispielsweise eine Lichtschranke, passiert. Dieser signalisiert der Systemsteuerung und/oder dem Arbeitsbereich-Personal das erfolgreiche Passieren der Weiche. Gleichzeitig löst der Sensor die Rückstellung der Weiche in die Normalstellung aus. Zweckmäßigerweise ist es dem Arbeitsbereich-Personal erst dann möglich, durch erneuten Tastendruck einen anderen Tisch, der ebenfalls über die jeweilige Schiene anfahren werden kann, auszuwählen und damit diese oder eine andere Weiche neu zu stellen, um einen weiteren Behälter an den anderen Tisch zu bringen. Selbstverständlich sollte der weitere Behälter wiederum erst losrutschen können, wenn die gewünschte Weichenstellung realisiert ist. Alternativ oder additiv kann vorgesehen sein, dass eine größere Behälterzahl angebbar ist, so dass die Weiche bzw. die Weichen erst nach Passieren dieser angegebenen Behälterzahl zurückgestellt werden bzw. eine Neueinstellung durch das Personal möglich ist. Dies ist dann sinnvoll, wenn mehrere Behälter mit Speisen und Getränken nahezu gleichzeitig bzw. direkt hintereinander an einen Tisch gebracht werden sollen, was zumindest bei zwei oder mehreren Gästen an einem Tisch regelmäßig der Fall ist.

Alternativ kann auch vorgesehen sein, dass die Weichen nach dem Passieren der Behälter nicht automatisch in eine Normalstellung zurückgestellt werden, sondern in ihrer Stellung bleiben, bis sie ein neue Stellsignal erhalten. Die Weichen werden dann nicht automatisch beispielsweise über einen Sensor gesteuert, sondern manuell durch das Personal bedient.

Gemäß einer Weiterbildung sind die Weichen elektrisch und/oder elektronisch und/oder hydraulisch und/oder pneumatisch stellbar. Die Ansteuerung der Weichen kann über die genannten Wege erfolgen, es ist aber auch eine Funkansteuerung denkbar.

Eine zweckmäßige Weiterbildung sieht das Vorsehen von Transporthilfsmitteln, insbesondere Gleitvorrichtungen oder Gleitunterlagen, vor, die hinsichtlich ihrer Abmessungen und/oder ihrer Gleiteigenschaften mit den Gleitschienen korrespondieren und die für den Transport von Behältnissen für Speisen und/oder Getränke, insbesondere Töpfen und/oder Geschirr und/oder Gläser und/oder Becher und/oder Flaschen und/oder Karaffen ausgebildet sind. Insbesondere sollten die Behältnisse stabil in oder auf die Transporthilfsmittel stellbar sein, um ein Herausfallen oder Kippen beim Transport zu verhindern.

Die Transporthilfsmittel können gemäß einer Weiterbildung Führungskomponenten aufweisen, die insbesondere zumindest teilweise aus Kunststoff bestehen. Diese Führungskomponenten sind derart ausgebildet, dass sie die Schienen zumindest teilweise umgreifen, insbesondere mindestens die Hälfte des Schienenumfangs umgreifen, vorzugsweise mindestens zwei Drittel des Schienenumfangs umgreifen.

Auch kann vorgesehen sein, dass das Transporthilfsmittel zwei Führungskomponenten aufweist, die miteinander verbunden sind. Diese Verbindung kann beispielsweise über eine Ringkomponente, in die das zu transportierende Behältnis einhängbar oder eingehängt ist, erfolgen. Hierbei sind die Ringkomponente vorzugsweise beweglich, insbesondere drehbeweglich, mit den Führungskomponenten verbunden, und zwar insbesondere über seitliche Ringelemente, die auf Bolzen, die auf den Führungskomponenten vorgesehen sind, aufgesteckt bzw. aufgehängt sind. Alternativ kann die Verbindung zwischen den beiden Führungskomponenten auch über das Behältnis selbst hergestellt sein bzw. werden, indem das Behältnis an und/oder auf die Führungskomponenten angebracht bzw. aufgesteckt ist bzw. wird, oder indem das Behältnis an und/oder auf Formkörper, die an den Führungskomponenten vorgesehen sind, angebracht bzw. aufgesteckt ist bzw. wird, insbesondere über Griffe am Behältnis.

Dadurch sind die Führungskomponenten innerhalb gewisser Grenzen flexibel gegenüber dem Schienen, was zu einem erwünschten Verkanten beim Gleiten und damit zu einer ebenfalls erwünschten Begrenzung der Transportgeschwindigkeit führt.

Alternativ oder additiv ist es auch möglich, Behältnisse, insbesondere Töpfe oder Geschirr, vorzugsweise Gleitschüsseln und/oder Gleitteller und/oder Gleittöpfe und/oder Gleitpfannen, und/oder Gläser und/oder Becher und/oder Flaschen, für die zu transportierenden Speisen und/oder Getränke vorzusehen, die selbst hinsichtlich ihrer Abmessungen und/oder Gleiteigenschaften mit den Gleitschienen korrespondieren. Derartige Behältnisse können direkt, das heißt ohne weitere Transporthilfsmittel, auf dem Schienensystem eingesetzt werden. Sie gleiten direkt, ohne Transporthilfsmittel, auf den Schienen entlang.

Das "korrespondieren" hinsichtlich der Abmessungen ist hier nicht derart eng zu verstehen, dass die äußeren Abmessungen des Behältnisse exakt den inneren Abmessungen der Gleitschienen entsprechen. Umfasst ist vielmehr auch, dass die Schienenabmessungen größer als die Behälterabmessungen ausfallen können. Wichtig ist lediglich, dass die jeweiligen Abmessungen einen problemlosen Transport der Behältnisse in den Schienen ermöglichen. Die Schienen können somit durchaus auch deutlich breiter als die Behältnisse sein.

Als besonders vorteilhaft hat sich dabei eine mehrteilig aufgebaute Gleitschüssel erwiesen, wobei eine erste Schüssel hinsichtlich ihrer Abmessungen und/oder Gleiteigenschaften mit den Gleitschienen korrespondiert, insbesondere einen für die Gleitschiene ausgebildeten Gleitboden aufweist, und in die erste Schüssel mindestens eine weitere Schüssel einhängbar oder eingehängt ist.

Eine zweckmäßige Variante sieht einen Getränkeeinsatz für das Transporthilfsmittel und/oder das Behältnis, insbesondere für die Gleitschüssel, vor, mit dem Getränkebehälter (Flaschen, Gläser, Tassen, usw.) oder Karaffen oder Suppenbehälter umfallsicher mittels des Transporthilfsmittels und/oder Behältnisses, insbesondere der Gleitschüssel, dem Gleittopf oder der Gleitpfanne, transportierbar sind. Der Getränkeeinsatz kann fest mit dem Transporthilfsmittel und/oder dem Behältnis verbunden sein, er kann auch einstückig mit dem Transporthilfsmittel und/oder dem Behältnis ausgebildet sein, er kann aber auch als eigenständiger Gegenstand lediglich in das Transporthilfsmittel und/oder das Behältnis eingesetzt sein und bei Bedarf wieder entfernt werden.

Gemäß einer weiteren vorteilhaften Weiterbildung ist ein Griff, insbesondere ein abnehmbarer Griff, vorgesehen, mit dem die Behältnisse, insbesondere die Gleitschüsseln, aus dem Schienensystem und/oder den Transporthilfsmitteln entnehmbar sind. Derartige Griffe sind bevorzugt an den tischseitigen Enden der Schienen angeordnet und können zur Entnahme der Behältnisse aus dem Transportsystem von den Gästen benutzt werden. Alternativ oder additiv ist es selbstverständlich auch möglich, die Behältnisse fest mit einem oder zwei Griffen, beispielsweise wie bei herkömmlichen Pfannen oder Töpfen, zu versehen.

Gemäß einer zweckmäßigen Weiterbildung des Restaurantsystem ist vorgesehen, dass der Arbeitsbereich mit mindestens einem, insbesondere jedem, Tisch des Gästebereichs über mindestens eine Schiene bzw. mindestens einen Schienenweg verbunden oder verbindbar ist.

Vorteilhaft ist auch, wenn die zwischen Arbeitsbereich und Gästebereich angeordnete Schiene zumindest abschnittsweise bewegbar ist, insbesondere über mindestens eine vom Arbeitsbereich aus betätigbare Bedieneinrichtung und/oder über ein Seilsystem und/oder über einen Wippmechanismus. Dabei kann vorgesehen sein, dass die Schiene, vorzugsweise über ein Seilsystem oder über einen Wippmechanismus, derart beweglich ist, dass ein dem Gästebereich zugewandtes Ende der Schiene in vertikaler Richtung beweglich ist, insbesondere in einer unteren Position an oder auf dem Tisch liegt und in einer oberen Position über dem Gästebereich freischwebend angeordnet ist, wobei vorzugsweise nur in der unteren Position ein Transport von Speisen und/oder Getränken über die Schiene möglich ist. Alternativ oder additiv ist es ferner zweckmäßig, wenn die Schiene auch in horizontaler Richtung drehbar ist, insbesondere durch eine Drehlagerung. Sinnvoll ist dabei jedoch, wenn die Drehbewegung der Schiene nur in einer, insbesondere über eine vorgegebene Höhe hinausgehenden, angehobenen Position des dem Gästebereich zugewandten Endes der Schiene möglich ist und in niedrigeren Positionen blockiert ist, insbesondere durch ein Führungsraster für die Schiene.

Für den üblichen Fall, dass beim Wippmechanismus der Schienenteil zu den Gästen hin länger ist als der der Aufgabestelle (das heißt insbesondere der Küche) zugewandte Schienenteil, sieht eine vorteilhafte Weiterbildung vor, an dem der Aufgabestelle zugewandten Schienenteil Gegengewichte anzubringen, um die Handhabung des Wippmechanismus zu erleichtern

Der Transport von Behältnissen mit Speisen und Getränken durch Schwerkraft erfordert eine gewisse Steuerung der Geschwindigkeit der Behältnisse. Zum einen dürfen die Behältnisse nicht mitten im Transportsystem zum Stehen kommen, zum anderen dürfen sie nicht zu schnell im Gästebereich ankommen.

Hierzu ist gemäß einer Weiterbildung vorgesehen, dass die Schiene zwischen Arbeitsbereich und Gästebereich in einer Transportstellung zumindest in einem Mittelabschnitt im Wesentlichen eine gleichbleibende Steigung (oder: Gefälle) aufweist. Additiv oder alternativ kann vorgesehen sein, dass die Schiene zum Gästebereich hin einen Auslaufabschnitt aufweist, in dem der Betrag der Steigung (oder: das Gefälle) der Schiene geringer als im Mittelabschnitt ist, insbesondere zumindest abschnittsweise kontinuierlich abnimmt, und/oder eine Gleitfläche der Schiene einen größeren Reibungskoeffizienten aufweist als im Mittelabschnitt.

In Kurven kann es sinnvoll sein, die Schienensteigung größer als in geraden Schienenabschnitten auszubilden, da die Reibung zwischen Schiene und Behältnis in Kurven durch das Anliegen der Behältnisse am Schienenrand und die Richtungssteuerung durch den Schienenrand erhöht sein kann.

Wichtig für die Geschwindigkeitssteuerung ist, dass unterschiedliche Oberflächen sowohl der Schienen als auch der Behältnisse zu unterschiedlichem Rutschverhalten und damit zu unterschiedlichen Rutschgeschwindigkeiten führen. Weiterer entscheidender Einflussfaktor ist der Neigungswinkel der Schiene, d.h. die Steigung bzw. das Gefälle der Schiene.

Prinzipiell kann die Geschwindigkeit der Behältnisse durch entsprechende Änderung der Gleitoberfläche der Behältnisse (üblicherweise die Unterseite der Behältnisse) während des Transports angepasst werden. Dies lässt sich allerdings nur mit erheblichem technischem Aufwand realisieren.

Weiter kann der Neigungswinkel der Schiene oder die Steigung (das Gefälle) der Schiene während des Transportbetriebs gesteuert werden und dadurch die Geschwindigkeit der rutschenden Behältnisse beeinflusst werden.

Bevorzugt und zweckmäßig ist jedoch, das Rutschverhalten, insbesondere die Geschwindigkeit der Behältnisse über die Oberflächenbeschaffenheit der Schienen, insbesondere der Gleitflächen der Schienen, zu steuern. Die Gleitflächen, insbesondere die Unterseiten, der verschiedenen eingesetzten Behältnisse sollten hierfür jeweils eine gleiche Beschaffenheit aufweisen. Beispielsweise können einheitliche Schüsseln (allgemein: Behältnisse) aus insbesondere poliertem Edelstahl zum Einsatz kommen. Diese weisen mehrere Vorteile auf. Sie zerbrechen nicht, auch wenn sie aufeinander stoßen. Sie haben eine polierte oder anderweitig gleichmäßig bearbeitete Oberfläche, auch an der Gleitfläche, und damit eine sehr gute Gleiteigenschaft. Sie sind problemlos in einer Spülmaschine reinigbar. Sie werden hohen Ansprüchen ans Design gerecht. Alternativ können aber auch Behältnisse, insbesondere Schüsseln und/oder Teller und/oder Töpfe und/oder Pfannen und/oder Becher und/oder Flaschen, aus anderen Werkstoffen, beispielsweise Kunststoff und/oder Porzellan und/oder Glas und/oder Keramik und/oder andere Metalle, eingesetzt werden. In Betracht kommen auch beschichtete Materialien, beispielsweise pulverbeschichtetes und/oder einbrennlackiertes und/oder emailliertes Metall oder Kunststoff. Ferner ist es auch möglich, Behältnisse aus Karton und/oder Papier, wie sie beispielsweise von Imbissketten und Selbstbedienungsrestaurants bekannt sind, zu verwenden. Derartige Behältnisse (beispielsweise Verpackungen) können ebenfalls das Schienensystem hinuntergleiten. Auch können beispielsweise emaillierte Töpfchen, Pfännchen und/oder Schüsselchen, wie sie unter anderem als Kinderspielzeug bekannt sind, verwendet werden.

Letztendlich gilt für das Material der Behälter das Gleiche wie für das Material der Rutsch- bzw. Gleitflächen der Schienen. Die Materialauswahl ist nahezu unbegrenzt. Ein in Betracht kommendes Material kann erst dann als gut oder schlecht geeignet eingestuft werden, wenn klar ist, mit welcher Art von Rutsch- oder Gleitfläche der Schienen es korrespondieren soll.

Hinsichtlich der Schienenausbildung ist zu beachten, dass manche Werkstoffe sehr gut und/oder gleichmäßige Gleiteigenschaften aufweisen, beispielsweise glatte Kunststofffurniere, wie sie im Inneren von Küchenmöbeln verwendet werden. Geht man zum Beispiel von einem einheitlichen Gefälle der Schiene von 25% aus, so rutschen manche Behältnisse auf diesen Kunststofffurnieren sehr gut und gleichmäßig, ihre Verwendung ist dementsprechend bevorzugt. Auf anderen Untergründen, wie beispielsweise geschliffenem Holz, rutschen die gleichen Behältnisse hingegen bei einem Gefälle von 25% nur sehr ungleichmäßig und bleiben oft auch hängen. Auf Aluminiumschienen oder rauen Holzuntergründen bleiben manche Behältnisse bei einem Gefälle von 25% von vorneherein stehen, ohne überhaupt zu rutschen. Bei diesen Materialien müsste daher der Neigungswinkel erhöht werden, da ab einer bestimmten Neigung die Behältnisse natürlich auf jedem Untergrund zu rutschen beginnen. Allerdings erreichen sie dann unter Umständen Geschwindigkeiten, die am Ende der Transportstrecke zu Unfällen führen können. Mit großen Neigungswinkeln lassen sich in der Regel auch aus räumlichen Gründen lediglich relativ kurze Wegstrecken mit dem Schienensystem zurücklegen. Dies mag in einigen Fällen sinnvoll sein, zumeist ist es jedoch aufgrund räumlicher Gegebenheiten (insbesondere die zur Verfügung stehende Raumhöhe wirkt sich hier begrenzend aus) unerwünscht, da bei geringer Raumhöhe der durch das Transportsystem bedienbare Gastbereich entsprechend klein ausfällt. Müssen weite Strecken überwunden werden und/oder steht nur eine geringe Raumhöhe zur Verfügung, ist es zweckmäßig, die Schienen als Rollenbänder bzw. -bahnen und/oder Kugelbänder bzw. -bahnen auszuführen. Dadurch lässt sich auch bei geringem Steigungsbetrag (geringem Gefälle) ein ausreichendes Gleitverhalten erreichen. Denkbar ist auch, insbesondere bei längeren zurückzulegenden Wegstrecken, durch geeignete Mittel, beispielsweise durch Förderbänder oder einen Aufzug, an bestimmten Zwischenpunkten wieder Höhe zu gewinnen, um dann den weiteren Weg wieder angetrieben durch die Schwerkraft zurückzulegen.

Das obenstehend erläuterte unterschiedliche Gleitverhalten (oder: Rutschverhalten) verschiedener Materialien lässt sich vorteilhaft zur Geschwindigkeitssteuerung einsetzen, indem die Gleitoberfläche der Schienen entsprechend variiert wird und dadurch das Gleitverhalten und die Geschwindigkeit der Behältnisse gesteuert wird. So ist es zweckmäßig, notwendige starke Gefälle der Schiene mit einem schlecht rutschenden Untergrund zu versehen und damit die Unfallgefahr zu reduzieren. Für die Überwindung weiter Strecken ist es hingegen sinnvoll, die Schiene mit einer Oberfläche mit sehr guten Gleiteigenschaften (Rutscheigenschaften) auszustatten.

Vorteilhaft ist in jedem Fall eine Oberflächenausbildung, die in Verbindung mit dem Neigungswinkel der Schiene eine bestimmte vorgegebene Mindestgeschwindigkeit der Behältnisse ermöglicht, um sicher zu stellen, dass die Behältnisse unterwegs nicht stehen bleiben.

Unter diesem Gesichtspunkt ist es jedoch zweckmäßig, die Behältnisse kurz vor Erreichung ihres Transportziels abzubremsen. Dies kann erreicht werden durch entsprechenden Oberflächenwechsel an der Gleitfläche der Schiene in der Nähe von deren Endpunkt. Gemäß einer Weiterbildung sind zwei Oberflächenwechsel im Endbereich der Schiene vorgesehen. Der erste Wechsel reduziert die Geschwindigkeit der Behältnisse, der zweite Wechsel bremst die Behältnisse bis zum Stillstand ab.

Es kann auch sinnvoll sein, bestimmte Teilabschnitte der Wegstrecke, beispielsweise Kurven, schneller zu durchfahren und in anschließenden Teilabschnitten die Geschwindigkeit wieder zu reduzieren. Dies kann erfolgen durch eine (gegebenenfalls lokal begrenzte) Änderung der Gleitoberfläche und/oder durch eine (gegebenenfalls lokal begrenzte) Änderung des Neigungswinkels der Schiene.

Gemäße einer Weiterbildung sind Geschwindigkeitssensoren zur Ermittlung der Transportgeschwindigkeit und/oder Bremseinrichtungen zur Reduzierung der Transportgeschwindigkeit vorgesehen.

Alternativ oder additiv kann auch vorgesehen sein, das Gefälle der Schiene zum Transportende der Schiene hin reduziert auszubilden und/oder die Schiene in einen waagrechten Verlauf und/oder sogar in eine Steigung übergehen zu lassen, um dadurch die Geschwindigkeit der Behältnisse entsprechend abzubremsen. Hierzu kann die Schiene fest die hierzu erforderliche Form aufweisen. Es ist aber auch denkbar, das Schienengefälle während des Transportes anzupassen, beispielsweise über Motoren. Die Steuerung kann dabei unter anderem über Sensoren erfolgen, die beispielsweise die Behältnisgeschwindigkeit ermitteln.

Aufgrund einer fortlaufenden Beanspruchung und des damit verbundenen Verschleißes der Gleitoberflächen von Behältnissen und Schienen können sich die Gleiteigenschaften verändern. Bei polierten oder mechanisch bearbeiteten oder beschichteten Metallbehältnissen (beispielsweise Edelstahlschüsseln) ist dies recht einfach durch Nachpolieren behebbar. Vergleichbares ist bei den Schienen jedoch wegen der Größe und Unbeweglichkeit des Systems nur mit erheblichem Aufwand durchführbar. Zweckmäßig ist daher, wenn bei den Schienen die Gleitoberflächen mit Folien und/oder Furnieren, insbesondere Klebefolien und/oder Klebefurnieren, versehen sind. Diese Folien bzw. Furniere können bei Bedarf wieder entfernt und durch neue ersetzt werden. Auch ermöglichen Folien bzw. Furniere die Ausbildung eines einfachen Oberflächenwechsels. Mit Folien bzw. Furnieren lassen sich die jeweils gewünschten Oberflächen herstellen. Es können auf diese Weise nahezu beliebige Oberflächen aus Holz, Metall, Kunststoff, Papier, Stoff, Gewebe oder Teflon aufgeklebt und damit realisiert werden. Eine Reparatur des Schienensystems oder eine gegebenenfalls sogar grundsätzliche Veränderung der Rutscheigenschaften des Schienensystems ist auf diese Weise problemlos möglich. Alternativ oder additiv können auch die Gleitflächen der Behältnisse mit einer vergleichbaren Folie bzw. einem vergleichbaren Furnier versehen sein, insbesondere durch Aufkleben und/oder durch eine Klemmbefestigung und/oder durch eine Saugbefestigung, beispielsweise mittels Saugnäpfen.

Gemäß einer Weiterbildung der Erfindung ist vorgesehen, dass der Schienenweg im Gästebereich, insbesondere an den Tischen, auf einem Rondell, insbesondere einem zweistöckigen Rondell mit zwei vorzugsweise unabhängig voneinander um eine Rondellachse drehbaren, übereinander angeordneten Ebenen, einer unteren und einer oberen Ebene, endet oder ausläuft. Ferner kann die untere Ebene des Rondells ein oder mehrere kreissegmentförmige, herausnehmbare Tabletts aufweisen. Auch können an dem Rondell, insbesondere an der Rondellachse, über eine oder mehrere schwenkbare und/oder drehbare Halterungen ein oder mehrer Monitore, insbesondere Touchscreen-Monitore, angebracht sein.

Eine zweckmäßige Weiterbildung des vorgeschlagenen Restaurantsystems sieht vor, dass die Schiene zwischen Arbeitsbereich und Gästebereich zumindest abschnittsweise abgedeckt ist, insbesondere vollflächig oder durch Gitterstäbe. Dies hat zum einen den Vorteil, dass Unbefugte überhaupt nicht mit den Speisen und/oder Getränken in Berührung kommen können, insbesondere nicht einfach Behältnisse mit Speisen und/oder Getränken aus dem Transportsystem entnehmen können. Zum anderen wird dadurch weitestgehend verhindert, dass die Speisen und/oder Getränke und/oder die Behältnisse während des Transports verunreinigt werden.

In einer speziellen Ausführung sind die Schienen daher zumindest im Wesentlichen vollständig durch eine Abdeckung abgedeckt und/oder zumindest abschnittsweise durch eine entsprechende Vorrichtung, beispielsweise ein Drahtgitter, verschlossen. Vorteilhaft ist hierbei, eine Abdeckung vorzusehen, die problemlos abnehmbar bzw. zu öffnen ist, um einen Zugang zur Schiene bei Problemen oder zu Reinigungszwecken zu ermöglichen. Beispielsweise können die Schienen durch aufklappbare Deckel abgedeckt sein. Die Abmessungen dieser Deckel, insbesondere ihre Länge, ist dabei derart gewählt, dass ein problemloses Öffnen und Schließen möglich ist.

Eine optisch besonders ansprechende Ausführungsform sieht vor, das Schienensystem bzw. die Schienen zumindest teilweise in einer geteilten Plexiglasröhre unterzubringen. Die Plexiglasröhre ist hierzu in zwei Hälften geteilt, eine untere und eine obere Hälfte. In der unteren Hälfte sind die Schienen angeordnet, wobei es sich um Schienen jeder Art handeln kann, d.h. beispielsweise sowohl um Schienen nach Art einer Rutsche mit breiter Gleitfläche oder um Schienen nach Art von Bahnschienen. Seitlich dieser Transportschienen können ergänzend Führungsschienen als eine Art Geländer für die zu transportierenden Behältnisse vorgesehen sein, die auch in der unteren Hälfte der Plexiglasröhre untergebracht sind. Die obere Hälfte kann dann als Abdeckung entweder direkt auf die untere Hälfte aufgesetzt werden oder über Abstandshalter, beispielsweise Säulen, über der unteren Hälfte angeordnet sein. Durch diese Ausführungsvarianten sind die Speisen und Getränke vor Verschmutzung und/oder unbefugtem Zugriff geschützt, gleichzeitig wird denn Gästen ein Einblick in das Transportsystem ermöglicht. Neben Plexiglas kommen für die Röhren selbstverständlich auch weitere Materialien in Betracht, beispielsweise Kunststoffe oder Glas, wobei transparente Materialien bevorzugt sind.

Nach einer Variante ist vorgesehen, die Behältnisse für die Speisen und/oder Getränke selbst mit einem Deckel, beispielsweise einem Kunststoffdeckel, als Schutz zu versehen. Dadurch wird die Verunreinigung der Speisen und Getränke verhindert. In diesem Fall reicht eine nur teilweise Abdeckung der Schienen aus, um eine Entnahme der Behältnisse durch Unbefugte zu verhindern, beispielsweise das Vorsehen eines Drahtgitters. Dadurch ist es möglich, dass der Antransport der Behältnisse für die Gäste sichtbar erfolgt.

Eine zweckmäßige Weiterbildung ist auch, die Abdeckung der Schienen aus durchsichtigem Material, beispielsweise aus Glas oder transparentem Kunststoff, auszubilden. Auch dies hat den Vorteil, dass trotz völligem Schutz vor unbefugter Entnahme und vor Verschmutzung der Antransport der Behältnisse für die Gäste sichtbar ist.

Eine weitere sinnvolle Variante ist, die Schienen durch Vorsehen von Gitterstäben oder Zäunen zwar für die Gäste optisch wahrnehmbar zu machen, gleichzeitig aber einen Zugriff von Unbefugten zu verhindern.

Eine besonders bevorzugte Ausführungsform des Restaurantsystems nach der Erfindung sieht vor, dass
a) mindestens ein Reinigungs- und/oder Entsorgungsbereich vorgesehen ist,
b) wobei der Reinigungs- und/oder Entsorgungsbereich niedriger als der Gästebereich angeordnet ist,
c) wobei Gästebereich und Reinigungs- und/oder Entsorgungsbereich über ein Abtransportsystem für Behältnisse, insbesondere Geschirr, vorzugsweise Gleitschüsseln und/oder Gleitteller und/oder Gleittöpfe und/oder Gleitpfannen, und/oder Gläser und/oder Becher und/oder Flaschen, und/oder Transporthilfsmittel und/oder Tischabfälle verbunden sind,
d) wobei das Abtransportsystem dazu ausgebildet ist, Behältnisse und/oder Transporthilfsmittel und/oder Tischabfälle vom Gästebereich zum Reinigungs- und/oder Entsorgungsbereich zu transportieren,
e) wobei der Abtransport von Behältnissen und/oder Transporthilfsmitteln und/oder Tischabfällen vom Gästebereich zum Reinigungs- und/oder Entsorgungsbereich über das Abtransportsystem zumindest abschnittsweise mittels Schwerkraft erfolgt.

In dieser Ausführungsform ist nicht nur der Transport der Speisen und Getränke zu den Gästen äußerst effizient geregelt, auch der Abtransport der benutzen Behältnisse (insbesondere Geschirr und/oder Gläser und/oder Becher und/oder Transporthilfsmittel) und des Tischabfalls ist effizient und damit kostengünstig geregelt, ohne den Komfort für die Gäste zu beschränken. Die Gäste müssen weder selbst das benutzte Geschirr und den Abfall zu speziellen Sammelstellen bringen, noch muss ein Kellner Geschirr und Abfälle abtragen. Vielmehr müssen die Gäste die benutzten Behältnisse und die Abfälle einfach in das Abtransportsystem geben. Dieses sorgt (zumindest abschnittsweise) mittels Schwerkraft für den Abtransport der Behältnisse und Abfälle in den vorzugsweise zentral angeordneten Reinigungs- und Entsorgungsbereich. Dort wird Abfall fachgerecht entsorgt, die verunreinigten Behältnisse werden gewaschen, beispielsweise mittels einer Geschirrspülmaschine. Die gereinigten Behältnisse werden wieder dem Arbeitsbereich zur Verfügung gestellt, gegebenenfalls über ein Zwischenlager.

Es ist auch möglich, spezielle Aufgabestellen des Abtransportsystems einzurichten, getrennt von den Tischen der Gäste. Bedienpersonal (Kellner) oder die Gäste selbst müssten die gebrauchten Behältnisse und Abfälle dann zu diesen Aufgabestellen bringen. Insbesondere durch Bedienpersonal könnte in diesem Fall den Gästen der gewohnte Komfort angeboten werden. Außerdem hat der Einsatz von Bedienpersonal den Vorteil, dass aufgrund der Schulung und Erfahrung dieses Fachpersonals Verunreinigungen des Abtransportsystems, beispielsweise durch falsch eingestellte Behältnisse, weitgehend vermieden werden können.

Bevorzugt umfasst oder ist das Abtransportsystem ein Abtransport-Schienensystem. Dieses ist bevorzugt hinsichtlich seiner Abmessungen und Gleiteigenschaften dem Schienensystem des Transportsystems angepasst. Letzteres ist zweckmäßig, da dieselben Behältnisse transportiert werden müssen.

Hinsichtlich der Bestellung der Speisen und Getränke können Eingabesysteme im Gästebereich, beispielsweise an den Tischen, vorgesehen sein, insbesondere elektronische Eingabesysteme, beispielsweise Touchscreen-Monitore (z.B. 12 Zoll-Monitore). Die Bestellungen werden dann per Kabel und/oder Funk an ein Computersystem und von dort an die Küche bzw. den Arbeitsbereich weitergeleitet. Ebenso ist es möglich, dass Bedienpersonal die Bestellung entgegen nimmt und in ein mobiles elektronisches Bestellgerät eingibt, um einen guten und persönlichen Service zu gewährleisten. Dieses Bestellgerät gibt die Bestellung dann per Funk an den Arbeitsbereich (die Küche) weiter. Von dort aus werden die Speisen und/oder Getränke dann über das Schienensystem an die Tische geliefert. Auch ist vorstellbar, nur die Speisen über das Schienensystem zu transportieren und die Getränke von Kellnern an die Tische bringen zu lassen.

Eine attraktive Variante hierzu sieht zwischen Gästebereich und Arbeitsbereich ein Bestellsystem vor, insbesondere ein Seilzugbestellsystem, bei dem Bestellzettel über ein Seilzugsystem, insbesondere eine Miniseilbahn, vom Gästebereich zum Arbeitsbereich befördert werden, wobei vorzugsweise das Seilzugsystem vom Gästebereich und/oder vom Arbeitsbereich aus bedienbar ist. Sinnvoll ist ergänzend, dieses Bestellsystem, insbesondere das Seilzugsystem, auch für die Rechnungsausgabe an die Gäste und/oder für die Bezahlung verwendbar zu machen.

Das Transportsystem des vorgeschlagenen Restaurantsystems kann nach einer Weiterbildung auch ein Seilsystem umfassen oder sein, beispielsweise nach Art einer Seilbahn. Es könnten in ein Führungsseil auch Schlingen eingehängt werden, die an dem Seil zum Zielort rutschen. An den Schlingen hängen in diesem Fall Halterungen für die Behältnisse, in die die Speisen und/oder Getränke eingebracht sind oder werden.

Das Schienensystem kann als glatte Schiene mit seitlichen Führungsrändern ausgebildet sein. Es kann sich aber auch um eine klassische Profilschiene handeln, auf der die Behälter, die bevorzugt korrespondierend zum Schienenprofil ausgebildet sind und/oder gegebenenfalls auch mit geeigneten Rädern ausgestattet sind, aufgrund des Gefälles fahren.

Es ist auch möglich, dass das Transportsystem, insbesondere das Schienensystem, Kugelbahnen und/oder Kugelbänder und/oder Rollbänder und/oder Fließbänder umfasst. Dadurch kann ein verbessertes Gleitverhalten bei geringerem Gefälle (kleinem Steigungsbetrag) erreicht werden.

Eine zweckmäßige Weiterbildung des Restaurantsystems gemäß der Erfindung sieht vor, dass am Transportsystem, insbesondere unterhalb der Schienen und/oder seitlich an den Schienen und/oder in den Schienen und/oder über und/oder unter und/oder neben Abdeckungen der Schienen, Leitungen (oder: Pipelines), vorzugsweise Schläuche oder Rohre, angeordnet und/oder ausgebildet sind, über die Getränke vom Arbeitsbereich zum Gästebereich, insbesondere zu den Tischen des Gästebereichs, transportierbar sind. Insbesondere können rohrartige Schienen auch selbst als derartige Leitungen genutzt werden. Am Ende der Leitungen im Gästebereich ist zweckmäßigerweise jeweils ein Zapfhahn oder Ventil vorgesehen, über den das gewünschte Getränk zapfbar ist. Ergänzend ist es sinnvoll, vor jedem Zapfhahn oder Ventil in oder an der jeweiligen Leitung ein Messgerät (beispielsweise nach Art einer Wasseruhr) zur Erfassung der gezapften Getränkemenge zu installieren.

Dadurch ist es möglich, über mehrere Leitungen ohne Bedienaufwand verschiedene Getränke, beispielsweise Bier, Wein oder Wasser, an die Tische und damit zu den Gästen zu transportieren. Über die Messgeräte (beispielsweise Wasseruhren) lässt sich dann der tatsächliche Verbrauch der jeweiligen Gäste feststellen und entsprechend abrechnen. Selbstverständlich sollte hierzu beim Eintreffen neuer Gäste das Messgerät entweder auf Null gestellt werden oder der Zählerstand festgehalten werden. Der Verbrauch kann selbstverständlich auch elektronisch oder über eine Datenverarbeitungsanlage ermittelt, festgehalten und abgerechnet werden. Alternativ kann natürlich auf eine Abrechnung und damit auf Messuhren auch verzichtet werden. Dem Gast wird dann als besonderer Service über derartige Leitungen kostenlos (beispielsweise) Wasser in unbegrenzter Menge zur Verfügung gestellt.

Eine sinnvolle Weiterbildung des Leitungssystems für Getränke sieht vor, dass eine zentrale Verteilstelle, vorzugsweise im Arbeitsbereich, vorgesehen ist, die die von einem Gast bestellte Getränkeart- und -menge in einer der Leitungen am Gästebereich, insbesondere am jeweiligen Tisch, bereitstellt, wobei diese bereitgestellte Getränkeart und -menge bevorzugt über ein Ventil im Gästebereich, insbesondere am jeweiligen Tisch, entnehmbar ist. Hierbei übernimmt nicht der Gast am Zapfhahn die Getränkedosierung. Vielmehr bestellt der Gast wie im herkömmlichen Restaurant eine bestimmte Menge eines Getränks. Die Dosierung dieses Getränks erfolgt dann durch die zentrale Verteilstelle, von der die bestellte Menge in einer der Leitungen am Tisch bereitgestellt wird. Der Vorteil dieses Systems liegt insbesondere darin, dass die jeweilige Leitung nach der Entnahme wieder leer ist. So lassen sich beispielsweise durch eine Leitung verschiedene Weinsorten, durch eine weitere Leitung verschiedene Biersorten und durch eine dritte Leitung verschiedene nichtalkoholische Getränke leiten. Der Gast entnimmt einfach die zuvor von der zentralen Verteilstelle dosierte Menge aus einem Ventil oder Hahn am Tisch, beispielsweise durch Betätigung einer hierfür vorgesehenen Taste (oder eines entsprechenden Schalters). Nach der Entnahme ist es zweckmäßig, vorzusehen, dass sich der Hahn oder das Ventil automatisch wieder schließt, um zu verhindern, dass beim nächsten Dosiervorgang die Flüssigkeit einfach aus dem Schlauch bzw. Hahn bzw. Ventil herausläuft. Um dem Gast zu signalisieren, dass das bestellte Getränk zur Entnahme in der Leitung bereitsteht, kann vorgesehen sein, dass die Taste bzw. der Schalter, die bzw. der für die Entnahme zu betätigen ist, leuchtet, und zwar so lange, bis das Getränk vollständig entnommen ist. Ergänzend ist zweckmäßigerweise ein weiteres Ventil vorgesehen, das verhindert, dass die zentrale Verteilstelle bei noch nicht vollständig entnommenem Getränk ein weiteres Getränk in die Leitung einbringt.

In einer besonders vorteilhaften Ausführung ist vorgesehen, die benutzte Leitung bevorzugt unmittelbar nach der Entnahme der Flüssigkeit bzw. der Getränke mit Wasser zu spülen. Dies kann beispielsweise dadurch erfolgen, dass am Ende der Leitung neben dem Entnahmeventil, aus dem sich die Gäste das Getränk abfüllen können, ein weiteres Ventil vorgesehen ist, das für den Spülvorgang geöffnet wird und durch das das "Spülwasser" aus der Zuleitung für die Getränke heraus und über eine Rückleitung letztendlich der Kanalisation zugeleitet wird.

Nach einer Weiterbildung des Restaurantsystems nach der Erfindung ist vorgesehen, dass der Gästebereich ein Teil des Gästebereichs in mehrere Teilbereiche unterteilt ist, die nach Art einer Wendeltreppe stufenartig zueinander versetzt angeordnet sind, wobei die einzelnen Teilbereiche über Abzweigungen aus einem Haupttransportweg und/oder über mehrere übereinander und/oder nebeneinander angeordnete Transportwege des Transportsystems mit Speisen und/oder Getränken versorgbar sind.

Gemäß einer Variante kann der Gästebereich oder ein Teil des Gästebereichs ein Drive-in-Bereich sein, insbesondere ein Drive-in-Bereich mit Parkplätzen, an denen Schienenwege und/oder Schienen des Transportsystems enden.

Vorteilhafterweise ist das Transportsystem ausgebildet für einen zielgerichteten und automatischen Transport von Speisen und/oder Getränken in den Gästebereich, insbesondere an den Tisch eines Gastes, für den die Speisen und/oder Getränke bestimmt sind.

Gemäß einer Weiterbildung der des erfindungsgemäßen Restaurantsystems wird dieses zumindest teilweise von einer Informationstechnologie (IT, einschließlich Hardware und Software) gesteuert, in die vorzugsweise neben dem Transport der Speisen und Getränke auch andere Restaurantaufgaben, insbesondere ein Bestellsystem und/oder ein Bezahlsystem, integriert sind. In einer Variante kann auch vorgesehen sein, dass das IT-System des Restaurants dem im Arbeitsbereich tätigen Personal vorgibt, auf welchen Transportweg bzw. Schienenweg die zu transportierenden Speisen und/oder Getränke zu stellen sind, beispielsweise durch entsprechende Abfrage durch das Personal und/oder durch Aufleuchten einer Signallampe an korrekten Transportweg bzw. Schienenweg. Die dazugehörige Abfrage kann manuell erfolgen oder durch Lesen eines am Behältnis für Speisen und/oder Getränke angebrachten Barcodes und/oder durch Auslesen eines am Behältnis für Speisen und/oder Geräte angebrachten RFID-Chips, jeweils über geeignete Lesegeräte. Das IT-System des Restaurants kann ferner auch die Steuerung der Abzweigungen bzw. Weichen des Transportsystems übernehmen, unter anderem unter Einbeziehung von Daten, die mit Hilfe von am Behältnis für Speisen und/oder Getränke angebrachten Informationen, beispielsweise in Form eines Strichcodes oder hinterlegt auf einem RFID-Chip, bereitgestellt werden. Auch kann vorgesehen sein, dass die korrekte Anlieferung im Gästebereich mit Hilfe des IT-Systems des Restaurants kontrollierbar ist.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert. Dabei zeigen
- FIG 1: eine schematische Draufsicht auf ein Ausführungsbeispiel des er- findungsgemäßen Restaurantsystems,
- FIG 2: eine vergrößerte Detailansicht eines Ausschnitts von FIG 1,
- FIG 3: einen Schnittdarstellung entlang der Linie A-A in FIG 1,
- FIG 4: in schematischer Darstellung im oberen Figurenbereich in Drauf- sicht und im unteren Figurenbereich in Seitenansicht ein Ausfüh- rungsbeispiel einer Schiene für ein erfindungsgemäßes Restaurant- system,
- FIG 5: in schematischer Darstellung ein Ausführungsbeispiel eines Schienensystems mit Weichen,
- FIG 6: in schematischer Darstellung ein Ausführungsbeispiel einer be- wegbaren Schiene,
- FIG 7: in schematischer Darstellung das Führungsraster aus FIG 6 in vergrößerter Seitenansicht,
- FIG 8: ein zu FIG 6 alternatives Ausführungsbeispiel für eine bewegbare Schiene,
- FIG 9 und FIG 10 sowie FIG 11 und FIG 12: jeweils in schematischer Darstellung in Draufsicht und in Seiten- ansicht zwei unterschiedliche Schienensysteme für die Überwin- dung großer Höhenunterschiede,
- FIG 13 bis FIG 18: in schematischer Darstellung verschiedene Ausführungsbeispiele von für den Transport auf dem Schienensystem geeigneten Be- hältnissen für die Aufnahme insbesondere von Speisen,
- FIG 19, FIG 20 und FIG 21: in schematischer Darstellung drei Ausführungsbeispiele für Be- hältnisse, die für den Transport insbesondere von Getränken auf dem Schienensystem geeignet sind,
- FIG 22: einen Griff für Schüsseln,
- FIG 23 und FIG 24: eine konkrete Umsetzung eines Ausführungsbeispiels eines Re- staurantsystems nach der Erfindung, und zwar in einem Industrie- bzw. Gewerbebau,
- FIG 25 und FIG 26: in Seitenansicht bzw. Draufsicht ein Ausführungsbeispiel für ein Transporthilfsmittel für ein Restaurantsystem gemäß der Erfin- dung,
- FIG 27 und FIG 28: in Seitenansicht bzw. Draufsicht ein weiteres Ausführungsbeispiel für ein Transporthilfsmittel für ein Restaurantsystem gemäß der Erfindung,
- FIG 29: in Seitenansicht ein weiteres Ausführungsbeispiel für ein Trans- porthilfsmittel für ein Restaurantsystem gemäß der Erfindung,
- FIG 30 und FIG 31: in Seitenansicht bzw. Draufsicht ein weiteres Ausführungsbeispiel für ein Transporthilfsmittel für ein Restaurantsystem gemäß der Erfindung,
- FIG 32: in Seitenansicht ein Ausführungsbeispiel eines Abzweigungs- bzw. Weichensystem für ein Restaurantsystem gemäß der Erfindung,
- FIG 33: das Abzweigungs- bzw. Weichensystem gemäß FIG 32 in einer Schnittdarstellung entlang der Linie A-A,
- FIG 34: ein weiteres Ausführungsbeispiel eines Abzweigungs- bzw. Wei- chensystem für ein Restaurantsystem gemäß der Erfindung, und
- FIG 35: eine weitere Umsetzung eines Ausführungsbeispiels eines Restau- rantsystems nach der Erfindung.

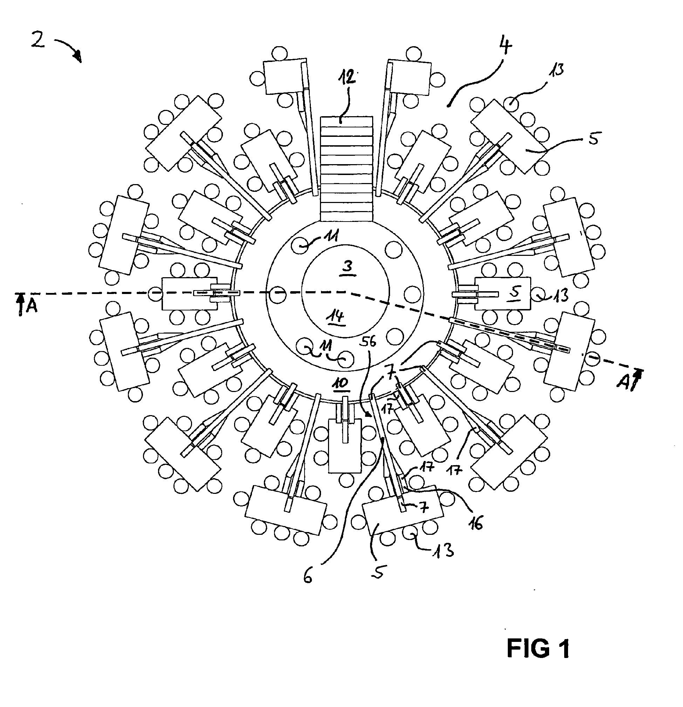

Einander entsprechende Bauteile und Komponenten sind in FIG 1 bis FIG 35 mit den gleichen Bezugszeichen versehen.

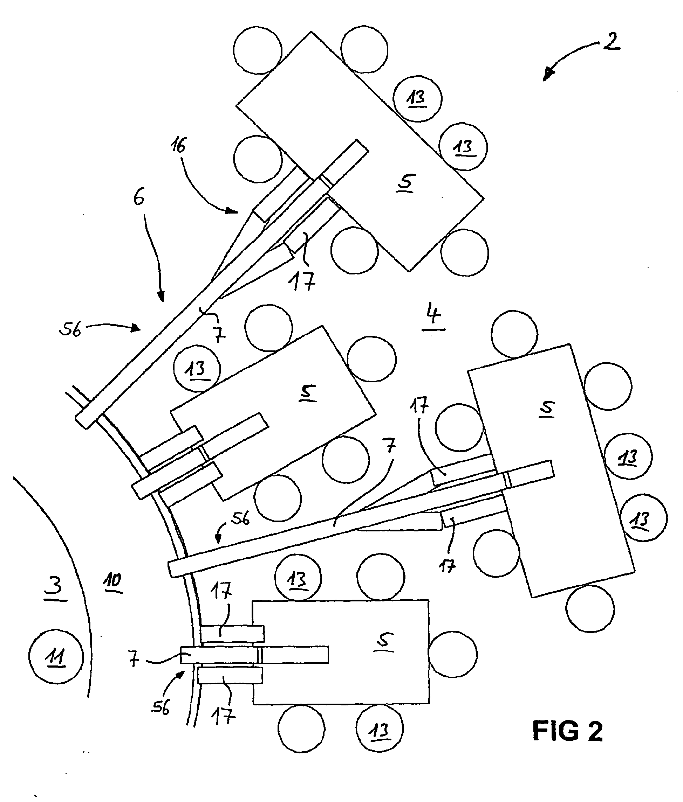

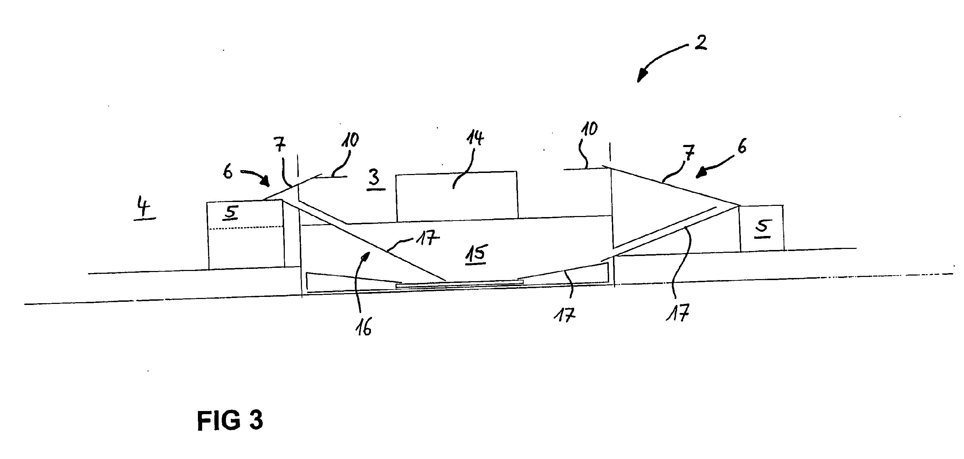

FIG 1 zeigt eine schematische Draufsicht auf ein Ausführungsbeispiel des erfindungsgemäßen Restaurantsystems 2, FIG 2 zeigt eine vergrößerte Detailansicht hiervon und FIG 3 eine Schnittdarstellung entlang der Linie A-A in FIG 1.

In der Mitte des Restaurantsystems 2 befindet sich ein Arbeitsbereich 3 zum Kochen und/oder Zubereiten von Speisen und/oder Getränken. Dieser umfasst eine nahezu ringförmige Arbeitstheke 10 und eine Mitteltheke 14. Im Arbeitsbereich 3 lassen sich alle für das Kochen und Zubereiten von Speisen und Getränken erforderlichen Geräte unterbringen, beispielsweise Kochgeräte in der Arbeitstheke 10 und Kühlgeräte in der Mitteltheke 14. Das im Arbeitsbereich 3 arbeitende Personal ist symbolisch durch Bezugszeichen 11 dargestellt.

Ringförmig umgeben ist der Arbeitsbereich 3 von einem Gästebereich 4, wobei der Arbeitsbereich 3 durch die Arbeitstheke 10 gegenüber dem Gästebereich 4 abgegrenzt ist. Der Arbeitsbereich 3 ist dabei gegenüber dem Gästebereich 4 erhöht angeordnet (vgl. FIG 3). Der Zugang zum zentral im Restaurantsystem 2 angeordneten Arbeitsbereich 3 wird ermöglicht über die von der Ebene des Gästebereichs 4 zum Arbeitsbereich 3 hinaufführende Treppe 12. Der Gästebereich 4 weist zahlreiche Tische 5 auf, die ebenfalls kreisförmig, und zwar auf zwei konzentrisch zueinander angeordneten Kreisen mit unterschiedlichem Radius liegend, um den Arbeitsbereich 3 angeordnet sind. Die von den Restaurantgästen einnehmbaren Positionen um die Tische 5 sind symbolisch mit dem Bezugszeichen 13 bezeichnet.

Arbeitsbereich 3 und Gästebereich 4 sind über ein als Schienensystem 6 ausgebildetes Transportsystem für Speisen und/oder Getränke verbunden. Dieses Schienensystem 6 ist dazu ausgebildet, Speisen und/oder Getränke vom Arbeitsbereich 3 zum Gästebereich 4 zu transportieren. Es setzt sich zusammen aus einzelnen Schienenwegen 56 zu den jeweiligen Tischen 5, die wiederum gebildet sind aus einzelnen Gleitschienen 7, die beispielsweise aus Metall und/oder Holz und/oder Kunststoff hergestellt sind. Die den Arbeitsbereich 3 mit dem Gästebereich 4 verbindenden Schienenwege beginnen jeweils auf bzw. an der Arbeitstheke 10 und enden an oder auf den Tischen 5, die auch auf verschiedenen Ebenen stehen können.

Der Transport der Speisen und Getränke, die hierfür üblicherweise in geeignete Behältnisse gegeben sind, erfolgt nicht durch einen elektrischen Antrieb, sondern aufgrund der Schwerkraft, die wegen der Höhendifferenz zwischen Arbeitsbereich 3 und Gästebereich 4 auf die Behältnisse wirkt und diese entlang der Gleitschienen 7 bewegt. Das Schienensystem 6 kann somit auch als Gleit- oder Rutschsystem bezeichnet werden, bei den Schienen 7 handelt es sich um Rutschen für die Behältnisse mit den Speisen und/oder Getränken. Die Behältnisse mit den Speisen und/oder Getränken gleiten bzw. rutschen von ihrer Aufgabestelle an der Arbeitstheke 10 im Arbeitsbereich 3 zu den Tischen 5 im Gästebereich 4.

In der Schnittdarstellung in FIG 3 ist zu erkennen, dass das Restaurantsystem 2 zusätzlich einen Reinigungs- und/oder Entsorgungsbereich 15 aufweist. Dieser ist unterhalb des Arbeitsbereichs 4 angeordnet und liegt niedriger als der Gästebereich 4. Gästebereich 4 und Reinigungs- und/oder Entsorgungsbereich 15 sind über ein Abtransportsystem 16 für verunreinigte und/oder gebrauchte Behältnisse, beispielsweise Geschirr (auch Töpfe und/oder Pfannen) und/oder Gläser und/oder Becher und/oder Transporthilfsmittel, und/oder Tischabfälle miteinander verbunden. Das Abtransportsystem 16 ist dazu ausgebildet und bestimmt, verunreinigte und/oder gebrauchte Behältnisse, insbesondere Geschirr und/oder Gläser und/oder Becher und/oder Transporthilfsmittel, und/oder Tischabfälle vom Gästebereich 4 zum Reinigungs- und/oder Entsorgungsbereich 15 zu transportieren. Der Abtransport der verunreinigten und/oder gebrauchten Behältnisse und/oder des Tischabfalls vom Gästebereich 4 zum Reinigungs- und/oder Entsorgungsbereich 15 über das Abtransportsystem 16 erfolgt nicht elektrisch, sondern wie beim Schienensystem 6 mittels Schwerkraft. Der Höhenunterschied zwischen Gästebereich 4 und Reinigungs- und/oder Entsorgungsbereich 15 wird ausgenutzt, um die Gegenstände das Abtransportsystem 16 hinunter zu bewegen.

Bei dem Abtransportsystem 16 handelt es sich um ein Abtransport-Schienensystem 16, umfassend mehrere Gleitschienen 17. Dieses entspricht hinsichtlich seiner Abmessungen, insbesondere Querschnittsabmessungen, und/oder seiner Gleiteigenschaften dem Schienensystem 6 des Transportsystems. Bei den dargestellten Tischen 5 ist die mittlere Schiene jeweils eine Schiene 7 des Antransport-Schienensystems, die beiden äußeren Schienen sind jeweils Gleitschienen 17 des Abtransportsystems 16. Bei einigen Tischen 5 sind diese beiden Abtransport-Gleitschienen 17 unterhalb der Antransport-Schiene 7 zusammengeführt zu einer gemeinsamen Abtransport-Gleitschiene 17.

Selbstverständlich lässt sich das in FIG 1 bis FIG 3 dargestellte Restaurantsystem auch ohne Reinigungs- und/oder Entsorgungsbereich 15 bzw. ohne Abtransportsystem 16 ausbilden. In diesem Fall erfolgt das Abtragen der gebrauchten Behältnisse und der Tischabfälle in herkömmlicher Weise durch Kellner. Auch Mischformen sind vorstellbar, bei denen Kellner die gebrauchten Behältnisse und Tischabfälle abtragen und zu Aufgabestellen des Abtransportsystems bringen.

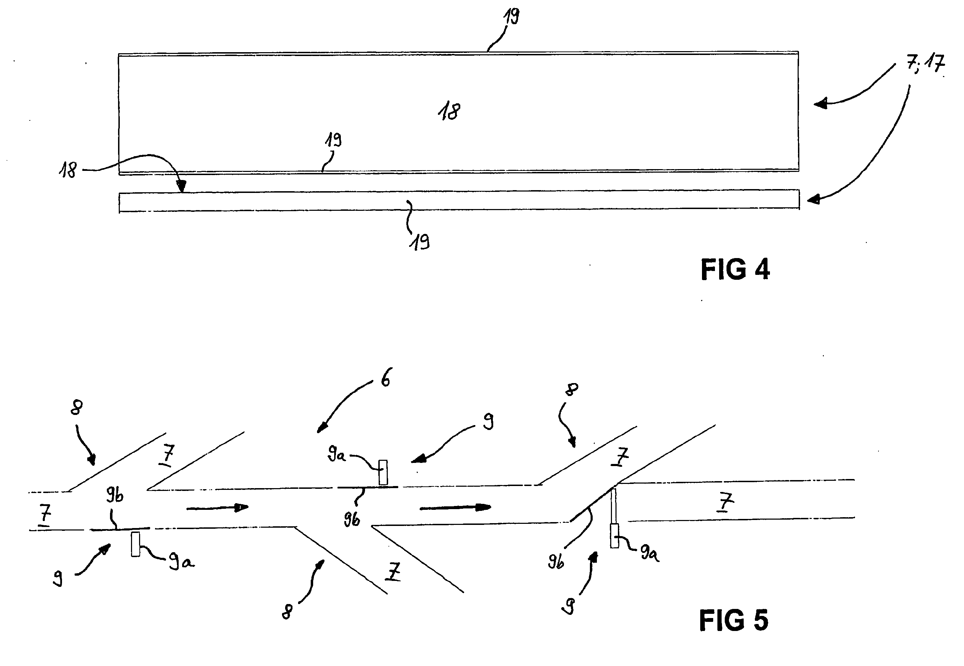

FIG 4 zeigt in schematischer Darstellung im oberen Figurenbereich in Draufsicht und im unteren Figurenbereich in Seitenansicht ein Ausführungsbeispiel einer Gleitschiene 7 bzw. 17 für ein erfindungsgemäßes Restaurantsystem 2. Die Gleitschiene 7 bzw. 17 ist ein länglicher Gegenstand. Sie weist auf ihrer dem Betrachter zugewandten Oberseite eine ebene Gleitfläche 18 auf, die parallel zur Längserstreckung der Gleitschiene 7 bzw. 17 mit seitlichen Führungsrändern 19 versehen ist. Die Führungsränder 19 sorgen dafür, dass die über die Gleitfläche 18 bewegten Behältnisse nicht von der Gleitschiene 7 bzw. 17 fallen. Eine typische Gleitschienenbreite ist 120 mm oder 150 mm, wobei auch beliebige andere Abmessungen möglich sind.

FIG 5 zeigt in schematischer Darstellung ein Ausführungsbeispiel eines Schienensystems 6 mit Abzweigungen 8 und Weichen 9. Die Schiene 7 weist in Transportrichtung (durch einen Pfeil dargestellt) mehrere Abzweigungen 8 auf, die weg von der Haupttransportrichtung hin zu einzelnen Tischen oder einzelnen Plätzen an den Tischen führen. Die einzelnen Abzweigungen 8 sind jeweils gezielt über eine zugeordnete Weiche 9 ansteuerbar, insbesondere eine elektrisch und/oder pneumatisch und/oder hydraulisch betriebene Weiche 9. Jede Weiche 9 umfasst ein Stellorgan 9a (einen Kolben) und ein Führungselement 9b. Das Stellorgan 9a bewegt bei gewünschter Auslenkung aus der Haupttransportrichtung das Führungselement 9b derart in die Schiene 7, dass entlangrutschende Behältnisse automatisch in die Abzweigung 8 geführt werden.

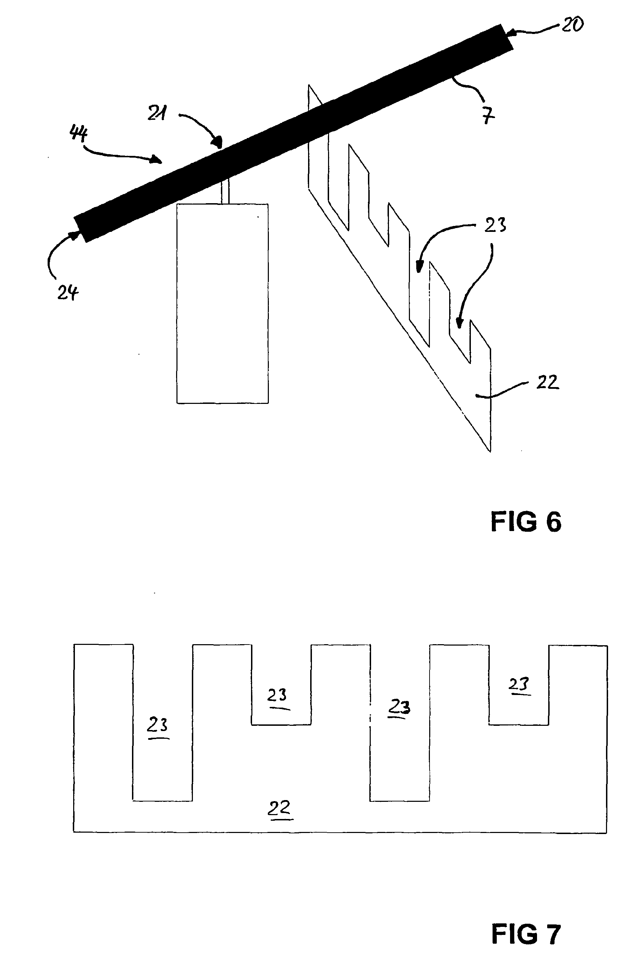

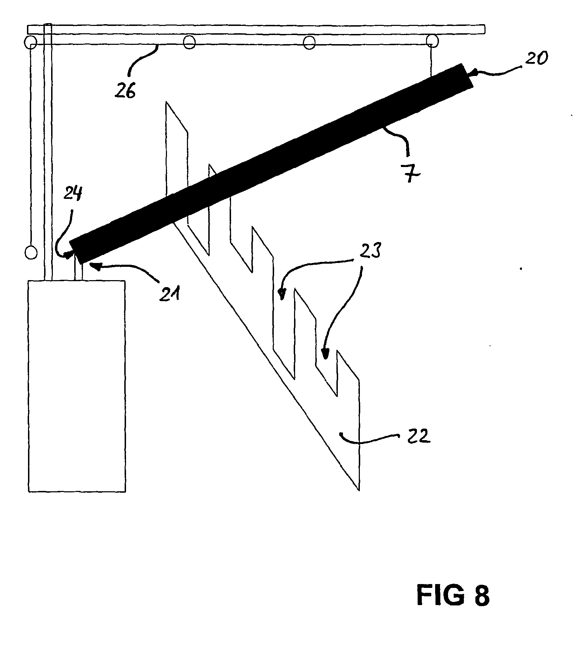

FIG 6 und FIG 8 zeigen in schematischer Darstellung zwei verschiedene Ausführungsbeispiele einer bewegbaren Schiene 7. Die Schiene 7 ist jeweils um einen Drehpunkt 21 (Drehlagerung der Schiene 7 an diesem Drehpunkt) in vertikaler Richtung beweglich, d.h. das dem Gästebereich 4 zugewandte Ende 20 der Schiene 7 ist anhebbar und wieder auf oder an einem Tisch absetzbar. Ferner ist die Schiene 7, insbesondere ebenfalls um den Drehpunkt 21, in horizontaler Richtung drehbar (oder: schwenkbar). Dies bedeutet, dass die Schiene 7 durch entsprechendes horizontales Schwenken gezielt verschiedenen Tischen zugewandt werden kann und damit mit nur einer Schiene bei entsprechender Schieneneinstellung mehrere Tische mit Speisen und Getränken versorgt werden können. Da es nicht wünschenswert ist, dass die Schiene 7 in einer abgesenkten Position horizontal drehbar ist, ist ferner ein Führungsraster 22 vorgesehen. Das Führungsraster 22 ist in FIG 7 vergrößert dargestellt. Dabei handelt es sich um eine Platte oder ein Gerüst oder eine Schablone mit Ausnehmungen 23 an den Stellen, an denen die Schiene 7 vertikal absenkbar sein soll. Die Tiefe der Ausnehmungen 23 ist dabei so ausgebildet, dass die Schiene bei vollständiger Absenkung in der gewünschten Position am jeweiligen Tisch angeordnet ist. Das Führungsraster 22 verhindert nicht nur ein horizontales Drehen der Schiene 7 in einer abgesenkten Position, es sorgt auch für eine exakte Positionierung der Schiene 7 zum jeweiligen Tisch. Die Bewegung der Schiene 7 ist bevorzugt vom Arbeitsbereich 3 aus steuerbar.

In der Ausführungsvariante nach FIG 6 funktioniert die Bewegung der Schiene 7 nach Art einer Wippe, d.h. es ist ein Wippmechanismus 44 vorgesehen. Durch Druck auf das dem Arbeitsbereich 3 zugewandte Ende 24 der Schiene 7 wird das gegenüberliegende Schienenende 20 angehoben. Anschließend wird die Schiene 7 horizontal in die gewünschte Position zu einem zu bedienenden Tisch gebracht und in die entsprechende Ausnehmung 23 des Führungsrasters 22 abgesenkt. Um die Handhabbarkeit des Wippmechanismus 44 zu erleichtern, können an dem dem Arbeitsbereich 3 zugewandten Ende 24 der Schiene 7 Gewichte angebracht sein (nicht dargestellt).

In der Ausführungsvariante nach FIG 8 wird die vertikale Bewegung der Schiene 7 über einen Seilzug 26, nach Art eines Krans, veranlasst. Im angehobenen Zustand kann die Schiene wiederum horizontal positioniert werden. Anschließend erfolgt das Absenken in die gewünschte Ausnehmung 23 des Führungsrasters 22, wiederum über den Seilzug 26.

Wichtig ist in beiden Ausführungsvarianten, dass die horizontale Drehbewegung der Schiene 7 nur in einer Schienenposition oberhalb des Führungsrasters 22, d.h. oberhalb der Rasterzähne zwischen den Ausnehmungen 23, erfolgen kann. Dadurch lassen sich insbesondere Unfälle beim horizontalen Drehen, vor allem die Verletzung von Gästen, verhindern. Die Abmessungen und die Anordnung des Führungsrasters 22 ist derart ausgebildet bzw. vorgesehen, dass bei einer horizontalen Drehbewegung die Schiene 7 weit oberhalb der Köpfe der Gäste bewegt wird.

Selbstverständlich kann auch vorgesehen sein, dass alle beschriebenen Schienenbewegungen nicht nur Manuell, sondern auch elektrisch oder hydraulisch angetrieben erfolgen.

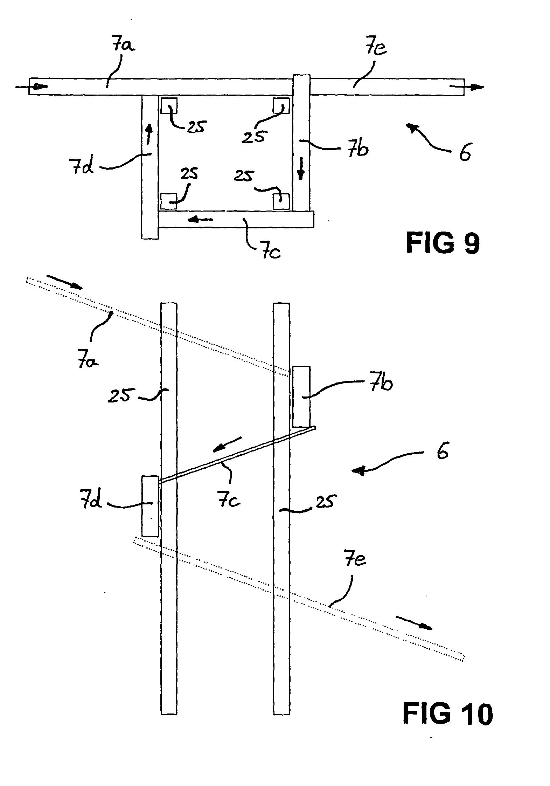

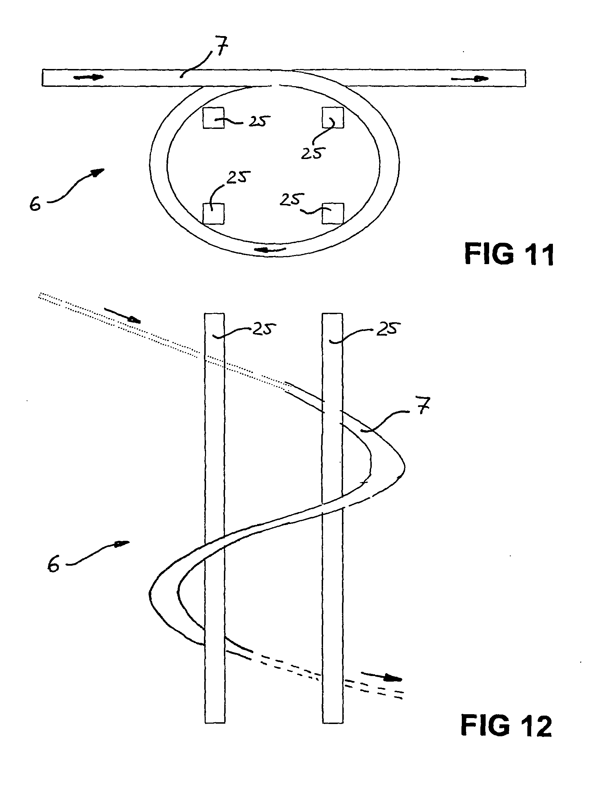

FIG 9 und FIG 10 sowie FIG 11 und FIG 12 zeigen jeweils in schematischer Darstellung in Draufsicht (FIG 9 bzw. FIG 11) und in Seitenansicht (FIG 10 bzw. FIG 12) zwei unterschiedliche Schienensysteme 6 für die Überwindung großer Höhenunterschiede. Derartige Schienensysteme 6 werden beispielsweise benötigt für Restaurants, die sich über mehrere Stockwerke erstrecken, die in Gebäuden mit hohen Geschossen oder auf mehreren Ebenen eingerichtet sind.

Das in FIG 9 und FIG 10 dargestellte Schienensystem 6 überwindet den Höhenunterschied mittels mehrere in Draufsicht in Form eines Vielecks, hier eines Vierecks, angeordneter gerader Schienen 7. Dabei fällt das zu transportierende Behältnis jeweils vom Ende einer Schiene 7 auf den Anfang der nachfolgenden, darunter angeordneten Schiene 7. Die einzelnen Schienen sind in FIG 9 und FIG 10 mit 7a, 7b, 7c, 7d, 7e bezeichnet, um die bessere Zuordnung zwischen FIG 9 und FIG 10 zu ermöglichen. Die Bewegungsrichtung der Behältnisse auf den Schienen 7 ist jeweils durch Pfeile angegeben. Das Schienensystem 6 wird getragen von einem mehrere Träger 25 umfassenden Trägergestell. Wird statt eines Vierecks ein Vieleck mit noch mehr Ecken ausgebildet, so reduziert sich die Abbremsung aufgrund des Richtungswechsels an den Schienenübergängen. Somit kann die Länge der einzelnen Schienen reduziert werden. Auch reduziert sich dadurch die Lärmentstehung beim Fallen der Behältnisse von der oberen auf die untere Schiene.

In einer weiteren Ausführungsvariante ist es möglich, beispielsweise aus (zumindest im Wesentlichen) trapezförmigen Segmenten, bevorzugt aus Holz, insbesondere mit einer Stärke von etwa 20 mm, eine treppenartige Kurve zu bauen, indem ein Segment immer am Ende überlappend auf dem vorhergehenden befestigt wird, beispielsweise verschraubt wird. Auf diese Weise erhält man ein Kurvengebilde, das ähnlich einer Wendeltreppe aufgebaut ist. Es kann auch eine gleichmäßige Steigung aufweisen. Befestigt man auf den "Treppenkanten" beispielsweise ein Furnier, so erhält man eine Rutschbahn mit einem Gefälle, wobei das Gefälle abhängig ist von der Anzahl der verwendeten Stufen (Segmente). Befestigt man ferner an den Innen- und Außenseiten dieses Kurvengebildes ebenfalls (beispielsweise) ein Furnier als eine Art "Geländer", so erhält man mit einfachen Mitteln eine spiralförmige Kurve zum Überwinden auch größerer Höhenunterschiede.

Das in FIG 11 und FIG 12 dargestellte Schienensystem 6 überwindet den Höhenunterschied mittels einer spiralförmig gewundenen Schiene 7, d.h. die Schiene 7 ist in Kurven nach unten geführt, wobei die Schiene 7 einen entsprechenden Neigungswinkel bzw. ein Gefälle aufweist. Die Bewegungsrichtung der Behältnisse auf der Schiene 7 ist durch Pfeile angegeben. Wiederum ist das Schienensystem 6 getragen von einem mehrere Träger 25 umfassenden Trägersystem. Je nach Ausbildung der Schienen und vorgesehener Steigung kann hier eine seitliche Schrägstellung der Schienen erforderlich sein (wie die Steilkurven einer Carrerabahn, d.h. man benötigt eine in sich verdrehte Spirale), um ein Herausfallen der Behältnisse aus der Schiene zu verhindern. Derartige aufwändige konstruktive Maßnahmen sind bei der Ausbildung nach FIG 9 und FIG 10, d.h. über geradlinige Einzelschienenstücke, nicht erforderlich. Der Aufbau der spiralförmigen Schiene kann beispielsweise wie im vorstehenden Absatz beschrieben erfolgen.

Selbstverständlich können in beiden in FIG 9 bis FIG 12 dargestellten Varianten ergänzend Weichen vorgesehen sein, über die auf dem Transportweg liegende Tische bedienbar sind durch gezieltes Ausschleusen der Behältnisse aus dem Haupttransportweg zu den einzelnen Tischen.

Die in FIG 9 bis FIG 12 dargestellten Schienensysteme 6 ermöglichen es, ein Restaurant wie einen Turm aufzubauen, in dem die Tische in mehreren Ebenen übereinander liegen. Ebenso können die Tische zueinander versetzt wie die Stufen einer Wendeltreppe angeordnet sein. Beispielsweise könnte ein nachfolgender Tisch immer einen halben Meter höher liegen als der vorhergehenden Tisch. Somit ist ein äußerst praktisches, den vorhandenen Raum effizient ausnutzendes und über das Transportsystem mittels Schwerkraft äußerst kostensparend betreibbares, für die Gäste dennoch äußerst komfortables Restaurantsystem angegeben.

Um die Behältnisse für die Speisen und/oder Getränke um Kurven fahren lassen zu können, ist grundsätzlich eine kurvenartige Schienenausbildung nötig. Dabei sind die Kurven in sich so spiralförmig zu verdrehen, dass der Übergang zur nächsten geraden Schienenstück problemlos funktioniert (man kann sich das vorstellen wie bei einer Wendeltreppe und/oder bei einer Steilkurve einer Carrerabahn). Hierdurch kann auch während der Kurve ein Gefälle realisiert werden wie auf dem vorhergehenden geraden Schienenstück. Dies kann aber beim Bau der Schienen zu relativ hohen Kosten führen. Eine Alternative bietet die in FIG 9 und FIG 10 dargestellte Variante, bei der die Behältnisse von einem geradlinigen Schienenstück auf ein darunter liegendes nächstes Schienenstück fallen, wobei die Ausrichtung dieser Schienenstücke zueinander versetzt verläuft, in FIG 9 bzw. FIG 10 jeweils versetzt um 90 Grad. Dies bringt aber unter anderem den Nachteil einer relativ großen Geräuschkulisse mit sich. Als vorteilhafte und gleichzeitig kostengünstige Alternative bietet sich daher ferner der vorstehend erläuterte Kurvenaufbau aus zumindest im Wesentlichen trapezförmigen Segmenten an, bevorzugt wie beschrieben versehen beispielsweise mit den genannten Furnieren.

Die vorgenannten Probleme lassen sich auch durch folgende Weiterbildungen beheben bzw. zumindest reduzieren. Zum einen kann das Schienengefälle vor Eintritt in eine Kurve verhältnismäßig steil ausgebildet sein, in der Kurve selbst kann das Gefälle dann vergleichsweise gering sein. In diesem Fall ist es möglich, das in sich verdrehte Bauen der Kurve wegfallen zu lassen, ohne dabei den Nachteil des Lärms der oben beschriebenen Lösung mit fallendem Übergang zwischen den Schienenstücken in Kauf nehmen zu müssen. Zum anderen kann in dem beschriebenen Vieleck aus höhenmäßig zueinander versetzten geraden Schienenstücken der Versatz der Schienenstückausrichtung zueinander durch eine größere Eckenzahl entsprechend reduziert werden, beispielsweise durch eine Eckenzahl von 8 oder 12. Dadurch lässt sich die Fallhöhe reduzieren, so dass hierdurch der Lärm beim Fallen auf das jeweils darunter liegende Schienenstück erheblich reduziert wird. Ferner lässt sich eine derartige Ausbildung kostengünstiger als eine in sich verdrehte Spirale realisieren. Hier kommt beispielsweise auch das vorstehend erläuterte Kurvengebilde, aufgebaut aus zumindest im Wesentlichen trapezförmigen Segmenten, in Betracht.

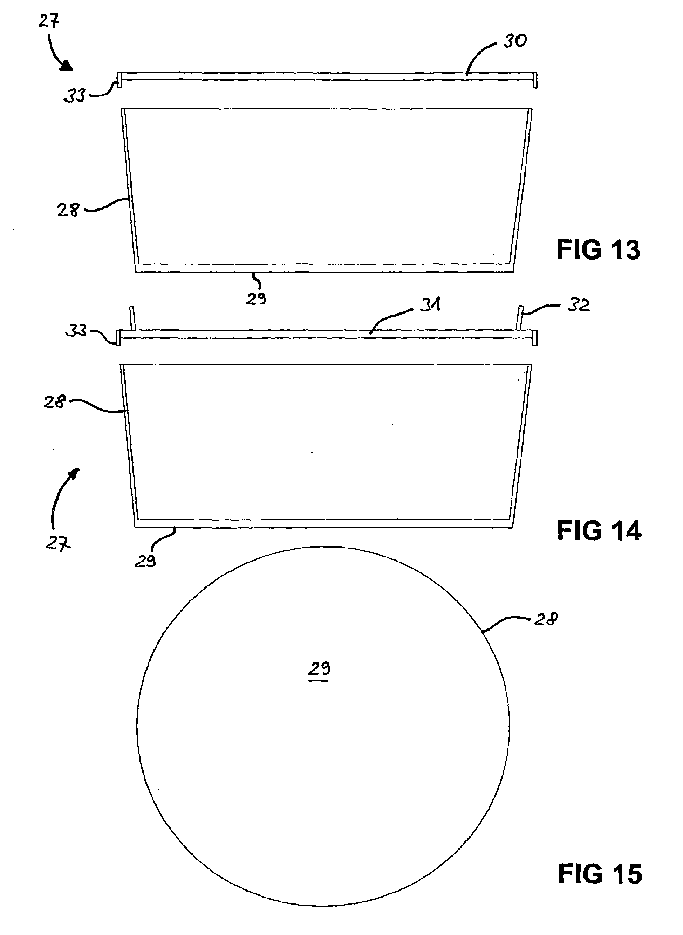

FIG 13 bis FIG 18 zeigen in schematischer Darstellung verschiedene Ausführungsbeispiele von für den Transport auf dem Schienensystem geeigneten Behältnissen 27 für die Aufnahme insbesondere von Speisen. Das Grundschema eines für das Schienensystem 6 geeigneten Behältnisses 27 ist in FIG 13 dargestellt. Es zeigt eine Schüssel 28, die an ihrer Unterseite eine ebene Gleitfläche 29 aufweist, mit der die Schüssel 28 auf den Gleitflächen der Schienen gleitet (oder: rutscht). Selbstverständlich kann die Gleitfläche auch anders ausgebildet sein, beispielsweise Erhebungen aufweisen, die die Gleiteigenschaften verbessern. Auch können die Kanten des Unterbodens zur Verbesserung der Gleiteigenschaften gerundet ausgebildet sein. Die Schüssel 28 und die Gleitfläche 29 weisen einen kreisförmigen Querschnitt auf, wie aus der Darstellung der Unterseite der Schüssel 28 in FIG 15 ersichtlich ist. In das Innere der Schüssel können die bestellten Speisen gegeben werden. Um Verschmutzung zu vermeiden kann die Schüssel 28 mit einem Deckel 30 abgedeckt werden, wobei der Deckel 30 auf der Schüssel 28 durch einen passgenauen ringförmigen Deckelrand 33 gegen Verrutschen gesichert ist. Zwischen Deckel 30 und Schüssel 28, insbesondere am Deckel 30, kann eine Dichtung, insbesondere ein Dichtring, vorgesehen sein (nicht dargestellt), um die Schüssel 28 abzudichten. Die Deckel der Schüsseln können auch Öffnungen (oder: Bohrungen) aufweisen (nicht dargestellt), damit Wasserdampf entweichen kann und damit beispielsweise Pommes Frites "cross" bleiben.

Eine zweckmäßige alternative Deckelausbildung zeigt FIG 14. Auf die Schüssel 28 kann ein Deckel 31 gesetzt werden, der an seiner der abgedeckten Schüssel 28 abgewandten Seite einen ringförmigen Randsteg 32 aufweist, der insbesondere konzentrisch zum kreisförmigen Querschnitt der Schüssel 28 ausgebildet ist. In diesen Randsteg 32 kann nun eine weitere Schüssel 28 aufgesetzt werden, und zwar formschlüssig, beispielsweise die in FIG 13 dargestellte Schüssel 28 (siehe die Kombination (Zusammenschau) von FIG 13 und FIG 14; diese Zusammenschau zeigt das Aufsetzen einer Oberschüssel 28 (FIG 13) auf eine Unterschüssel (FIG 14) über einen Zwischendeckel 31). Dabei sind die Abmessungen des Randsteges 32 derart mit den Abmessungen der Schüsseln 28 abgestimmt, dass ein einheitlicher Schüsseltyp, insbesondere mit gleichen Abmessungen, sowohl als Unter- als auch als Oberschüssel verwendbar ist. Wichtig ist hierbei die Verwendung des Zwischendeckels 31. Auf diese Weise lassen sich stabil zwei oder auch mehrere Schüsseln 28 übereinander stapeln und auch aufgrund der formschlüssigen Einpassung in den Randsteg 32 sicher transportieren. Der Randsteg 32 verhindert ein Verrutschen oder Kippen der aufgesetzten Schüssel 28. Auch der Zwischendeckel 31 weist einen passgenauen ringförmigen Deckelrand 33 auf, der ein Verrutschen des Deckels 31 auf der abgedeckten Schüssel 28 verhindert. Auf der obersten Schüssel 28 kann ein normaler Abschlussdeckel 30, d.h. ohne zusätzlichen Randsteg 32, aufgesetzt werden (vgl. FIG 13).

Durch dieses in FIG 13 bis FIG 15 dargestellte Schüsselsystem können entweder mehrere Speisen und/oder Getränke gleichzeitig übereinander angeordnet auf dem Schienensystem transportiert werden oder es können mehrere Bestandteile einer Speise getrennt voneinander zum Gast geliefert werden, beispielsweise Brot getrennt von einer Suppe.

Zweckmäßig ist, wenn die Schüsseln 28 und/oder die Deckel 30, 31 aus Edelstahl hergestellt sind. Ferner kann in alle Deckel und Böden der Restaurantname eingebracht, beispielsweise eingegossen, sein, beispielsweise etwa 1mm tief. Die Namenszugvertiefungen können dann wiederum mit einem farbigen Emaille ausgegossen sein. Möglich ist selbstverständlich auch die Ausbildung der Schüsseln 28 aus Kunststoff und/oder aus anderen Metallen oder Materialien.

Gemäß einer Weiterbildung (nicht dargestellt) kann bzw. können in den Abschlussdeckeln 30 eine oder mehrer Bohrungen vorgesehen sein. In diese Bohrungen können kleine Fähnchen, z.B. Papierfähnchen an einen Zahnstocherhölzchen, gesteckt werden, vorzugsweise formschlüssig. Auf diesen Fähnchen kann dann der Name der Speise stehen, die sich in der Schüssel befindet, oder die Speisennummer aus der Speisekarte, gegebenenfalls ergänzt um die Tischnummer des bestellenden Gastes. Eine derartige Bohrung kann auch am oberen Schüsselrand vorgesehen sein. In diese Bohrung kann dann ein Fähnchen eingesteckt werden, wenn kein Deckel benötigt wird.

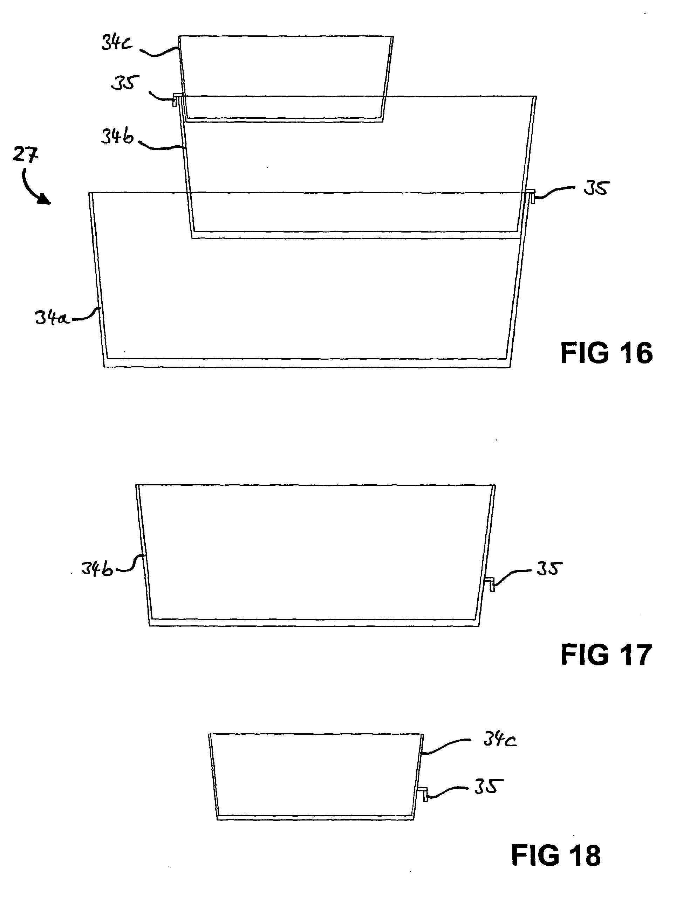

Ein weiteres Behältnis 27 mit speziellen Eigenschaften ist in FIG 16 bis FIG 18 dargestellt. Hier handelt es sich um drei Schüsseln 34a, 34b, 34c in verschiedenen Größen. Die große Schüssel 34a entspricht dabei der bereits vorstehend anhand von FIG 13 und FIG 14 beschriebenen Schüssel 28, d.h. diese Schüssel 34a ist die rutschende Grundschüssel. Für diese Schüssel können weiterhin die bereits erläuterten Abschlussdeckel 30 und Zwischendeckel 31 verwendet werden. Der Zweck der kleineren Schüsseln 34b und 34c ist, Zutaten zu den Speisen getrennt mitliefern zu können, beispielsweise spezielle Soßen oder Dips, beispielsweiße Apfelmus. Dazu können die kleineren Schüsseln 34b und 34c in die große Schüssel 34a gestellt werden. Zweckmäßig ist jedoch eine Weiterbildung, bei der die kleinen Schüsseln 34b und 34c seitlich mit einem Haken 35 versehen sind. Dieser Haken 35 ist derart ausgebildet, dass die kleineren Schüsseln 34b und 34c über diesen Haken 35 in die große Schüssel 34a eingehängt werden können. Selbstverständlich kann auch die kleinste Schüssel 34c in die mittlere Schüssel 34b eingehängt werden, und ergänzend die mittlere Schüssel 34b in die große Schüssel 34a (vgl. FIG 16). Aus FIG 16 ist ersichtlich, dass die Neigung der Schüsselränder so aufeinander abgestimmt ist, dass ein Verkippen der kleineren Schüsseln nicht möglich ist, da die Wände der Schüsseln aneinander liegen. Für diese kleineren Schüsseln 34b und 34c können selbstverständlich ebenfalls in der Größe angepasste Deckel, beispielsweise entsprechend den bereits erläuterten Abschlussdeckeln 30 und Zwischendeckeln 31, vorgesehen werden.

Von Vorteil ist ferner, wenn der Haken 35 an den kleineren Schüsseln 34b und 34c nicht an deren oberen Rand, sondern in einem mittleren Bereich der Seitenwand der Schüsseln angebracht sind. Dadurch ist zwischen den eingehängten Schüsseln und der jeweiligen Grundschüssel noch ausreichend Platz (oder: Stauraum) für die Unterbringung von Speisen. Zum Essen können die eingehängten Schüsseln 34b, 34c leicht entnommen werden, so dass die darunter befindlichen Speisen zugänglich sind.

Das Einhängen der kleineren Schüsseln 34b, 34c erfolgt derart, dass ihr Schwerpunkt im Inneren der großen Schüssel 34a (Grundschüssel) liegt. Dadurch werden Kippprobleme beim Rutschen der Grundschüssel 34a vermieden. Selbst bei der Dreischüssel-Anordnung nach FIG 16 ist der Schwerpunkt zur Mitte hin ausgebildet, so dass keine Kippprobleme entstehen können.

Die Haken 35 können fest an den Schüsseln 34b, 34c angebracht sein. Ebenso ist es aber auch möglich, die Haken 35 variabel anzubringen. Bei einer variablen Anbringung kann die Höhe der kleineren eingehängten Schüssel über der jeweils größeren, in die sie eingehängt ist, flexibel eingestellt werden.

Nicht dargestellt, aber in einer Weiterbildung vorgesehen ist, mit dem Deckel 31 (FIG 14) vergleichbare Deckel auszubilden, die eine Halterung für die kleineren Schüsseln 34b, 34c aufweisen. Dadurch wird ermöglicht, kleinere Schüsseln 34b, 34c über den Haken 35 auch bei geschlossenem Deckel an der Grundschüssel 34a einzuhängen bzw. kleinere Schüsseln über entsprechende Zwischendeckel auf größere Schüsseln aufzusetzen.

Gemäß einer weiteren Variante sind an den Schüsseln und/oder an den Deckeln Besteck- und/oder Serviettenhalterungen angebracht.

Selbstverständlich können die vorstehend in verschiedenen Varianten beschriebenen Behältnisse (insbesondere Schüsseln) auch Griffe aufweisen, vergleichbar Topf- oder Pfannengriffen.

Des Weiteren können auch weitere Behältnisse geeigneter Größe, beispielsweise Töpfe und/oder Pfannen, übereinander gestapelt werden und auf diese Weise gemeinsam im Schienensystem rutschen.

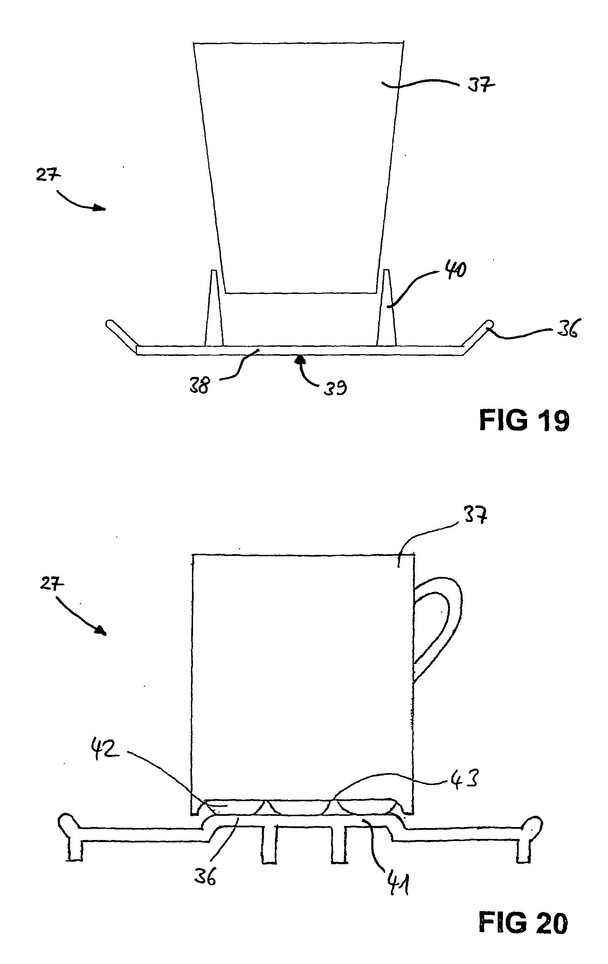

FIG 19, FIG 20 und FIG 21 zeigen in schematischer Darstellung drei verschiedene Ausführungsbeispiele von Behältnissen 27, die für den Transport insbesondere von Getränken auf dem Schienensystem geeignet sind.

Um Flaschen, Becher, Gläser und Tassen 37 in dem Schienensystem 6 transportieren zu können ist es zweckmäßig, diese mit einer Gleitvorrichtung 36 zu versehen.

Ein erstes Ausführungsbeispiel hierfür zeigt FIG 19. Die Gleitvorrichtung 36 ist hier eine Art Unterteller 38 oder Untersetzer mit glatter Unterseite 39, die eine Gleitfläche zum Gleiten auf den Schienen ausbildet. Diese Unterseite 39 entspricht der vorbeschriebenen Gleitfläche 29 der Schüsseln 28. Auf der der Unterseite 39 gegenüberliegenden Oberseite des Untertellers 38 ist eine Halterung 40 ausgebildet, in die speziell an die Form der Halterung 40 angepasste Becher, Gläser oder Tassen 37 formschlüssig einstellbar sind. Da Halterung 40 und Becher, Glas oder Tasse 37 aufgrund von deren Gewicht aneinander gedrückt werden, und da auch der Unterteller 38 ein Eigengewicht aufweist, können die Getränkebehälter (Becher, Glas, Tasse, Flasche) während des gleitenden Transports in den Schienen nicht kippen, solange eine vorbestimmte Neigung der Schiene nicht überschritten wird. Diese spezielle Gleitvorrichtung 36 nach FIG 19, der Unterteller 38, ermöglicht somit den sicheren Transport von Getränken vom Arbeitsbereich 3 an die Tische 5 im Gästebereich 4 des Restaurantsystems 2. Am Tisch 5 können die Getränkebehälter problemlos aus den Untertellern 38 herausgenommen werden und nach dem Trinken oder dem Leeren des Behälters dort wieder abgestellt werden. Zu beachten ist, dass für jede verwendete Getränkebehälterform ein passender Unterteller bereitgestellt werden muss bzw. dass entsprechende variable Einsätze verwendet werden müssen.

Ein zweites Ausführungsbeispiel für eine Gleitvorrichtung 36 für Getränkebehälter 37 (aber auch andere Behälter wie Schüsseln, Töpfe und Pfannen) ist das aus DE 202 16 724 U1 bekannte Standelement 41 für ein Trinkgefäß, das in FIG 20 dargestellt ist. Bei diesem Standelement 41 sind Saugnäpfe 42 vorgesehen, über die ein Getränkebehälter 37, aber beispielsweise auch Schüsseln und/oder kleine Töpfe und/oder kleine Pfannen, an dem Standelement 41 befestigbar ist. Die Saugnäpfe 42 greifen dabei an einer Unterseite 43 des Behälters 37 an. Nachteilig ist hierbei gegenüber dem vorbeschriebenen Unterteller 38, dass die Standelemente 41 auch nach dem Transport am Tisch an den Behältern haften bleiben bzw. nur verhältnismäßig schwer entfernbar sind, insbesondere bei gefüllten Getränkebehältern. Von Vorteil ist hingegen, dass eine Art von Standelementen 41 für nahezu alle Getränkebehälter verwendbar ist, d.h. Spezialausbildungen für bestimmte Behälter sind nicht erforderlich. Selbstverständlich sind die Standelemente 41 entsprechend den erforderlichen Gleiteigenschaften ausgebildet. Beispielsweise können die in FIG 20 dargestellten Stege an der Unterseite des Standelements 41 entfallen und stattdessen eine ebene Unterseite (Gleitfläche) wie beim Unterteller 38 nach FIG 19 vorgesehen sein. Umgekehrt können aber auch die Unterteller 38 nach FIG 19 bzw. die Behältnisse insgesamt, d.h. auch die Schüsseln, Töpfe oder Pfannen, Stege entsprechend FIG 20 an der Gleitseite aufweisen.

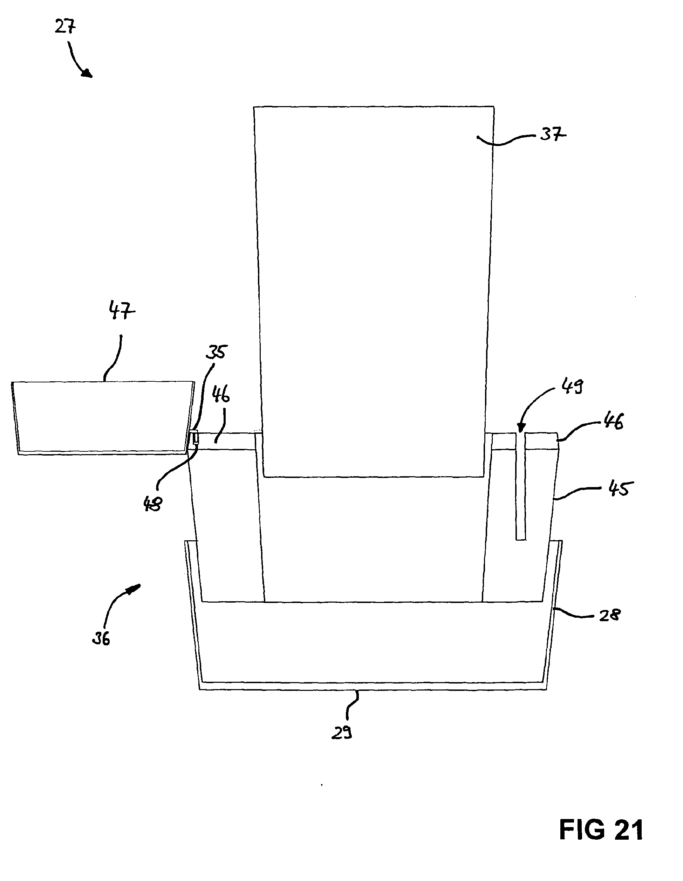

Ein drittes Ausführungsbeispiel für eine Gleitvorrichtung 36 für Getränkebehälter 37 zeigt FIG 21 in einer Schnittdarstellung. Die Gleitvorrichtung 36 umfasst hier eine Schüssel 28, die den vorbeschriebenen Schüsseln 28 (vgl. FIG 13 bis FIG 15) entspricht und die eine entsprechende Gleitfläche 29 aufweist. Es kann sich dabei auch um ein anderes Behältnis, beispielsweise einen Topf, handeln. Ferner gehört zur Gleitvorrichtung 36 in FIG 21 ein Getränkeeinsatz 45 für die Schüssel 28. Dieser Getränkeeinsatz 45 ermöglicht es, Getränke mit den normalen, bereits beschriebenen Schüsseln 28 (Rutschschüsseln und/oder Rutschtöpfe und/oder Rutschpfannen) über das Schienensystem 6 zu transportieren. Der Getränkeeinsatz 45 kann aus Holz, Kunststoff, Schaumstoff oder sonstigen Materialien bestehen. Der Getränkeeinsatz 45 hat in der Mitte eine Öffnung, die an die Abmessungen des zu transportierenden Glases 37 (oder: Becher, Tasse, Flasche) angepasst ist. Der Getränkeeinsatz 45 ist derart ausgebildet, dass er einfach in die Schüssel 28 hineingestellt werden kann und dort dann sicher, insbesondere verrutschsicher, gehaltert ist. Auf diese Weise können ohne großen Kostenaufwand Halterungen für verschiedene Trinkgefäße 37 (oder: Getränkebehälter) verwirklicht werden. In den Getränkeeinsatz 45 kann wiederum passgenau das Trinkgefäß 37 (Glas, Tasse, Flasche, usw.) hineingestellt werden. Es kann dadurch während des Transports über das Schienensystem 6 nicht umkippen.

In seinem unteren Bereich hat der Getränkeeinsatz 45 eine sich nach unten hin verengende Form, entsprechend der Schüssel 28, für die er bestimmt ist. Selbstverständlich kann er auch an andere Behältnisse angepasst sein, beispielsweise kann er eine an einen Topf angepasste Form aufweisen. Der Teil des Getränkeeinsatzes 45, der über die Schüssel 28 hinausragt, weist zunächst ein Stück weit den gleichen Winkel auf und geht dann in einen oberen Abschnitt 46 über, in dem sich die Form des Getränkeeinsatz 45 wieder verengt, das heißt der Außenwinkel ist nach innen geneigt. Dieser obere Abschnitt 46 ist dafür bestimmt, eine weitere kleinere Schüssel 47 mittels eines bereits anhand von FIG 16 bis FIG 18 beschriebenen Hakens 35 an dem Getränkeeinsatz 45 einzuhängen. Der nach innen geneigte Außenwinkel im oberen Abschnitt 46 des Getränkeeinsatzes 45 sorgt dafür, dass die kleine Schüssel 47 während des Transportes in der vorgesehenen Position gehalten wird. Um die kleine Schüssel 47 einhängen zu können, befindet sich oben (in FIG 21 auf der linken Seite) im Getränkeeinsatz 45 eine kleine Ausnehmung 48. Auf der rechten Seite des Getränkeeinsatzes 45 in FIG 21 ist eine weitere Ausnehmung 49 im Getränkeeinsatz 45 zu erkennen. Diese Ausnehmung 49 dient dazu, Besteck, beispielsweise einen Löffel, hinein zu stecken und mit zu transportieren. Eine nicht dargestellte Weiterbildung sieht vor, den Getränkeeinsatz 45 derart auszubilden, dass er nur zu drei Vierteln die Schüssel 28 ausfüllt. Gemäß dieser Weiterbildung bleibt dann ein Viertel der Schüssel 28 neben dem zu transportierenden Trinkgefäß 37 frei und könnte beispielsweise für das Mitführen von Zutaten wie Zucker oder Milch verwendet werden.

Der beschriebene Getränkeeinsatz 45 ist äußerst praktisch und effizient, da er es ermöglicht, die für die Speisen bestimmten Schüsseln 28 (oder: Töpfe, Pfannen) auch für den Getränketransport einzusetzen. Gleichzeitig ermöglicht dieses Prinzip eine hohe Variantenvielfalt und ist somit für den Transport verschiedenster Trinkgefäße 37 geeignet. Dadurch lässt sich insgesamt ein kostengünstiges Behältersystem bereitstellen. Werkzeugkosten für die Anfertigung verschiedener Behälter entfallen. Außerdem kann so die Zahl verschiedener Transportsysteme auf ein Einziges reduziert werden.

Um über das Schienensystem 6 Getränkebehälter, beispielsweise Gläser, transportieren zu können, ist es zweckmäßig, Gläser bzw. Gefäße zu verwenden, die abdeckbar oder verschließbar sind, beispielsweise mit einem Kunststoffdeckel, damit der flüssige Inhalt beim Gleiten in der Schiene nicht überschwappt (in FIG 19 bis FIG 21 nicht dargestellt).

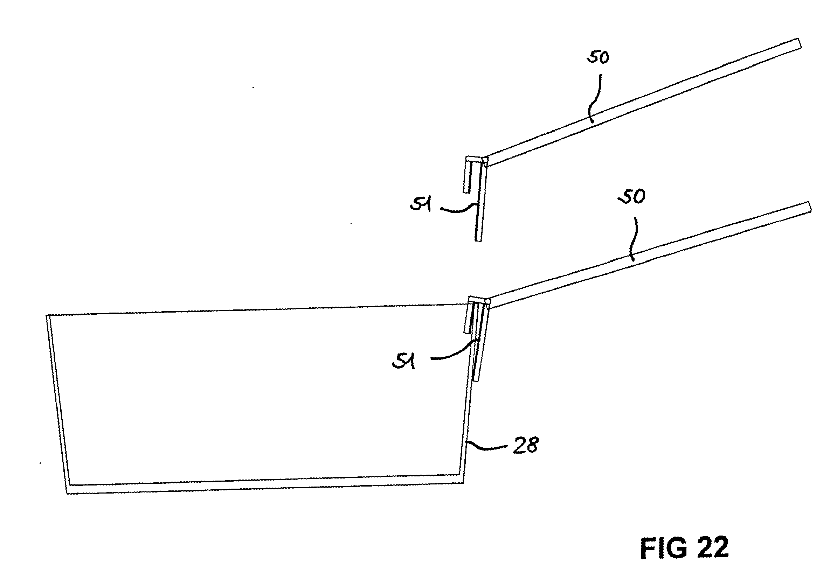

FIG 22 zeigt einen Griff 50 für Schüsseln 28, beispielsweise Schüsseln entsprechend den in FIG 13 bis FIG 15 dargestellten Schüsseln 28. In FIG 22 oben ist der Griff 50 in Alleinstellung gezeigt, in FIG 22 unten in seiner Verwendung (Anbringung) an einer Schüssel 28. Diese Griffe 50 können beispielsweise an das tischseitige Ende jeder Schiene 7 gehängt werden. Mit diesem Griff 50 können dann selbst heiße Schüsseln 28 problemlos aus dem Schienensystem 6 entnommen werden, ohne dass man sich Verbrennungen an den Händen zufügt. Der Griff 50 kann beispielsweise aus Holz, Metall oder Kunststoff bestehen. Auf einer Innenseite 51 des Griffs 50, die mit den zu entnehmenden Schüsseln 28 in Verbindung kommt, ist eine schlecht rutschende Oberfläche (z.B. eine Art Gummi oder Kunststoff) angebracht, damit die Schüssel 28 bei der Entnahme nicht aus dem Griff 50 rutscht. Der Griff 50 wird vor der Entnahme der Schüssel 28 aus dem Schienensystem 6 einfach auf den Rand der Schüssel 28 aufgesteckt. Durch eine leichte Kippbewegung des Griffes 50 wird sich die Schüssel 28 durch deren Gewicht nach unten abgesenkt und verklemmt sich so innerhalb des Griffs 50. Auf diese Weise ist ein sicheres Heben und Transportieren der Schüssel 28 gewährleistet. Beim Absetzen der Schüssel 28 auf den Tisch lockert sich der Griff 50 automatisch, da das Gewicht der Schüssel 28 nicht mehr nach unten drückt. Somit kann der Griff 50 problemlos von der Schüssel 28 abgenommen werden.

Alternativ oder additiv ist es natürlich auch möglich, die Schüsseln wie kleine Pfännchen oder Töpfchen auch mit festem Griff zu produzieren und so in den Schienen fahren zu lassen.

Ebenso ist es auch möglich, die Griffe wie eine Art Zange zu bauen (nicht dargestellt). Der Griff kann auch in dieser Variante über den Rand der Schüssel gestülpt werden. Mittels einer Quetschbewegung der Hand kann die Schüssel dann ebenfalls aus dem Schienensystem entnommen werden.

In jedem Fall ist es sinnvoll, den Teil des Griffs, der über den Schüsselrand aufgestülpt wird, von der Form her der Schüsselwandform anzupassen.

Das Restaurantsystem nach der Erfindung muss selbstverständlich nicht an den Außenmauern eines Gebäudes enden. Es ist durchaus möglich, von einem zentralen Arbeitsbereich aus beispielsweise auch einen Gartenbereich über ein entsprechendes Schienensystem, bevorzugt mit Überdachung, zu bedienen. Eine weitere Möglichkeit ist die Umsetzung eines Drive-in-Restaurants. Hier kann das Schienensystem die Speisen und Getränke bis an das Auto bringen.

Zweckmäßig gerade für einen Gartenbereich oder für ein Drive-in-Restaurant ist ein Bestell- und/oder Bezahlsystem mittels Handy, SMS oder E-Mail. Derartige Bestellsysteme ermöglichen es dem Kunden, bereits einige Minuten vor seiner Ankunft im Restaurant zu bestellen, beispielsweise per Handy aus dem Auto. Dabei kann der Kunde gegebenenfalls bereits den Zeitpunkt seiner Ankunft bekannt geben. Sinnvoll ist auch das Vorsehen einer Bestellmöglichkeit über das Internet.

Der Vorteil dieses Bestellung- und/oder Bezahlsystems liegt unter anderem darin, dass die bestellten Speisen und Getränke frisch zubereitet werden können und der Besteller über den gleichen Weg, d.h. über Handy, SMS oder E-Mail bzw. Internet über die Fertigstellung informiert wird. Dann kann der Besteller zum Drive-in-Schalter kommen und seine Speisen und Getränke abholen. Die Nachricht kann beispielsweise mit einer Abholnummer und gegebenenfalls einer Nummer des Abholschalters versehen sein. Am Schalter gibt der Besteller nur noch seine Abholnummer ein, umgehend erhält er die bestellten Speisen und Getränke, am Drive-in-Schalter selbstverständlich in geeigneter Mitnahmeverpackung.

Der Vorteil dieses System liegt unter anderem darin, dass immer nur diejenigen Personen an den Drive-in-Schalter kommen, die bereits bezahlt haben und deren Bestellung bereits fertiggestellt ist. Dadurch lassen sich lange Wartezeiten vermeiden. Das vorgeschlagene System steigert somit auch die Effizienz von Drive-in-Restaurants im Vergleich zu herkömmlichen Drive-in-Restaurants. Der Kunde erhält stets frisch zubereitete Speisen und Getränke. Ferner muss er - sofern er frühzeitig, beispielsweise von unterwegs aus, bestellt - auch nicht warten.

Die Bestellung erfolgt in dem vorstehend vorgeschlagenen Drive-in-Restaurant vorteilhafterweise nicht in der herkömmlichen Art, bei der Autos in einer Schlange stehen, irgendwann den Bestellschalter erreichen und anschließend an den Ausgabeschalter. Dies ist hier nicht sinnvoll, die Wartezeiten wären aufgrund der vorgesehenen frischen Zubereitung der Speisen zu lange. Zweckmäßig ist vielmehr, an Kundenparklätzen Schilder mit den bestellbaren Speisen und Getränken aufzustellen. Von diesen Kundenparkplätzen aus, oder selbstverständlich auch bereits von unterwegs aus oder von anderen Orten aus, kann der Kunde dann per E-Mail, SMS oder über Handy oder Telefon wie obenstehend beschrieben bestellen. Nach Fertigstellung der Bestellung wird der Besteller informiert, beispielsweise wiederum über SMS, und kann zum Abholschalter fahren.

Grundsätzlich soll bei jeder Variante des vorgeschlagenen Restaurantsystems sowohl am Tisch als auch am Drive-in-Schalter in bar, per Bank- oder Kreditkarte, per Handy, usw. bezahlt werden können. Zweckmäßig ist auch, vorzusehen, dass nicht nur die Tische, sondern auch die gewünschten Menüs bereits von zu Hause oder von unterwegs aus reserviert bzw. bestellt werden können, beispielsweise per Internet. Eine weitere Bestellmöglichkeit ist, im Restaurant einen Computer vorzusehen, an dem einerseits für die eigene Tischnummer zusammengestellt und bestellt werden und andererseits auch gleich bezahlt werden kann. Dadurch ist eine erhebliche Effizientsteigerung möglich. Diese Möglichkeit kann auch optional vorgegeben werden mit dem Vorteil, dass der Kunde bei Bestellung und Bezahlung per Computer oder über das Internet einen Rabatt erhält. Dieses System ermöglicht auch, bei dem vorbeschriebenen Getränkezapfsystem über Leitungen an die Tische bestimmte Getränke und Mengen zu buchen, die dann durch einen Sensor gesteuert aus der entsprechenden Leitung entnommen werden können. Selbstverständlich ist es auch möglich, die normale Bestellung bei Bedienpersonal vorzusehen.

Sollten Gäste bei einer Bedienung bestellen wollen, kann hierfür am Tisch eine Lampe vorgesehen sein, die der Gast als Zeichen des Bestellwunsches beispielsweise durch Knopfdruck einschalten kann. Die Bedienung muss somit nur gezielt die Tische ansteuern und bedienen, an denen die Gäste dies auch wünschen und bereit sind, für diesen Zusatzservice auch zu bezahlen. Selbstverständlich kann auch die Möglichkeit vorgesehen sein, dass ein Gast vorab im Internet bestellt und Zusätzliches gegen extra Bezahlung bei einer Bedienung nachbestellt.

Um Missbrauch zu verhindern, insbesondere, dass Personen, die nicht bestellt und bezahlt haben, sich einfach an einen von anderen reservierten und bezahlten Tisch setzen, kann vorgesehen sein, dass jeder Besteller, der per Internet oder Computer oder auf vergleichbarem Weg bestellt und bezahlt hat, eine Bestätigung mit Tisch- und Codenummer erhält, die er dann einfach nach Ankunft an seinem Tisch zum Zeichen des Servierstarts an den Arbeitsbereich weitergibt, beispielsweise per SMS.

Eine alternative Variante für Bestellung und Bezahlung ist der Verkauf von Chips als Geld- und/oder Speiseeinheiten an einem Automaten. Anstelle von Chips könnten auch Magnetspeicherkarten oder vergleichbare Mittel verwendet werden. Am Tisch oder beim Drive-in kann dann damit direkt bestellt und gleichzeitig bezahlt werden.

Nach einer weiteren Variante kann für die Bezahlung vorgesehen werden, dass der Gast beim Betreten des Restaurants eine Karte oder einen Chip, insbesondere eine Speicherkarte oder einen Speicherchip, erhält. Auf bzw. mit dieser Karte oder diesem Chip werden alle Speisen und Getränke des Gastes erfasst. Beim Verlassen des Restaurants wird dann anhand der erfassten Daten abgerechnet, beispielsweise an einer zentralen Kasse.

Gemäß einer Weiterbildung kann vorgesehen werden, Platz- und/oder Tischreservierungen zeitlich zu begrenzen. Beispielsweise ist ein Tisch für maximal zwei Stunden reservierbar. Verpflichten sich Gäste bei der Reservierung verbindlich, den Tisch beispielsweise bereits nach einer Stunde wieder frei zu machen, kann ihnen hierfür ein Rabatt auf Speisen- und Getränkepreise eingeräumt werden. Durch ein derartiges System ist es möglich, Tische und Plätze nicht nur einmal am Abend verbindlich zu reservieren, wodurch sich wiederum die Effizienz des Restaurantsystem insgesamt steigert.

Gemäß einer Weiterbildung ist vorgesehen, Tisch- und/oder Platzreservierungen ebenfalls per Internet (beispielsweise von zu Hause aus) vornehmen zu können. Dadurch ist es möglich, alles ausgehend von der Platzreservierung über den Zeitpunkt des Essens während der reservierten Zeit sowie die Bestellung des gewünschten Menüs bis hin zur Bezahlung bereits im Voraus in aller Ruhe zu regeln bzw. zu erledigen. Auch kann vorgesehen werden, insbesondere bei Reservierung über das Internet, dass der Gast einen bestimmten Tisch und/oder bestimmte Plätze reserviert (wie dies bei der Reservierung von Kinoplätzen bekannt ist). Diese Tische bzw. Plätze sind dann für eine bestimmte Zeit bzw. für einen bestimmten Zeitraum für den Gast reserviert.

Insgesamt ist es selbstverständlich möglich, das Restaurantsystem nach der Erfindung beliebig mit bekannten Restaurantsystemen zu kombinieren. So kann eine Rutsche Speisen und Getränke vom Arbeitsbereich zu einem oder mehreren definierten Ausgabestellen bringen, von denen aus Kellner die weitere Bedienung übernehmen oder die Gäste ihre Speisen und Getränke abholen. Das Gleiche gilt für das Abtransportsystem. Es wäre hier durchaus denkbar, nur eine kleine Anzahl von Rutschen an geeigneten Stellen im Restaurant vorzusehen. Kellner können dann die Tische abräumen und gebrauchte Behältnisse und Tischabfälle über diese Rutschen der Spülküche zuführen. Auf diese Weise ist auch gewährleistet, dass beim Abtransport die Schienensysteme nicht übermäßig durch unfachgemäßes Handhaben verschmutzt werden.

Besonders geeignet für die Unterbringung des vorgeschlagenen Restaurantsystems sind leerstehende Gewerbe- oder Industriegebäude. Diese weisen üblicherweise insbesondere eine geeignete Höhe auf. Ferner sind sie häufig verhältnismäßig günstig zu erwerben bzw. zu mieten. Auch sind derartige Gebäude zumeist nicht brauereigebunden. Ein weitere Vorteil ist, dass diese Gebäude üblicherweise in Gebieten liegen, in denen Lärm durch Live-Musik und/oder einen Gartenbereich keine Probleme bereitet.

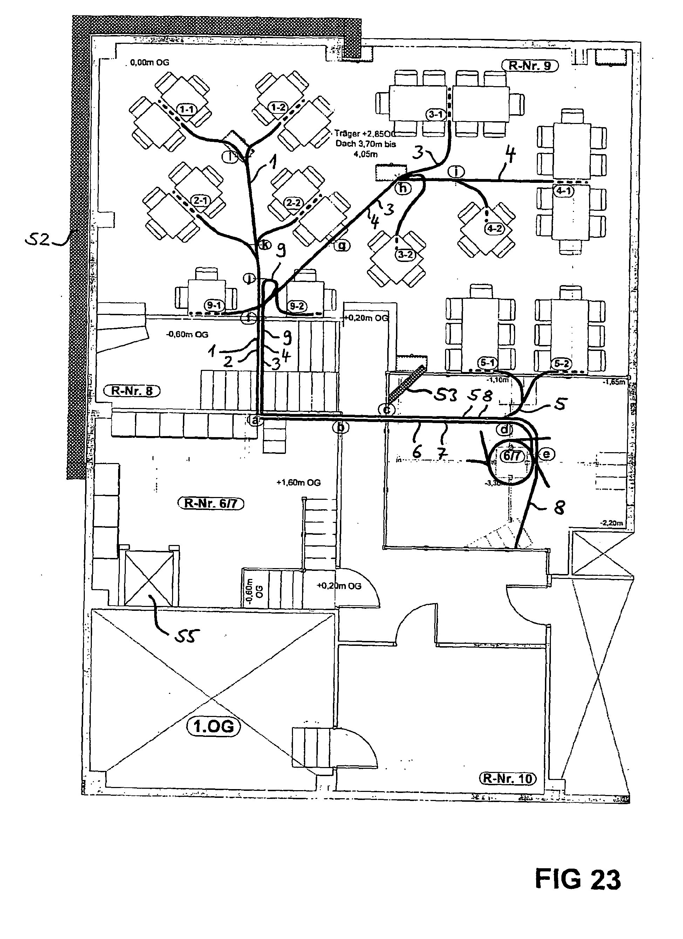

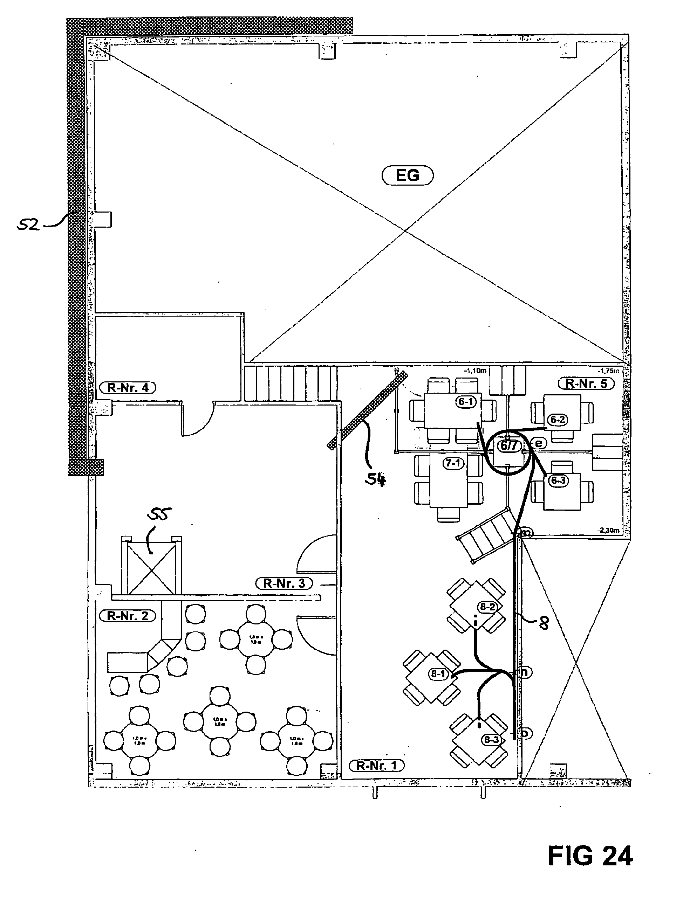

In FIG 23 und FIG 24 ist die konkrete Umsetzung eines Ausführungsbeispiels des Restaurantsystems nach der Erfindung dargestellt, und zwar in einem Industrie- bzw. Gewerbebau. Die Räumlichkeiten, in denen das Restaurantsystem installiert werden soll, liegen in einer etwa 7 Meter hohen Halle auf zwei Ebenen. FIG 23 zeigt das Obergeschoss (1. OG, 1. Stock), FIG 24 das darunter liegende Erdgeschoss (EG).

Der Raum R-Nr. 1 befindet sich Erdgeschoss und bildet den Eingangsbereich. Hier befinden sich die ersten drei Tische, die über das eingezeichnete Schienensystem bedient werden.

Der Raum R-Nr. 2 stellt im Prinzip nur eine Bar dar, an der nach dem Essen noch gemütlich Kaffee getrunken werden kann. Dieser Raum hat nichts mit dem erfindungsgemäßen Restaurantsystem zu tun.

In den Räumen R-Nr. 3 und R-Nr. 4 ist die Spülküche untergebracht. Diese Räume liegen ebenfalls im Erdgeschoss. Im Raum R-Nr. 3 befindet sich ein Aufzug zu dem darüber im Obergeschoss liegenden Arbeitsbereich R-Nr. 6/7 (dieser Raum hat zwei Ebenen: einen Lager und einen Koch- und Servierbereich), in dem gekocht wird und die Speisen und Getränke über das Schienensystem serviert werden. Über diesen Aufzug können Getränke und Zutaten zu den zu bereitenden Speisen und gespülte Schüsseln (oder Ähnliches) und Geschirr in den 1. Stock (oder 2. Stock, was der zweiten Ebene dieses Raums entspricht) verbracht werden.

Der Raum R-Nr. 5 im Erdgeschoss ist eigentlich ein Teil des Eingangsbereichs im Erdgeschoss. Nur dass in diesem Bereich kein 1. Stock eingezogen ist. Es ist also sozusagen eine Art Galeriebereich (auch Lichthof genannt). In diesem Galeriebereich ist der 1. Stock jeweils nur mit einem Geländer nach unten hin begrenzt. In diesem Galeriebereich ist eine Art Servierturm (Schienensystem, mit dem größere Höhen überwunden werden können, beispielsweise eine Spirale wie in FIG 11/12 oder über Ecken angeordnete Schienenelemente wie in FIG 9/10) installiert. Im dargestellten Beispiel ist in der Mitte des Luftbereichs (Lichthof) von der Decke herunter ein Gerüst vorgesehen, an dem verschiedene Schienen spiralförmig befestigt sind und so den Höhenunterschied überwinden. Zu den Tischen hin wird dann jeweils über Weichen abgezweigt. Die oberste Höhe dieses Turmsystems liegt 2,20 m über dem Erdgeschoss, so dass in diesem Bereich auch ein Tisch unter dem Gerüst angesiedelt ist. Die anderen Tische dieses Turmsystems liegen jeweils etwas nach unten versetzt. Der erste Tisch dieses Systems befindet sich auf der Erdgeschosshöhe. Jeweils an der Wand befinden sich Treppen, um von einer Ebene auf die nächst höhere zu gelangen.

Im 1. Stock ist der Raum R-Nr. 9 als Null-Raum-Höhe definiert. Räume im ersten Stock, deren Höhe von dieser abweichen, sind z.B. mit +0,20m oder-0,60m gekennzeichnet. Der Hauptgastbereich befindet sich im Raum R-Nr. 9. Hier sind 77 Sitzplätze vorgesehen. An einigen Punkten sind hier Geschirrschränke geplant, an denen Gläser und Besteck für die in der Umgebung liegenden Tische verstaut sind.

Gespültes Geschirr kann von der Öffnung zwischen den Räumen R-Nr. 6 (Lagerbereich Küche) und R-Nr. 8 (Aufgang zum 1. Stock) bei Bedarf abgeholt werden. Das Geschirr ist in einzelnen Körben gelagert, deren Größe genau in der Art ist, dass diese in Ausziehschubladen der Geschirrschränke gelagert werden können. So ist kein Um- oder Einräumen des Geschirrs notwendig. Leere Körbe werden aus den Schränken entfernt und volle wieder hineingestellt. Die oben genannte Öffnung kann auch genutzt werden, verschmutztes Geschirr aller in deren Nähe gelegenen Tische wieder über den Aufzug im Raum R-Nr. 6 zur Spülküche zu bringen. Am Geländer zur Galerie und am Geländer des etwas darunter gelegenen Turmsystems befinden sich außerdem zwei Abtransportschienen, mit denen Geschirr von in der Nähe stehenden Tischen zur Spülküche im Erdgeschoss abtransportiert werden kann.

Eine weitere Abtransportschiene 52, auf der auch ganze Körbe mit Geschirr abtransportiert werden können, liegt im Wesentlichen außerhalb des Gebäudes. Durch eine schleusenartige Öffnung können Körbe auf die Schiene befördert werden und so um eine 90°-Kurve laufend direkt zur Spülküche im Erdgeschoss gefahren werden.

Der Zugang zum Gastbereich R-Nr. 9 ist sowohl vom Absatz des Treppenhauses (wo auch die Öffnung in Form einer Durchreiche zum Arbeitsbereich liegt) mittels einer Treppe im Eck als auch über den Absatz der Brücke, von wo aus daneben die Abtransportschiene zur Spülküche verläuft, möglich. Auf diese Weise sind alle Tische im Gastraum - trotz Schienen - problemlos zugänglich.

Mittels der zur Galerie hin durch ein Geländer begrenzten Brücke im ersten Stock gelangt man erst zu einer Tür zum Arbeitsbereich R-Nr. 6/7 und danach zu einer ca. 12 qm großen Fläche, die ebenfalls galerieartig nur durch ein Geländer zum Innenhof hin begrenzt ist. Diese Fläche ist als kleine Bühne ausgestaltet, auf der Live-Musik gespielt und nahezu von überall her gesehen werden kann. Dahinter liegt der Raum R-Nr. 10. Dieser ist als Spiel- bzw. Betreuungszimmer für Kinder geplant. Kinder haben hier die Möglichkeit, zu spielen, zu malen usw.. Auf diese Weise soll den Eltern ein gemütlicher Abend ermöglicht werden.

Der Arbeitsbereich R-Nr. 6/7 ist im Prinzip ein Zimmer mit einer Raumhöhe von ca. 4,40 m. Hier bietet es sich an, eine Decke auf halber Höhe oder etwas darunter (wegen der oben benötigten Absaughauben beim Kochen) einzuziehen. Unten soll lediglich gelagert werden - Getränke, Fleisch, Gemüse usw.. Mittels dem im Raum vorgesehenen Aufzug können diese Waren dort hin transportiert werden. Entsprechend befinden sich hier auch die Kühlschränke. Auf der oberen Ebene des Raums befindet sich der eigentliche Koch- und Servierbereich.

Dort können von einem Punkt a aus alle Servierschienen bestückt werden. Alle Schienen enden dort - in unterschiedlichen Höhen. Pro Schiene gibt es eine Möglichkeit, einzustellen, welcher mit dieser Schiene erreichbare Tisch bedient werden soll. Die Schienen (und gegebenenfalls Weichen) werden dann automatisch entsprechend gestellt. Dann werden eine oder auch mehrere Schüsseln in die Schiene gegeben, die dann zu dem definierten Tisch rutschen. Am Ende der Schiene befindet sich dann z.B. eine Lichtschranke. Erreichen die Schüsseln das Ziel, kann ein neues Ziel für diese Schiene definiert und mit neuen Schüsseln bestückt werden. Mit jeder Schiene werden ein bis maximal vier Tische bedient.

Gegenüber der Tür zu R-Nr. 6/7 befinden sich Fenster. Aus diesen Fenstern kann man einen Gartenbereich sehen. Dieser kann aus dem Arbeitsbereich auch ohne Probleme mit Speisen und Getränken mittels Schienensystem versorgt werden, was in den Figuren jedoch nicht dargestellt ist. In analoger Weise kann eine Schiene natürlich auch zu einem oder mehreren Auto-Drive-In-Schaltern geführt werden (ebenfalls nicht dargestellt).

Gemäß einer Erweiterung ist vorgesehen, aus dem oberen Gästebereich eine Rutsche in Form einer Röhre als zusätzlichen Ausgang für Gäste zu installieren (nicht dargestellt).

Nachfolgend wird noch das in FIG 23 und FIG 24 dargestellte Schienensystem erläutert.

Alle Schienenstränge zum Transport von Speisen beginnen an Punkt a im oberen Stockwerk der Küche (Raum-Nr.6/7). Von diesem Punkt a aus werden zentral alle Tische durch Schienenstränge in zwei Richtungen versorgt. Die Schienenführung ist in FIG 23 und FIG 24 als dicke schwarze Linie eingetragen. Die gestrichelten Enden der Schienen kennzeichnen Auslauf- bzw. Abbremszonen an den Schienenenden.

In Richtung des oberen Gastraums R-Nr. 9 führen fünf Schienen in zwei parallel geführten Strängen. Die Schienen der einzelnen Stränge werden in der Höhe gestaffelt, um der zu überbrückenden Höhe/Entfernung zu entsprechen. Hierbei ist die Konstellation mit einem linken Strang bestehend aus den Schienen 1 und 2 und einem rechten Strang bestehend aus den Schienen 3, 4 und 9 zweckmäßig. Aus gestalterischen Gründen sind natürlich in gewissen Grenzen auch Abwandlungen möglich, um ein besseres optisches Bild zu erreichen. Diese Schienen führen von Punkt a über das Treppenhaus hinweg zu Punkt f.

Vom Punkt a aus führen in Richtung des Lichthofs R-Nr. 5 vier weitere Schienen 5 bis 8 an Punkt b aus der Küche heraus in Richtung des Punktes c. Hierbei werden zwei parallel verlaufende Stränge aus je zwei Schienen, die in der Höhe gestaffelt sind, um die nötige Durchgangshöhe zu wahren, genutzt.

An Punkt f führen die oben gelegenen Schienen 3 und 4 des rechten Stranges in Richtung des Punkts h, an dem die oberste Schiene 4 eine weitere Kurve nach rechts vollführt. An Punkt i findet eine Abzweigung zur Versorgung des Tisches 4-2 statt ehe die Schiene an Tisch 4-1 endet. Schiene 3 verzweigt an Punkt h und versorgt mittels entsprechender Kurven die Tische 3-1 und 3-2.

Die unterste Schiene 9 des rechten Stranges führt von Punkt f weiter zu Punkt j, bei dem eine 180° Kurve vollführt wird und nach einer Abzweigung und entsprechenden Kurven die Tische 9-1 und 9-2 versorgt werden.

Die Schienen 1 und 2 des linken Stranges führen von Punkt f weiter zu Punkt k. Dort verzweigt die untere Schiene und versorgt an ihren beiden Enden die Tische 2-1 und 2-2. Die Schiene 1 führt weiter und versorgt nach einer Gabelung an Punkt 1 die Tische 1-1 und 1-2.

Die übereinander laufenden Schienen 6 und 7 vollführen in Punkt d eine Kurve und münden an Punkt e in die spiralförmige Schienenkonstruktion in der Mitte der Ebenen. Dort überwinden diese beiden Schienen übereinander laufend die Höhe zu den jeweils zu versorgenden Tischen. Dort existieren in geeigneter Höhe entsprechende Weichen, um die spiralförmige Schiene verlassen zu können. Die obere der beiden Schienen (Nr. 7) versorgt den im Erdgeschoss stehenden Tisch für zehn Personen (Nr. 7-1). Schiene 6 versorgt drei Tische auf den anderen Ebenen (6-1, 6-2, 6-3).

Die Schienen 5 und 8 (parallel zu Schienen 6 und 7) führen ebenfalls übereinander laufend bis Punkt d. Dort vollführt Schiene 5 eine Linkskurve und versorgt mittels einer Weiche zwei Tische (5-1 und 5-2) im Obergeschoss am Rande des Lichthofs. Die untere Schiene 8 führt in entgegengesetzter Richtung zu Punkt e. Hierbei erfolgt die nötige Überwindung des Höhenunterschiedes durch geschickte Schienenführung um die spiralförmige Schienenkonstruktion in der Mitte der Ebenen herum. Von Punkt e führt die Schiene 8 an der Wand entlang über Punkt m und über Punkt n hinaus bis nach Punkt o. Dort fällt das Behältnis von der oberen Schiene in die untere Schiene, die wieder zurück führt. Diese Konstruktion (alternativ wäre auch eine Kurve denkbar) dient der Überwindung zusätzlicher Höhe. Unterhalb von Punkt n vollführt die Schiene eine Kurve Richtung Raummitte und versorgt mittels entsprechender Weichen drei Tische (8-1, 8-2, 8-3).

An drei strategisch gelegenen Punkten führen Entsorgungsschienen 52, 53, 54 von den Gasträumen hinab in die Spülküche in R-Nr. 3 und R-Nr. 4. Dies geschieht vom Rande des Lichthofs im 1 .OG (Entsorgungsschiene 53) und von der obersten Ebene des unteren Gastraumes (Entsorgungsschiene 54) aus. Hierbei führen diese beiden Entsorgungsschienen 53, 54 übereinander liegend über den Eingangsbereich hinweg durch eine Öffnung in der Wand in die Spülküche (R-Nr. 3 und R-Nr. 4) hinein. Zusätzlich ist eine weitere Entsorgungsschiene 52 (Abtransportschiene) an der rückwärtigen Wand des oberen Gastraums vorgesehen. Diese Entsorgungsschiene 52 verlässt das Gebäude und führt außen an diesem entlang bis in die Spülküche (R-Nr. 3 und R-Nr. 4) hinein. Zum Transport des gespülten Geschirrs nach oben in die Küchenräume ist ein Lastenaufzug 55 vorgesehen.

In den nachfolgenden Tabellen sind Höhenangaben (in Meter) der einzelnen Schienen 1 bis 9 an den jeweiligen Punkten a bis o (eingetragen in den Figuren 23 und 24) angegeben. Bezugspunkt ist immer das Niveau des 1 .OG. das heißt alle Höhenangaben beziehen sich auf das Niveau des 1 .OG. Das EG liegt demzufolge bei einem Niveau von -3,30m. Tische sind mit 80 cm Höhe angenommen.

Nach rechts sind die Schienen angegeben (oberste Zeile), darunter die jeweils von den Schienen versorgten Tische (zweite Zeile). Nach unten sind die einzelnen Punkte a bis o angegeben. Den Tabellen lässt sich somit der Höhenverlauf jeder Schiene 1 bis 9 entnehmen. So beginnt die Schiene 1 an Punkt a bei einer Höhe von 2,92 m, erreicht bei Punkt f eine Höhe von 2,30 m, bei Punkt j von 2,05 m, bei Punkt k von 1,83 m, bei Punkt 1 von 1,26 m und endet schließlich bei Tisch 1-1 bei einer Höhe von 0,80 m und bei Tisch 1-2 bei einer Höhe von 0,95 m.

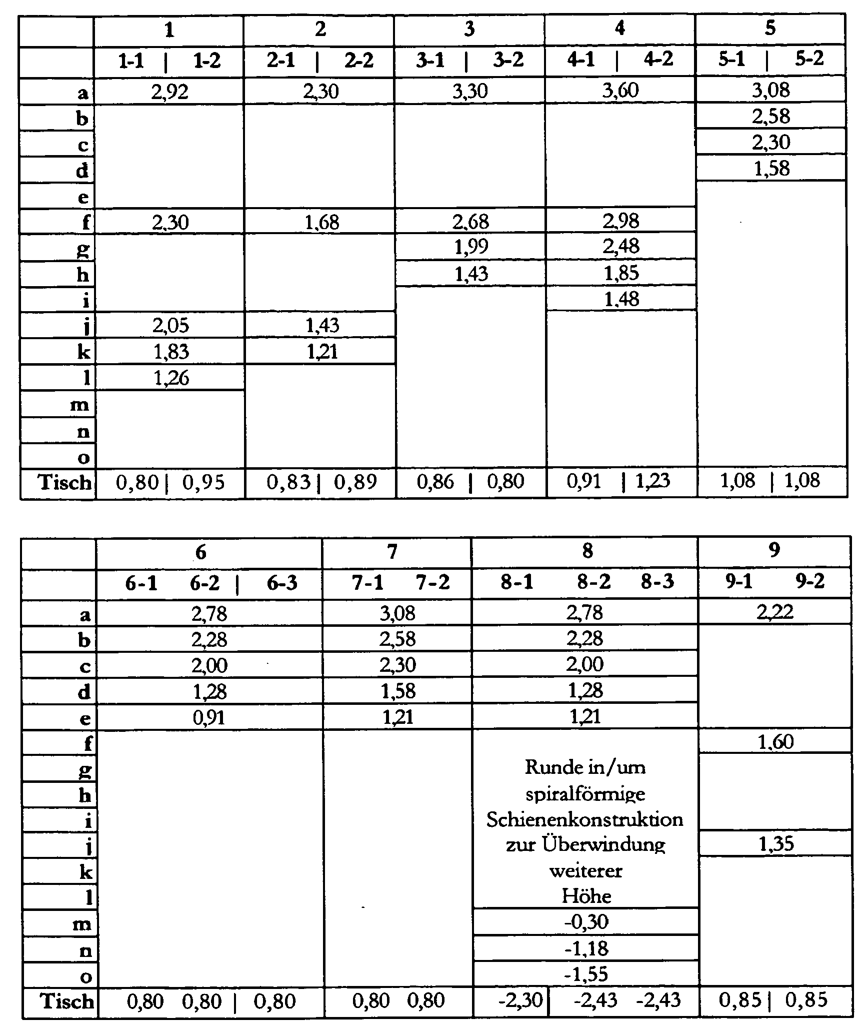

Folgende Nebenbedingungen liegen diesen Höhenangaben zugrunde:
- Höhe bei Punkt c mindestens 2 m
- Höhe bei Punkt f mindestens 1,60 m
- Höhe bei Punkt g mindestens 2,55 m
- Schienenabstand (Höhe) mindestens 0,3 m
- Gefälle der Schienen: 25,0%

Das in FIG 23 und FIG 24 beschriebene Restaurantsystem lässt sich beispielsweise folgendermaßen ergänzen:
Unter, über oder neben den Schienen ist eine Leitung ("pipeline") installiert. An den jeweiligen Tischen, an denen die Schienen enden, sind Zapfhähne vorgesehen, an denen Gäste kostenlos Leitungswasser entnehmen können. Am Tisch werden hierfür jeweils Trinkgläser bereit gestellt. Auch das notwendige Besteck steht z.B. in einem Behälter am Tisch. Außerdem ist an jedem Tisch an einem gut sichtbaren Ort die Tischnummer zu lesen (evtl. auch farbig unterlegt). Jedes Gericht oder Getränk, das über die Schienennetze eintrifft, hat ein kleines Fähnchen angesteckt. Auf diesen Fähnchen ist sowohl die jeweilige Tischnummer als auch der Name des Gerichts zu lesen. Eventuell bietet es sich auch an, für verschiedene Tische verschiedene Farben der Fähnchen einzuführen. In diesem Fall ist alleine durch die Farbe erkennbar, zu welchem Tisch die gelieferte Speise oder das Getränk gehört.

Beispielsweise kann ferner vorgesehen sein, Getränke ausschließlich in kleinen Fläschchen (z.B. 0,2 - 0,3 Liter) an die Tische zu liefern. Am Tisch ist dann ein Flaschenöffner vorgesehen. Gläser sind entweder am Tisch bereit gestellt oder werden von Bedienpersonal dorthin gebracht. Auf diese Weise kann das Problem des Verschüttens der Getränke auf dem Transportweg erheblich reduziert werden.

Das Bestellsystem kann beispielsweise derart gestaltet sein, dass auf den Tischen Speisekarten ausliegen, Bedienungen über elektronische Bestellsysteme die Bestellungen aufnehmen, die dann beispielsweise per Funk an den Arbeitsbereich weiter gegeben werden, um von dort aus ausgeführt zu werden. Auf diese Weise bleibt eine persönliche Betreuung der Gäste gewährleistet bei erheblich geringerem Arbeits- bzw. Personalaufwand als in herkömmlichen Restaurants. Die Bedienungen werden auch das nicht mehr benötigte Geschirr, Flaschen, Besteck usw. von den Tischen abholen und zu den vorgesehenen Abtransportschienen bringen, um es von dort zur Spülküche rutschen zu lassen. Auch hier liegt ein deutlicher Effizienzgewinn. Im in FIG 23 und FIG 24 dargestellten Ausführungsbeispiel muss das Rückführsystem des Erdgeschosses mangels Gefälle in herkömmlicher Weise manuell erfolgen. Die vom Personal zurückzulegenden Wege sind hier aber auch nicht so weit.

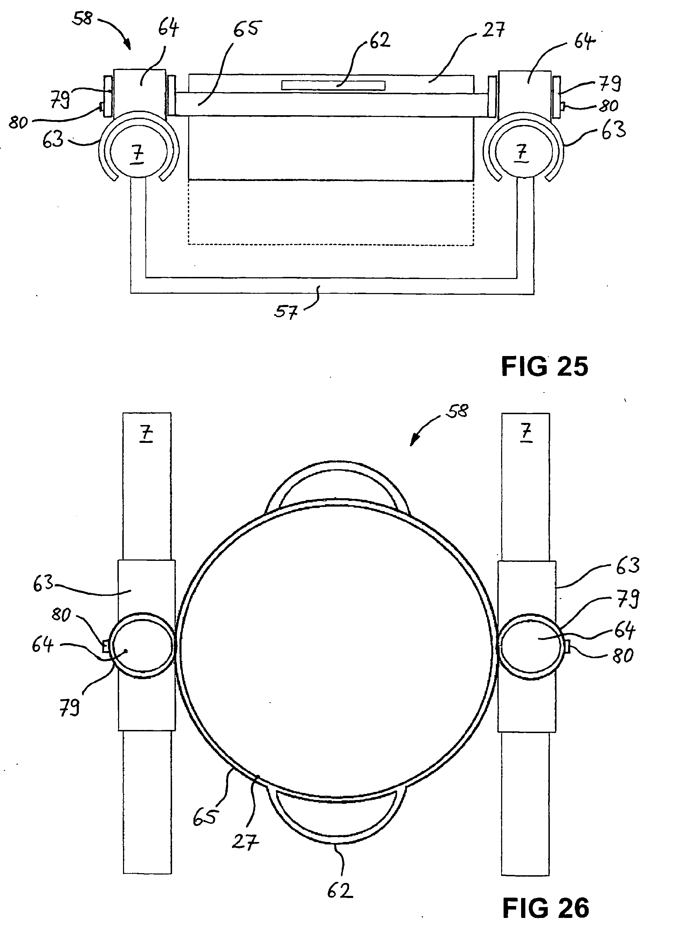

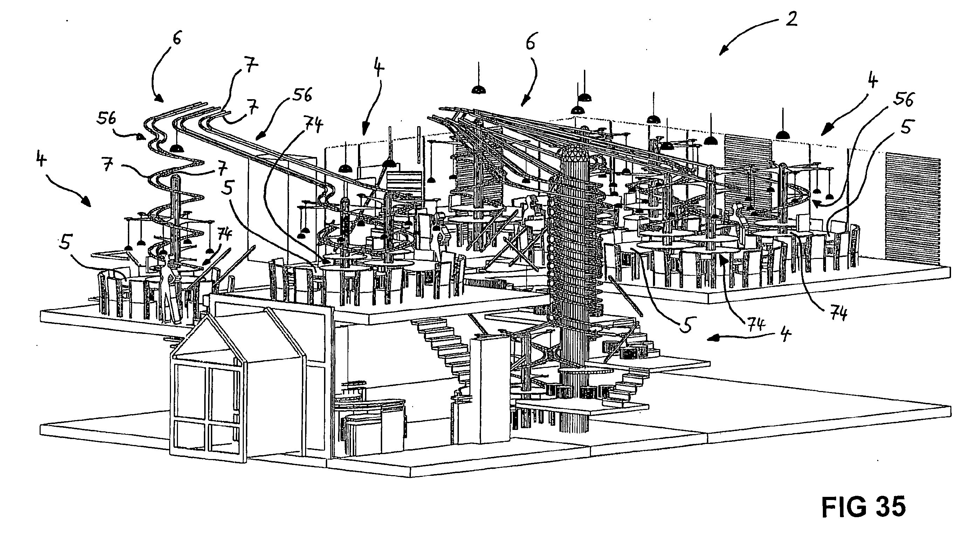

FIG 35 zeigt eine weitere Umsetzung eines Ausführungsbeispiels eines Restaurantsystems 1 nach der Erfindung dargestellt, und zwar wiederum in einem Industrie- bzw. Gewerbebau. Die Räumlichkeiten, in denen das Restaurantsystem installiert werden soll, liegen in einer etwa 7 Meter hohen Halle. Dargestellt sind - verteilt auf mehrere Ebenen - Gästebereiche 4 mit Tischen 5 für Gäste, die über ein Transportsystem 6 für Speisen und Getränke mit einem nicht dargestellten, höher als die Gästebereiche 4 angeordneten Arbeitsbereich verbunden sind. Das Transportsystem 6 ist als Schienensystem mit zahlreichen Schienenwegen 56 ausgebildet. Ein Schienenweg 56 beginnt jeweils im nicht dargestellten Arbeitsbereich und endet an einem der Tische 5. Der Transport von Speisen und Getränken vom Arbeitsbereich zu den Gästebereichen 4 bzw. zu den einzelnen Tischen 5 erfolgt mittels Schwerkraft. Das Schienensystem 6 umfasst hierzu Gleitschienen 7, wobei jeder Schienenweg 56 aus zwei parallel laufenden Gleitschienen 7 gebildet ist. Jede dieser Schienen 7 weist einen im Wesentlichen runden Querschnitt auf. Der Abstand zwischen den beiden jeweils einander zugeordneten Schienen 7 eines Schienenweges 56 ist zumindest im Wesentlichen über den gesamten Schienenweg 56 konstant. Die Anbringung der Schienen 7 und der Schienenwege 56 erfolgt über geeignete, in FIG 35 nicht dargestellte Halterungen 57. Diese Halterungen 57 sind bevorzugt an der jeweiligen Unterseite einer Schiene 7 angebracht (vgl. hierzu beispielsweise FIG 25).

Bevorzugt bestehen die Schienen aus Metall, insbesondere Edelstahl, und sind in gewünschter Weise geformt bzw. gebogen. Die einzelnen Schienenwege 56 können geradlinig ausgebildet sein, es sind aber auch Kurven oder Spiralen und auch Loopings (nicht dargestellt) möglich. In der Regel weist ein Schienenweg 56 sowohl geradlinige als auch gekrümmt bzw. spiralförmige Abschnitte auf.

Selbstverständlich sind auch andere Ausgestaltungen des Schienensystems möglich. Beispielsweise kann ein Schienenweg auch aus vier rohrförmigen, im Wesentlichen kreisförmige oder rechteckige Querschnitte aufweisenden Schienen aufgebaut sein, die relativ zueinander in zwei Ebenen angeordnet sind. Jeweils zwei Schienen mit kleinerem Durchmesser befinden sich unterhalb der zu transportierenden Behältnisse, zwei weitere Schienen mit größerem Durchmesser dienen als seitliche Führungen zur Begrenzung des Schienenweges. Ein derartiges Schienensystem eignet sich insbesondere, um direkt und ohne weitere Hilfsmittel geeignete Behältnisse, beispielsweise Edelstahltöpfe, zu transportieren. Um einerseits die Geräuschkulisse zu reduzieren und andererseits ein günstiges Gleitverhalten der Behältnisse (insbesondere Edelstahltöpfe) auf den Schienen zu erreichen, sollte hierbei an den Stellen, an denen die Schienen beim Transport Kontakt mit den Behältnissen bzw. Edelstahltöpfen haben, Kunststoffe aufgebracht sein.

Versuche mit einem derartigen Schienensystem haben gezeigt, dass jeweils positive Korrelationen bestanden zwischen zunehmender Feuchtigkeit und Rutschgeschwindigkeit, zwischen größerer Hitze (ab etwa 60° C aufwärts) und Rutschgeschwindigkeit sowie dem Gewicht der rutschenden Behältnisse und deren Rutschgeschwindigkeit. Besonders schnelles Rutschen ergab sich bei schweren heißen Edelstahltöpfen, die einen feuchten Unterboden hatten.

Eine weitere Beobachtung war, dass die Behältnisse mit zunehmender Geschwindigkeit und zunehmendem Eigengewicht in den Kurven in relativ starke Drehbewegungen versetzt wurden. Dies resultiert daraus, dass die Behältnisse bei höherer Geschwindigkeit insbesondere in Kurven stärker gegen die äußere Begrenzung der Schiene gedrückt werden. Durch Reibung an den Begrenzungsschienen wurden die Behältnisse in eine Drehbewegung versetzt. Je höher die Reibungskraft (aufgrund des Gewichtes der Behältnisse und aufgrund der Geschwindigkeit), umso schneller drehten sich die Behältnisse. Dies kann dazu führen, dass das darin befindliche Essen bzw. die Getränke in unerwünschter Weise durcheinander gewirbelt werden. Probleme ergaben sich ferner beim Transport höherer Flaschen (z.B. 0,5 Liter Flaschen), da diese weit über die seitlichen Führungsschienen hinausragten (da der Höhenunterschied zwischen unteren Schienen und seitlichen Führungsschienen gleich blieb). Dies kann zu einer ungünstigen Lage des Schwerpunkts der Behältnisse beim Transport führen und damit zu unbefriedigenden Transportergebnissen.

Ein den Anforderungen entsprechendes Gleitverhalten der Behältnisse lies sich insbesondere durch ein Anfeuchten der Behältnisse an ihren Gleitflächen erreichen. Dadurch wurde immer eine für einen ordnungsgemäßen Transport erforderliche Mindestgeschwindigkeit erreicht.

Um das Überschreiten einer für eine Stelle des Schienenweges vorgegebenen maximalen Geschwindigkeit zu verhindern, ist es zweckmäßig, die Geschwindigkeit laufend durch Sensoren zu überwachen und bei Grenzwertüberschreitung das Behältnis durch geeignete Einrichtungen bzw. Vorrichtungen (beispielsweise Bremssysteme) abzubremsen. Das Vorsehen einer derartigen Sensorik und das Vorsehen von Bremssystemen ist jedoch vergleichsweise kostenintensiv, aufwändig und bringt im laufenden Betrieb einen erheblichen Wartungsaufwand mit sich.

Dies gestaltet sich bei dem in FIG 35 gezeigten und bereits vorstehend beschriebenen Schienensystem 6, bei dem jeder Schienenweg 56 aus lediglich zwei parallelen Schienen 7 besteht, wesentlich einfacher. Im Zusammenwirken mit geeigneten Transporthilfsmitteln 58, 59, 60, 61 (auch: Gleitvorrichtungen), wie beispielhaft in FIG 25 bis FIG 31 dargestellt und nachstehend erläutert, ergibt sich ein rein mechanisches, selbststeuerndes System, bei dem das Auftreten überhöhter Geschwindigkeiten auf einfache Weise unterbunden ist.

Ein wesentlicher Aspekt des in der Umsetzung gemäß FIG 35 gezeigten Schienensystems ist die Verwendung von lediglich zwei Schienen 7 je Schienenweg 56. Diese Schienen 7 sind derart angeordnet, dass die Speisen und Getränke bzw. deren Behältnisse zwischen den Schienen 7 transportiert werden. Im Vergleich zu der vorbeschriebenen Lösung mit vier Schienen entfallen somit die beiden unteren Schienen, es bleiben lediglich die beiden seitlichen Schienen. Bei den Schienen 7 handelt es sich wiederum bevorzugt um rohrförmige, im Querschnitt im Wesentlichen kreisförmige Metallschienen, insbesondere Edelstahlschienen. Es können auch anders geformte Schienen eingesetzt werden, beispielsweise Schienen mit rechteckigem Querschnitt. Die beiden parallel verlaufenden Schienen 7 sind an ihrer Unterseite, von unten her, verbunden, um den parallelen Verlauf sicher zu stellen. Gleichzeitig ermöglichen diese Verbindungen die Befestigung der Schienen im Restaurantsystem 2 bzw. Restaurant.

Der Transport der Speisen bzw. Getränke über die Schienenwege 56 erfolgt in geeigneten Behältnissen bzw. Transporthilfsmitteln, die üblicherweise im Arbeitsbereich auf den jeweiligen Schienenweg 56 gesetzt werden und dann aufgrund des Höhenunterschieds zwischen Arbeitsbereich und Gästebereich mittels Schwerkraft auf den Schienen 7 entlang zum jeweiligen Tisch 5 gleiten.

Derartige Transporthilfsmittel 58, 59, 60, 61 (auch: Gleitvorrichtungen) sind - wie bereits angesprochen - beispielhaft in FIG 25 bis FIG 31 dargestellt.

FIG 25 zeigt in einer Seitenansicht und FIG 26 in Draufsicht das auf einen Schienenweg 56 aufgesetzte Transporthilfsmittel 58. Im Querschnitt zu erkennen sind die beiden Schienen 7, die über eine hier als Abstandhalter ausgebildete Halterung 57, die jeweils an der Unterseite der Schienen 7 angebracht ist, miteinander verbunden sind. Zwischen den beiden Schienen 7 ist das Transporthilfsmittel 58 mit einem eingesetzten Behältnis 27, hier ein Topf mit zwei Griffen 62, angeordnet. Das Transporthilfsmittel 58 weist an gegenüberliegenden Seiten zwei Führungskomponenten 63, vorzugsweise aus Kunststoff, auf, die in ihrem Querschnitt die Form eines Kreisbogens aufweisen. Diese Führungskomponenten 63 umgreifen jeweils eine der Schienen 7 um mehr als die Hälfte des Umfangs der Schiene 7, insbesondere um etwa oder mindestes zwei Dritteln ihres Umfangs oder um etwa oder mindestens drei Viertel ihres Umfangs. Das Umgreifen erfolgt im dargestellten Ausführungsbeispiel von oben her, d.h. die Führungskomponenten sind nach unten hin offen. Dies ist notwendig, da die beiden Schienen 7, auf denen diese Führungskomponenten 63 gleiten, in regelmäßigen Abständen von unten her verbunden sind, wie bereits erläutert. Ohne die Öffnung nach unten könnten die Führungskomponenten 63 diese Halterung 57 nicht passieren.

Die Führungskomponenten 63 können beispielsweise aus Kunststoffrohren gebildet sein. Ihr Länge ist grundsätzlich nahezu beliebig, wobei zu beachten ist, dass kürzere Führungskomponenten beim Gleiten auf den Schienen 7 eine größere Neigung zur Verkantung ("Schubladeneffekt") aufweisen als längere Führungskomponenten.

Es ist von Vorteil, wenn der Innendurchmesser der Führungskomponenten 63 etwas größer ist als der Außendurchmesser der Schienen 7, auf denen die Führungskomponenten 63 gleiten sollen. Dies ermöglicht einerseits einen gewissen Ausgleich der Schienentoleranzen und ermöglicht andererseits das Gleiten entlang gekrümmter Schienen 7, d.h. entlang eines Schienenweges mit kurvigem oder spiralförmigem Verlauf.

Auf der Oberseite jeder Führungskomponente 63 ist ein Bolzen 64 angebracht. Auf diese beiden Bolzen 64 ist eine Ringkomponente 65 aufgesteckt. Hierzu weist die Ringkomponente 65 seitlich zwei fest mit ihr verbundene Ringelemente 79 auf, die auf die Bolzen 64 aufgeschoben sind. Auf diese Weise sind die beiden Führungskomponenten 63 und ihre Bolzen 64 über die Ringkomponente 65 mit ihren beiden Ringelementen 79 miteinander verbunden, und zwar beweglich. In die Ringkomponente 65 können Behältnisse 27 oder Vorrichtungen für Speisen und Getränke, beispielsweise Töpfe oder Getränkehalterungen, eingehängt und somit mittels des Transporthilfsmittels 58 entlang des Schienenweges 56 transportiert werden. Als Beispiel ist in FIG 25 und FIG 26 ein Topf mit zwei Griffen 62 dargestellt. Die gestrichelte Linie in FIG 25 zeigt an, wie tief die Behältnisse maximal durch die Ringkomponente 65 hindurch nach unten reichen sollten.

Die bewegliche Verbindung zwischen Führungskomponenten 63 und Ringkomponente 65 ist von Vorteil für den vorgenannten Schubladeneffekt, d.h. die erwünschte Verkantung der Führungskomponenten 63 und damit des Transporthilfsmittels 58 auf den Schienen 7. Dadurch wird die Transportgeschwindigkeit begrenzt. Ohne diesen Schubladeneffekt könnte es sein, dass die Transporthilfsmittel schneller als erwünscht entlang der Schienen 7 gleiten.

Die an der Ringkomponente 65 vorgesehenen Ringelemente 79 weisen eine (nicht dargestellte) durchgehende Ausnehmung bzw. Nut auf, durch die jeweils ein Haltestift 80, insbesondere eine Schraube 80, an dem jeweiligen Bolzen 64 angebracht bzw. anbringbar ist. Hierbei rangt der Haltestift 80 mit Spiel in die Ausnehmung bzw. Nut hinein bzw. durch diese hindurch, d.h. die Ausnehmung bzw. Nut hat größere Abmessungen als der Durchmesser des Haltestifts bzw. der Schraube 80 im Bereich der Ausnehmung (ein gegebenenfalls vorhandener Stift- bzw. Schraubenkopf kann selbstverständlich wieder einen größeren Durchmesser als die Ausnehmung bzw. Nut aufweisen). Durch das Spiel zwischen Haltestift und Ausnehmung bzw. Nut bleibt das Ringelement 79 gegenüber dem jeweiligen Bolzen 64, auf den es aufgesteckt ist, beweglich. Gleichzeitig bleibt jedoch das Transporthilfsmittel 58 insgesamt auch beim Abnehmen von den Schienen 7 eine Baueinheit, die nicht in mehrere Teile zerfällt. Über die Haltestifte bzw. Schrauben 80 bleiben Führungskomponenten 63 und Ringkomponente 65 des Transporthilfsmittels 58 miteinander verbunden.

Bei bestimmten Schienenführungen, insbesondere über Gäste hinweg, kann es sinnvoll sein, zusätzliche Sicherheitsvorkehrungen in dem Transporthilfsmittel 58 vorzusehen, um zu verhindern, dass ein Gast beim Brechen des Transporthilfsmittels, beispielsweise an Schweißnähten, durch herunterfallende Teile zu Schaden kommt. Beispielsweise kann die Ringkomponente 65 auch oval geformt sein, und zwar derart, dass der längere Durchmesser des Ovals über die beiden Schienen 7 hinausragt, insbesondere auch noch über die beiden Bolzen 64. Beispielsweise könnten dann die Ringelemente 79 im Inneren der Ringkomponente 65 angeordnet und an deren Innenseite befestigt sein. Bei einem Brechen des Transporthilfsmittels 58, beispielsweise einer Schweißnaht zwischen Ringkomponente 65 und Ringelement 79, würde dann die Ringkomponente 65 an sich noch auf den Führungskomponenten 63 bzw. den Schienen 7 aufliegen und könnte nicht mitsamt Transportgut herunterfallen.

Alternativ oder additiv könnten an der Ringkomponente 65, insbesondere an deren Unterseite, Stäbe angebracht sein, die oberhalb der Schienen 7 über diese hinweg ragen. Diese Stäbe werden während des Transports mitgeführt. Bricht das Transporthilfsmittel 58, würde das Transporthilfsmittel 58 weiterhin über diese Stäbe auf den Führungskomponenten 63 bzw. Schienen 7 aufliegen und könnte nicht mitsamt Transportgut herunterfallen.

Auch könnte zwischen den Bolzen 64 und der Ringkomponente 65 eine Art Sicherheitsgurt angebracht werden, beispielsweise eine Nylonschnur. Bricht das Transporthilfsmittel 58, beispielsweise eine Verbindung zwischen Ringelement 79 und Ringkomponente 65, wäre die Ringkomponente 65 weiterhin über den Sicherheitsgurt am Bolzen 64 angebracht, das Transporthilfsmittel 58 samt Transportgut könnte nicht herunterfallen.

Bei allen genannten Sicherheitsvorkehrungen würde das Transporthilfsmittel 58 auch bei einem Bruch weiterhin auf den Schienen 7 gehalten, es kann weiter gleiten oder auf den Schienen 7 abgebremst werden. Dies vorgenannten Überlegungen lassen sich analog auch alle anderen Arten von Transporthilfsmitteln übertragen.

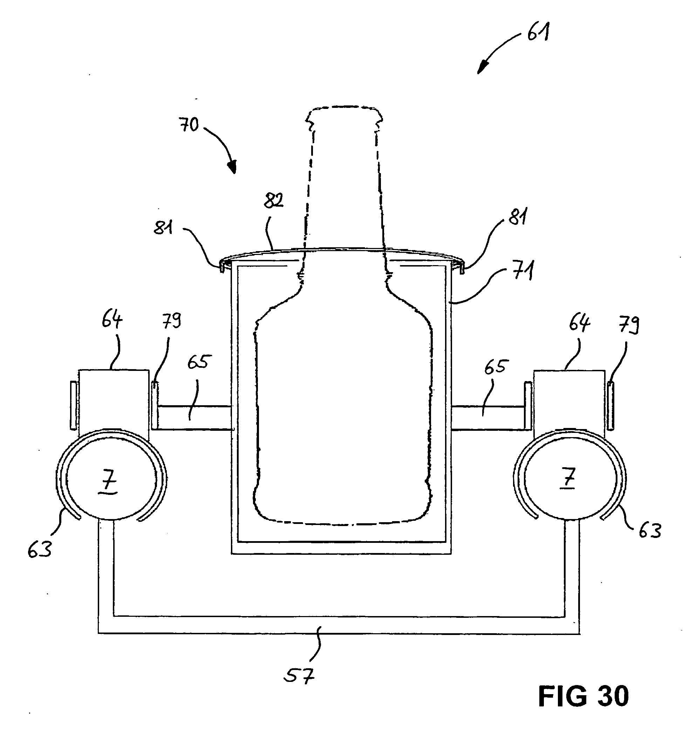

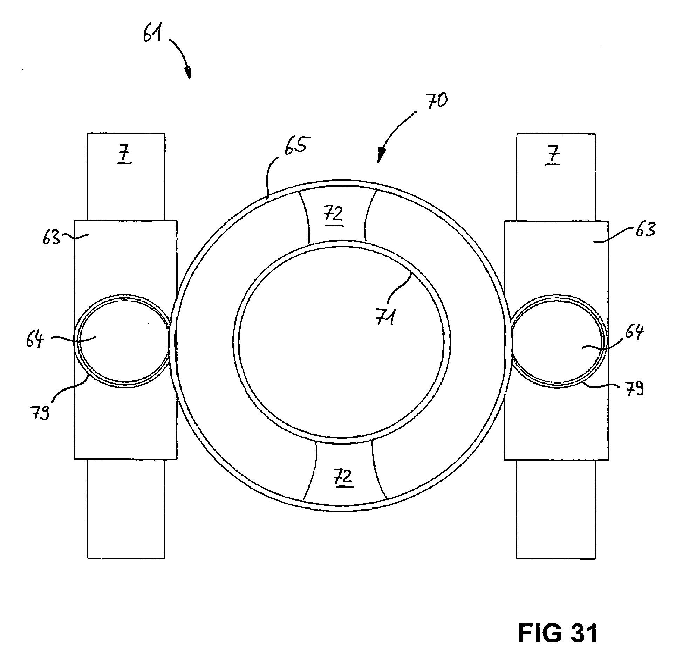

Alternativ zum vorbeschriebenen Einhängen können die Behältnisse bzw. Vorrichtungen, insbesondere für die Aufnahme von Flaschen, Karaffen oder Ähnlichem (z.B. Getränkehalterungen), auch fest in die Ringkomponente 65 integriert sein, beispielsweise eingeklebt oder eingeschweißt. Auch eine einstückige Ausbildung bzw. Fertigung mit der Ringkomponente 65 ist möglich. Ein Ausführungsbeispiel hierzu ist in FIG 30 und FIG 31 gezeigt. Hier ist in die Ringkomponente 65 eine Flaschenhalterung 70 integriert. Diese Flaschenhalterung 70 weist eine Flaschenaufnahme 71 in Form eines Rohres mit einem Boden an seiner Unterseite auf, die vorzugsweise mittig in der Ringkomponente 65 angeordnet ist und die über Haltestege 72 mit der Ringkomponente 65 verbunden ist (durch Einkleben, Einschweißen oder durch einstückige Ausbildung). Wie in FIG 30 zu erkennen, können an der Flaschenaufnahme 71 Befestigungseinrichtungen 81, beispielsweise Haken, angebracht sein, über die wiederum ein Sicherungsgurt 82 für die Flasche anbringbar ist.

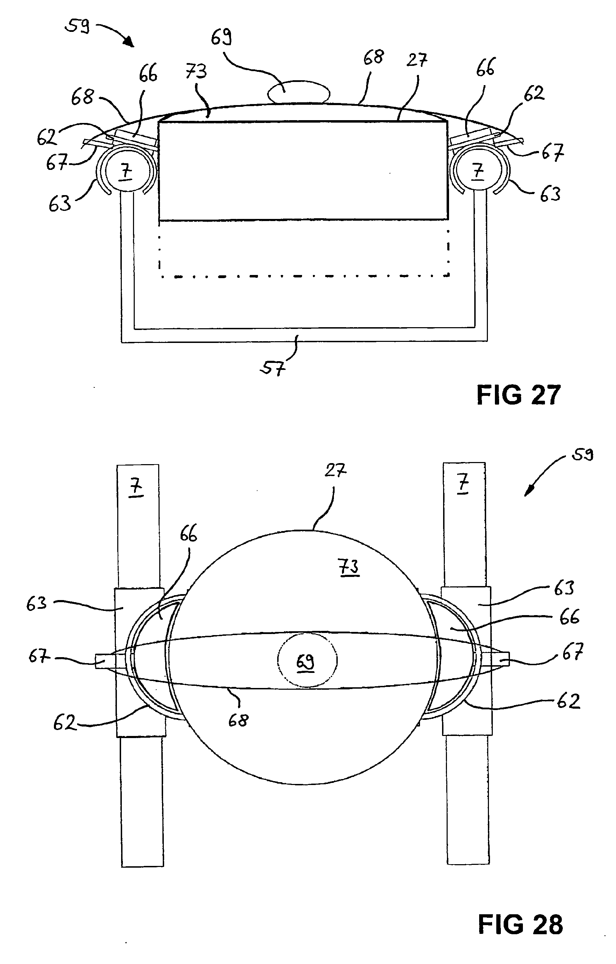

Eine Alternative zur oben beschriebenen Ringkomponente zeigt das in FIG 27 und FIG 28 dargestellte Transporthilfsmittel 59. Auf der Oberseite jeder Führungskomponente 63 ist hier jeweils ein Formkörper 66 angebracht. Diese Formkörper 66 sind derart ausgebildet, dass jeweils ein Griff 62 des zu transportierenden Topfes bzw. Behältnisses 27 in sie eingehängt werden kann, wie dies in FIG 27 und FIG 28 dargestellt ist. Hierbei umgreift jeweils der Griff 62 den Formkörper 66. Auf diese weise ist das Behältnis 27 bzw. der Topf während des Transports in dem Transporthilfsmittel 59 gehaltert.

In FIG 27 und FIG 28 ist weiter gezeigt, dass an den Führungskomponenten 63 oder den Formkörpern 66 bzw. den Bolzen 64, insbesondere seitlich an diesen, Haltevorrichtungen 67 vorgesehen sein können, an denen eine Befestigungseinrichtung 68, beispielsweise ein Gummiband, anbringbar ist, mittels der sich beispielsweise ein Deckel 73 (in FIG 27 und FIG 28 mit Griff 69) während des Transports auf dem Behältnis 27 bzw. auf dem Topf haltern lässt.

Auch ist es möglich, bei einem in die Ringkomponente 65 gemäß FIG 25 und FIG 26 eingehängten Behältnis einen Deckel mittels eines Bandes, insbesondere Gummibandes, dadurch auf dem Behältnis zu arretieren, dass dieses um die gegenüber liegenden Griffe 62 herum und dann über dem Deckel gespannt wird. Gemäß einer Ausführungsvariante können hierbei auch zwei kleine Topflappen verwendet werden, welche die Form der Griffe 62 aufweisen, und die über die gegenüber liegenden Griffe 62 gestülpt werden können. Zwischen diesen beiden Topflappen könnte ein Gummiband befestigt sein, das durch seine Spannung den Deckel während des Transportes auf dem Behältnis hält. Dieses Gummiband könnte mittig eine Öffnung aufweisen, durch die im angebrachten Zustand der Griff des Deckels hindurchgreift, wodurch der Deckel zusätzlich arretiert wird. Vorteil dieser Lösung ist ferner, dass bei heißen Behältnissen bzw. Töpfen ein problemloses Anfassen der Griffe 62 ermöglicht wird.

In analoger Weise kann auch ein Band bzw. eine Art Sicherheitsgurt für Flaschen oder Weinkaraffen oder Ähnliches vorgesehen werden. Dieses Band bzw. dieser Gurt könnte an zwei Punkten des Transporthilfsmittels eingehängt werden und dann beispielsweise über den Hals der Flasche bzw. Karaffe gezogen werden, und zwar derart, dass diese auch bei Unfällen während des Transports nicht aus dem Transporthilfsmittel herausfallen kann. Ein derartiges Band bzw. ein derartiger Gurt kann selbstverständlich auch an einem oder an seinen beiden Enden fest an dem Transporthilfsmittel installiert sein. Das Band bzw. der Gurt weist vorzugsweise auch eine Öffnung auf, insbesondere eine dehnbare, von Gummi gebildete Öffnung, durch die beispielsweise der Flaschenhals gesteckt werden kann. Das Band bzw. der Gurt im Bereich der Öffnung legt sich hierbei fest an den Hals der Flasche an. Durch die Fixierung des Bandes bzw. Gurtes an dem Transporthilfsmittel wird dieses bzw. dieser nach der Entnahme der Flasche einfach mit dem Transporthilfsmittel weiter geführt. Somit fällt am Tisch des Gastes kein einzelnes Band bzw. kein einzelner Gurt als zusätzliche Komponente, die eigens entsorgt werden muss, an. Dies erhöht den Komfort für den Gast.

Zur Fixierung der Behälter, Flaschen bzw. Karaffen in speziellen Einsätzen oder in den Flaschenhalterungen 70, insbesondere in der Flaschenaufnahme 71, können dort auch spezielle Einlagen, insbesondere Gummieinlagen, vorgesehen werden. Diese Einlagen sind derart ausgebildet, dass die zu transportierenden Behälter bzw. Flaschen bzw. Karaffen für den Transport ein Stück weit in diese Einsätze hinein zu drücken sind und auf diese Weise verhältnismäßig sicher im jeweiligen Einsatz bzw. in der jeweiligen Flaschenaufnahme und damit im jeweiligen Transporthilfsmittel gehalten werden. Beim Herausziehen der Behälter, Flaschen usw. ist dann ein gewisser Widerstand zu überwinden. So könnten die Behälter, Flaschen, usw. auch ohne Sicherung durch zusätzliche Bänder oder Gurte sicher im Transporthilfsmittel gehalten und transportiert werden, eine zusätzliche Sicherung durch derartige Bänder bzw. Gurte ist jedoch selbstverständlich dennoch möglich. Gemäß einer Weiterbildung könnte die Flaschenhalterung 70 (bzw. auch weitere Halteeinrichtungen für Behältnisse), insbesondere die Flaschenaufnahme 71, beweglich, insbesondere schwenkbar oder drehbar, vorzugsweise um eine parallel zur jeweiligen Schienenebene und senkrecht zur jeweiligen Bewegungsrichtung verlaufende Drehachse, an der Ringkomponente 65 angebracht sein. Jeder Schienenweg 56 weist eine Neigung auf. Ist die Flaschenaufnahme 71 unbeweglich an der Ringkomponente 65 befestigt, hat sie und die darin befindliche Flasche die gleiche Neigung wie der Schienenweg 56 an der entsprechenden Stelle. Bei der vorbeschriebenen beweglichen Lösung hingegen wir die Flasche bzw. allgemein der Behälter immer in zumindest nahezu aufrechter Haltung transportiert, mit allen hiermit verbundenen Vorteilen. Dies ist analog für den Transport von Speisen realisierbar.

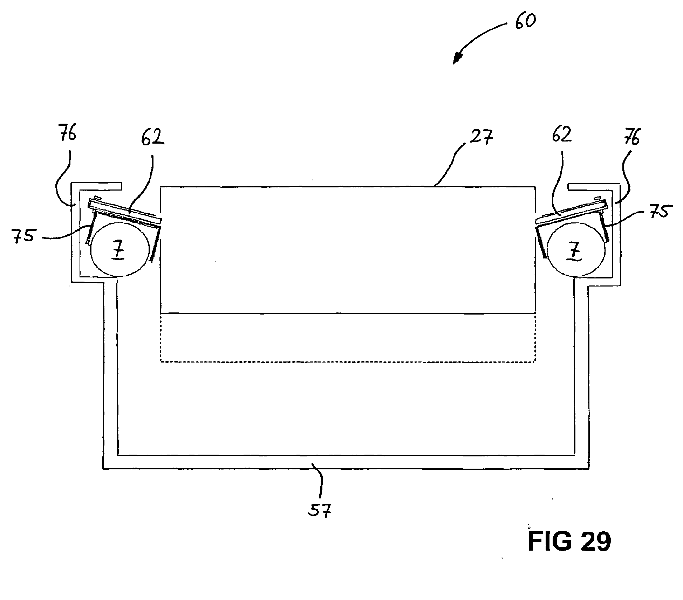

Ein alternatives Transporthilfsmittel 60 mit einer zu den bisher beschriebenen Führungskomponenten 63, die die Schienen 7 zu mehr als der Hälfte, insbesondere mindestens zwei Dritteln, ihres Umfangs von oben her umgreifen, alternativen Führungskomponenten 75 ist in FIG 29 gezeigt. Diese Führungskomponente 75 weist nicht die Form eines Kreisbogens auf, vielmehr ist sie im Querschnitt als nach unten offenes Rechteck ausgebildet. Dieses umfasst den Umfang der Schiene 7 lediglich zur Hälfte, d.h. das Transporthilfsmittel 60 ist ohne weitere Einrichtungen an jeder Stelle von den Schienen 7 abnehmbar bzw. das Transporthilfsmittel 60 könnte aus der Schiene ausbrechen. Dies wird durch ein seitlich an die Halterung 57 angebrachtes U-Profil 76 verhindert. Dieses U-Profil 76 sorgt dafür, dass die Führungskomponenten 75 nicht aus den Schienen 7 springen können. Die Führungskomponenten 75 können in einer der vorbeschriebenen Weisen oder auch auf andere Art mit dem zu transportierenden Behältnis 27 verbunden werden. In FIG 29 ist eine Verbindung über die Griffe 62 des Behältnisses 27 gezeigt. Ein Vorteil des Transporthilfsmittels 60 nach FIG 29 liegt darin, dass sich dieses an Stellen, wo dies gewünscht ist und dementsprechend keine U-Profile 76 vorgesehen sind, problemlos aus den Schienen 7 entnehmen lässt bzw. auf die Schienen 7 setzen lässt, die Entnahme bzw. Aufgabe der Transporthilfsmittel 60 ist nicht auf Schienenende bzw. Schienenanfang beschränkt.

Im vorgenannten Ausführungsbeispiel nach FIG 29 sind die Schienen 7 mit kreisförmigem Querschnitt ausgebildet. Grundsätzlich sind - sowohl in diesem Beispiel als auch in allen anderen Beispielen und auch generell - auch Schienen mit anderen Querschnitten verwendbar, beispielsweise mit ovalem oder rechteckigen Querschnitt. Hierbei müssen gegebenenfalls die jeweils mit den Schienen korrespondierenden Teile, beispielsweise Transporthilfsmittel oder Behältnisse, entsprechenden angepasst sein.

Die vorbeschriebenen Transporthilfsmitteln 58, 59, 60, 61 mit jeweils zwei Führungskomponenten 63 bzw. 75 aus Kunststoff, die selbstverständlich auch z.B. von klappbaren Edelstahlteilen eingehaust sein können oder aus anderen gleitenden Materialien bestehen oder diese umfassen können, wobei nur die eigentlichen Gleitflächen aus gleitfähigem Material gebildet sein müssen, der Rest kann aus beliebigen, auch unterschiedlichen Materialien bestehen, werden für den Transport zusammen mit einem Behältnis für Speisen bzw. Getränke auf die beiden Schienen 7 eines Schienenweges 56 aufgeschoben bzw. aufgesteckt. Die beiden Führungskomponenten 63 bzw. 75 sind hierbei entweder über das aufgesteckte Behältnis (vgl. FIG 27/28 bzw. FIG 29) oder über die Ringkomponente 65 (vgl. FIG 25/26), die über die Bolzen 64 mit beiden Führungskomponenten 63 bzw. 75 verbunden ist und in die das Behältnis eingesetzt ist, miteinander verbunden.

Auf geraden Abschnitten der Schienenwege 56 rutschen die Transporthilfsmittel 58, 59, 60, 61 mit den Behältnissen für Speisen bzw. Getränke relativ gleichmäßig durch das Gefälle in Richtung des jeweiligen Tisches 5 im Gästebereich 4. Hier ist es natürlich auch möglich, dass verschiedene Behältnisse (z.B. Töpfe) beispielsweise aufgrund ihres jeweiligen Gewichtes langsamer oder schneller laufen. Um eine gewisse Mindestgeschwindigkeit zu gewährleisten, kann vorgesehen werden, die Gleitflächen der Führungskomponenten 63 zu befeuchten.

Rutscht ein Transporthilfsmittel 58, 59, 60, 61 mit einem Behältnis für Speisen und Getränke in eine Kurve, so möchte das Transporthilfsmittel eigentlich aufgrund der Trägheit nicht um die Kurve, sondern geradeaus fahren. Die auf den Schienen 7 sitzenden Führungskomponenten 63 (nachfolgend immer: bzw. 75) sorgen jedoch dafür, dass das Transporthilfsmittel dem Schienenweg 56 auch in Kurven folgt, und zwar ohne dass hierbei das Transporthilfsmittel oder das Behältnis in Drehungen versetzt wird. Jedoch verkanten die Führungskomponenten 63 in Kurven verstärkt mit den Schienen 7. Dies erhöht in Kurven die Reibung zwischen Schienen 7 und Führungskomponenten 63, die Gleitgeschwindigkeit der Transporthilfsmittel wird abgebremst. Hier kommt der bereits obenstehend erwähnte "Schubladeneffekt" zur Geltung: Je kürzer die Führungskomponenten 63 sind, desto mehr verkanten sie. Je mehr die Länge der Führungskomponenten 63 (in einer Ausführungsvariante: der Kunststoffrohrstücke mit Öffnung an der Unterseite) dem Durchmesser der Schienen 7, auf denen sie gleiten, entspricht, umso mehr verkanten die Führungskomponenten 63 bereits auf geraden Abschnitten der Schienenwege 56 häufig. Spätestens bei einer Länge der Führungskomponenten 63, die doppelt so lang ist wie der Durchmesser der Schienen 7, auf denen sie gleiten, verkanten und bremsen die Führungskomponenten 63 lediglich noch in den Kurven.

Hinzu kommt, dass die Führungskomponenten 63 bei höheren Geschwindigkeiten stärker verkanten als bei niedrigeren. Dies bedeutet, das die Führungskomponenten 63 und damit die Transporthilfsmittel bei höherer Geschwindigkeit stärker als bei niedrigerer Geschwindigkeit abgebremst werden.

Dies wiederum hat zur Folge, dass auch schweres Transportgut, das ohne den "Schubladeneffekt" mit deutlich höherer Geschwindigkeit rutschen würde, möglicherweise sogar mit zu hoher Geschwindigkeit, durch das laufende Verkanten (und andererseits auch durch die sehr guten Gleiteigenschaften der Kunststoff-Führungskomponenten) insgesamt in einer angemessenen, akzeptablen Geschwindigkeit über das Schienensystem zu seinem Ziel transportiert wird.

Aus dem vorstehenden ergibt sich, dass in der Praxis in verschiedenen Situationen (z.B. in Abhängigkeit von der Luftfeuchtigkeit oder dem Transportgewicht) auf verschiedene Führungskomponenten, beispielsweise auf verschieden lange Führungskomponenten, bzw. auf entsprechend ausgestattete Transporthilfsmittel zurückgegriffen werden kann, um so immer eine möglichst ideale bzw. optimale Rutschgeschwindigkeiten zu erreichen.

Der "Schubladeneffekt" wurde bei der Transportvorrichtung 58 mit der Ringkomponente näher untersucht. Hierbei zeigte sich, dass in einer Kurve eine der Führungskomponenten 63, nämlich die innenliegende bzw. auf der Innenschiene (Schiene mit kleinerem Radius) gleitende, bereits ein Stück weiter gerutscht ist als die andere. Das Behältnis ist in diesem Fall schräg zwischen den beiden Führungskomponenten 63 angeordnet. Liegt vor der Kurve beispielsweise die auf der anderen Schiene sitzende Führungskomponente vorne und die auf der späteren Innenschiene sitzende liegt entsprechend schräg hinter der Ringkomponente 65, in der sich das Behältnis befindet, verändert sich diese Konstellation zu Beginn der Fahrt durch die Kurve. Das heißt während der Durchfahrt durch die Kurve liegt dann die auf der Innenschiene sitzende Führungskomponente vorne und die andere hinten. Dieses Wechseln der Positionen der Führungskomponenten bedeutet aber auch immer, dass die Schienen 7 mindestens so weit auseinander liegen müssen, dass die beiden über die Ringkomponente 65 verbundenen Führungskomponenten 63 auch bei paralleler Stellung (d.h. keine Führungskomponente liegt vor der anderen) zwischen die Schienen passen müssen, sonst würde sich beim beschriebenen Wechsel das Transporthilfsmittel zwischen den Schienen festklemmen.

Insgesamt hat die bereits erläuterte Beweglichkeit innerhalb der Transporthilfsmittel den Vorteil, dass Toleranzen im Abstand zwischen den Schienen ausgeglichen werden können. Beispielsweise stellen Toleranzen von bis zu 10 mm bei entsprechender Ausbildung der Transporthilfsmittel kein Problem dar. Das Transporthilfsmittel passt sich durch entsprechende Schrägstellung an den jeweiligen Abstand an, d.h. zeitweise gleiten die Führungskomponenten parallel über die Schienen und zeitweise zueinander versetzt.

Dieses Verkanten und Abbremsen durch Reibung führt dazu, dass die Transporthilfsmittel und damit die Behältnisse in einer angemessenen und relativ gleichmäßigen Geschwindigkeit um die Kurve fahren.

In FIG 35 sind zahlreiche Schienenwege 56 mit Spiralen zu erkennen. Die vorstehend beschriebenen Effekte führen dazu, dass die Transporthilfsmittel und damit die Behältnisse auch dort in einer vernünftigen Geschwindigkeit rutschen.

Spiralen finden sich in der Regel auch am Ende der jeweiligen Schienenwege 56. Wie in FIG 35 zu erkennen ist, gleiten die Behältnisse dort in bzw. auf den beschriebenen Transporthilfsmitteln auf die obere Ebene eines zweistufigen Rondells. Hier kann beispielsweise eine Schiene, z.B. aus Kunststoff oder Edelstahl, die das Rondell auf dessen oberer Ebene zumindest weitgehend umrundet, angeordnet sein, um die Behältnisse auch bei einer höheren Geschwindigkeit sicher auf dem Rondell zu führen. Die Schiene des Schienenweges 56 geht in diesem Fall in diese Schiene des Rondells 74 über. Das Rondell befindet sich in der Mitte des Tisches 5, so dass das Behältnis auf der Schiene des Rondells 74 zumindest weitestgehend um den Tisch bewegbar ist.

Die Anordnung von Schienenspiralen über den Rondellen und damit oberhalb der Tische ermöglicht, dass die Schienen zwischen den Tischen keine Hindernisse darstellen, da die Schienen in diesen Bereichen hoch genug verlaufen, beispielsweise mit einer Mindesthöhe von 2,20 m über dem Boden. Gäste und Personal können sich somit ungehindert zwischen den Tischen bewegen. Erst über den Tischen bzw. den Rondellen wird die jeweilige Resthöhe mittels der Schienenspiralen überbrückt.

Hinsichtlich der Anordnung der Schiede auf dem Rondell ist darauf zu achten, dass deren Abstand zur oberen Ebene des Rondells derart ist, dass die Transporthilfsmittel auf der oberen Rondellebene aufliegen. Die obere Rondellebene ist drehbar. Durch Drehen der oberen Rondellebene (kann von Hand oder angetrieben erfolgen) werden die Transporthilfsmittel, die mit den unteren Enden der Führungen auf dem Rondell aufliegen, weiter transportiert - geführt von den Schienen.

Gemäß einer Variante kann auf dem Rondell auch nur noch eine Schiene vorgesehen sein. Dies reicht für ein geordnetes Weiterführen der Transporthilfsmittel auf der oberen Rondellebene aus.

Nach weitgehender Umrundung der oberen Rondellebene wird die Schiene zu einem Zwischenlagerplatz für Transporthilfsmittel oder direkt in einen Reinigungsbereich geführt. Hierfür können wie beim Transport zu den Tischen zwei parallele Schienen vorgesehen sein. Es ist jedoch auch möglich, wie auf der oberen Rondellebene, auch diesen Weitertransport nur noch mit einer Schiene durchzuführen. Die Transporthilfsmittel hängen dann nur mit einer Führungskomponente an dieser Schiene, d.h. sie hängen an der Schiene herunter. Dies ist unschädlich, da am Tisch alle Behältnisse von den Transporthilfsmitteln entnommen wurden.

Gemäß einer Variante haben die Tische 5 maximal eine Dreiviertelkreisform (vgl. FIG 35). Die Transporthilfsmittel werden also entlang dieses Dreiviertelkreistisches geführt, wobei sich die Gäste hierbei die bestellten Speisen (in Behältnissen wie Töpfen oder Schüsseln usw.) und Getränke (in Form von Flaschen und/oder Gläsern/Tassen und/oder Karaffen usw.) aus den Transporthilfsmitteln entnehmen. Am Ende des Dreivierteltisches können die Transporthilfsmittel im Bereich des Sektors des Rondells, an dem sich kein Tisch befindet, entweder durch Weiterführung der Schiene z.B. in einen Reinigungsbereich weitertransportiert werden. Es ist aber auch möglich, die Schiene zu einem anderen Entsorgungs- bzw. Sammelort für die Transporthilfsmittel zu führen. Beispielsweise können die Schienen nach Umlaufen des Dreiviertelkreises auf dem Rondell in einen Auffangbehälter unter dem Tisch geführt werden. Hierzu ist es auch möglich, die Schienen so zu führen, dass die Transporthilfsmittel zeitweise auf dem Kopf stehend bzw. hängend weitergeführt werden, da die Führungskomponenten die Schienen soweit umfassen, dass sie selbst in dieser Position nicht aus diesen fallen. Erst am Ende der Schienen gleiten die Führungskomponenten aus diesen heraus. Sollten die Schienen in einem Transportbehälter als Sammelbehälter für die Transporthilfsmittel enden, gleiten die Transporthilfsmittel in diesem Transportbehälter hinein und dort aus der Schiene heraus. Von Zeit zu Zeit kann dieser Transportbehälter ausgewechselt bzw. entleert werden.

Insbesondere bei Weiterführung der Transporthilfsmittel auf einer oder zwei Schienen weg vom Tisch in einen separaten Bereich, beispielsweise in ein darunter liegendes Stockwerk oder in einen Keller oder direkt in einen Reinigungsbereich, lässt sich Arbeit und damit störende Hektik am Tisch des Kunden vermeiden.

Um zu vermeiden, dass Transporthilfsmittel vom Tisch zum Reinigungsbereich oder in einen Sammelbehälter weitergeführt werden, obwohl sich das Behältnis bzw. der Topf bzw. sonstiges Transportgut noch in oder auf dem Transporthilfsmittel befindet, kann die Transportvorrichtung vor Verlassen des Tisches bzw. Rondells durch eine Kontrolleinheit geführt werden. Diese kann beispielsweise ausgebildet sein wie ein Höhenkontrollsystem vor Autotunnels oder Tiefgaragen oder Parkhäusern, das heißt über der Schiene ein Hindernis in einer definierten Höhe installiert. Ist das Transporthilfsmittel noch mit einem Behältnis oder Topf oder Getränk usw. bestückt, passt das Transporthilfsmittel nicht durch dieses Prüfhindernis. Erst wenn das Transportgut entnommen ist kann das Transporthindernis auf der Schiene weiterbefördert werden.

Es wurde bereits erläutert, dass die Schienen in geringer Höhe über dem Rondell, und zwar über der oberen Rondellebene, geführt werden, so dass das Transporthilfsmittel auf der Rondelloberfläche aufsitzen, damit diese auch durch das Drehen des Rondells weitergeführt werden können. Da die Höhe der Schienen über dem Rondell zu gering sein kann für das Vorsehen der sonst möglichen Schienenhalterung von unten, bietet sich hier als Alternative an, an der Unterseite der Schienen bewegliche Stützeinrichtungen, beispielsweise Rollen, Kugellager, Gleitlager, Gleiter, usw., anzubringen. Über diese Stützeinrichtungen können die Schienen auf der oberen Rondellebene aufliegen und das Rondell ist trotzdem problemlos drehbar, um beispielsweise die Transporthilfsmittel weiter zu transportieren.

Selbstverständlich kann die obere Ebene des Rondells aus den verschiedensten Materialien bestehen. Für das Weiterführen der Transporthilfsmittel mittels Drehen der oberen Rondellebene ist es jedoch vorteilhaft, wenn die Oberfläche der oberen Rondellebene nicht völlig eben ausgebildet ist, sondern Unebenheiten, z.B. Noppen oder Rillen oder sternförmig auf dem Rondell verlaufende Erhebungen aufweist. Alternativ kann die obere Ebene des Rondells auch nicht vollflächig sondern wie eine Art Rad mit Speichen und Felge ausgeführt sein. An der Felge können die Gäste das Rad in Drehbewegung versetzen. Die Speichen treiben wie die oben genannten Rillen der Vollfläche die Transporthilfsmittel geführt auf der Schiene voran. Diese Lösung hat den Vorteil, dass beispielsweise eine über der oberen Rondellebene liegende Lichtquelle auch Licht auf die untere Rondellebene bringen könnte, auf der sich beispielsweise Teller, Gläser und Besteck für die Gäste befinden. Eine eigene Beleuchtung für die untere Rondellebene könnte somit entfallen.

Gemäß einer Weiterbildung wird die obere Rondellebene durch einen Motor, insbesondere einen elektrischen Motor, angetrieben. Dies hat den Vorteil, dass das auf dem Rondell ankommende Transporthilfsmittel mit seinem Behältnis automatisch weitertransportiert werden kann, beispielsweise wenn bzw. kurz bevor das nächste Transporthilfsmittel an dem Tisch eintrifft. Auf diese Weise können Zusammenstöße zwischen den Transporthilfsmitteln vermieden werden. Ein derartiger Motorantrieb ist vorzugsweise so zu gestalten, dass der Antrieb zu schwach ist, um die Transporthilfsmittel bei noch eingesetzten Behältnissen durch die obigen erläuterte Kontrolleinheit zu schieben. In einem derartigen Fall sollte die Kontrolleinheit den Motor entweder ausschalten oder das Rondell ist an seiner oberen Ebene derart ausgebildet, dass es unter dem Transporthilfsmittel durchdreht, bis ein Weitertransport möglich ist.

Die oben beschriebenen Führungskomponenten 63 können auf ihrer Innenseite, insbesondere auf ihrer Gleitfläche, mit Rädern, Rollen, Kugeln oder (Kugel- oder Nadel-)Lagern ausgestatten sein, um das Gleiten auch bei geringerem Gefällen zu ermöglichen. Selbstverständlich können auf den Schienen 7 auch Räder laufen, die an Transporthilfsmitteln angebracht sind. Diese Räder sollten mit einer geeigneten Bremseinrichtung versehen sein, beispielsweise mit aus der Eisenbahntechnik bekannten Bremseinrichtungen, um überhöhte Geschwindigkeiten zu vermeiden bzw. abzubremsen. Auch können in einer Ausführungsvariante die Rollen, Kugeln, Lager usw. auf den Schienen 7 angeordnet sein. Auch in diesem Fall sollten die Rollen usw. und damit die Transporthilfsmittel bzw. Behältnisse gezielt abgebremst werden.

Damit ein Gast an einem Tisch 5 erkennt, welche der ankommenden Speisen und Getränke für ihn bestimmt sind, ist eine Farbkennzeichnung vorgesehen. Beispielsweise können der Griff 69 des Deckel 73 (z.B. durch farbige Emaillierung, Lackierung, usw.) oder die Ringkomponenten 65 mit einer Farbmarkierung versehen sein, die einer Farbmarkierung am Sitzplatz des Gastes entspricht. Einem Tisch 5 mit beispielsweise 12 Plätzen sind somit an den Sitzplätzen 12 verschiedene Identifizierungsfarben zugeordnet. Bei einer Bestellung kann beispielsweise vorgesehen sein, dass ein Kunde bei einer Bestellung immer auch die Farbe seines Sitzplatzes (die er beispielsweise an einem Farbpunkt vor seinem Sitzplatz am Tisch 5 erkennt) angeben muss. In der Küche ist zur jeweiligen Bestellung dann auch immer diese Farbe hinterlegt. Die z.B. von "Tisch Nummer 3, Farbpunkt grün" bestellten Speisen und Getränke würden dann in einem Transporthilfsmittel und einem geeigneten Behältnis zu Tisch "Nummer 3" transportiert. Der Gast erkennt bereits beim Heranrutschen an der Farbe am Transporthilfsmittel bzw. Behältnis bzw. Deckel bzw. an der Farbe eines angebrachten Fähnchens, Ansteckteils oder sonstigen Kennzeichnungsmittels, dass hier seine Bestellung ankommt.

Ein entscheidender Vorteil der vorgenannten Transporthilfsmittel 58, 59, 60, 61 liegt darin, dass die Behältnisse 29 nicht mehr auf unteren Schienen gleiten, so dass nunmehr tiefere Behältnisse, beispielsweise Flaschen oder Salatschüsseln, durch entsprechende Ausbildung der Transporthilfsmittel und/oder Behältnisse tiefer zwischen den seitlichen Schienen 7 angeordnet werden können, wodurch sich der Schwerpunkt nach unten verlagert. Dies führt wiederum dazu, dass mit diesem System auch große Flaschen, beispielsweise 0,5 Liter Flaschen, ohne Probleme transportiert werden können. Begünstigt wird dies außerdem dadurch, dass die Führungskomponenten 63 der Transporthilfsmittel, die ja zu mehr als der Hälfte, insbesondere zu mindestens zwei Dritteln, um die Schiene 7 greifen, auch bei größeren Kräften nicht aus den Schienen 7 geworfen werden können. Die Flaschen können hierbei durch spezielle Einsätze, in die die Flaschen form- und/oder kraftschlüssig eingestellt werden, in einem Behältnis gehalten werden oder es sind eigene Flaschenhalterungen, in denen die Flaschen ebenfalls form- und/oder kraftschlüssig gehaltert werden, für die Transporthilfsmittel vorgesehen (siehe FIG 30/31). Die Flaschen könnten selbstverständlich zusätzlich wie oben erläutert vergleichbar den Topfdeckeln an den Transporthilfsmitteln befestigt werden.

Die tiefere Anordnung höherer Behältnisse zwischen den Schienen 7 hat auch den Vorteil, dass Schienenwege 56 dichter übereinander angeordnet werden können. Somit lassen sich bei dieser Ausbildung im Vergleich zu anderen Ausbildungen der Schienenwege 56 (beispielsweise der bereits genannten Vier-Schienen-Lösung) mehr Schienenwege 56 in einem vorgegebenen Raumvolumen anordnen, die einzelnen Schienenwege können mit geringerem Abstand zueinander übereinander angeordnet werden, wodurch sich die Gestaltung eines Schienensystems erleichtert. Auf diese Weise ist es vielfach sogar möglich, durch das Zwei-Schienen-System auf Abzweigungen bzw. Weichen im gesamten Schienensystem zu verzichten. Ein entsprechendes Beispiel ist in FIG 35 dargestellt. Insbesondere in dem langen Spiralenturm in der Mitte sind mehrere Schienen dicht übereinander geführt und winden sich spiralförmig um den Turmpfeiler. Dadurch sind vier treppenartig zueinander in der Höhe versetzt angeordnete Tische durch jeweils eine eigene Schiene, ohne Abzweigungen und Weichen, ansteuerbar bzw. mit Speisen und Getränken versorgbar. Zumindest dürfte sich die Zahl an Abzweigungen bzw. Weichen in den meisten Fällen deutlich verringern.

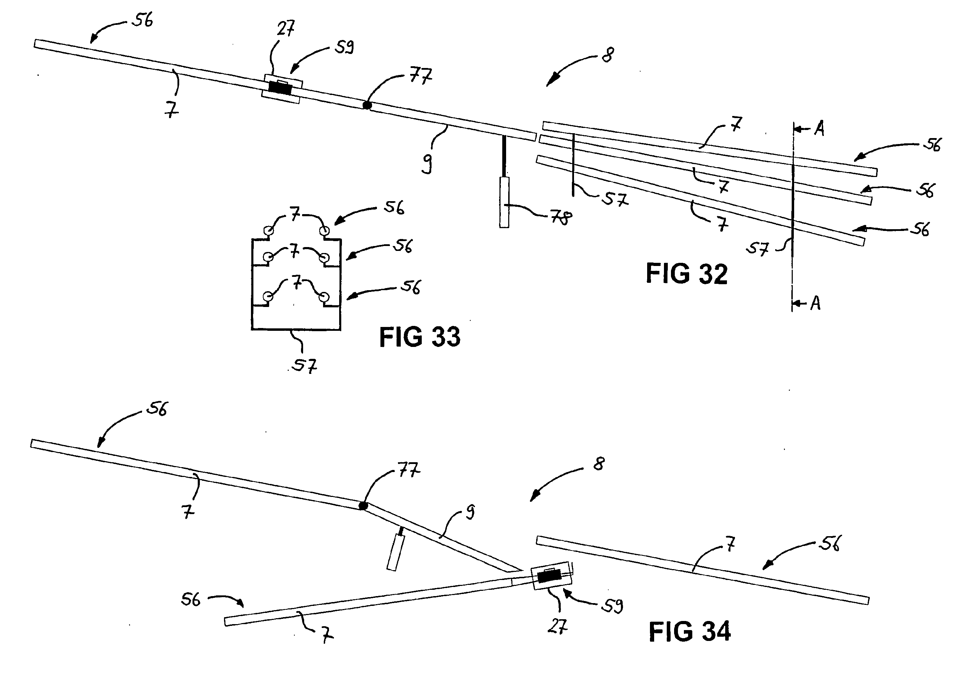

Beispielhaft zeigt FIG 33, die nachstehend noch näher erläutert wird, in einem Querschnitt die mögliche Anordnung von drei Schienenwegen 56 übereinander. Der Abstand zwischen zwei Schienenwegen 56 bzw. deren Schienen 7 muss an Stellen, an denen ein Schienenweg im Vergleich zu den anderen ausgelenkt wird, in vertikaler Richtung zumindest so groß sein, dass das tiefste in dem Transporthilfsmittel hängende Behältnis über die Schienen des darunter liegenden Schienenweges 56 hinweg gleiten kann, ohne die darunter liegende Schiene zu berühren (beispielweise bei einer von der unteren Schiene nicht nachvollzogenen Richtungsänderung der oberen Schiene, oder umgekehrt).

Da sich Abzweigungen 8 bzw. Weichen 9 nicht generell vermeiden lassen, zeigen FIG 32, FIG 33 und FIG 34 hierfür Ausführungsbeispiele für die vorbeschriebene Lösung eines Schienensystems, bei dem jeder Schienenweg 56 von zwei parallelen Schienen 7 gebildet ist. Grundsätzlich ist zwar auch hier - wie aus der Eisenbahntechnik bekannt - ein seitliches Abzweigen möglich und durch entsprechende Weichen 9 realisierbar. Die dargestellten Ausführungsbeispiele zeigen jedoch ein Abzweigen in vertikaler Richtung, d.h. die Weiche 9 führt ein Behältnis nicht in einen seitlich bzw. horizontal versetzten Schienenweg 56, sondern in einen höhenversetzten bzw. vertikal versetzten Schienenweg 56. Die Behältnisse 27 bzw. die Transporthilfsmittel 58, 59, 60, 61 werden somit nach oben oder unten auf andere, über oder unter den weiteren Schienen 7 liegende Schienen 7 geführt.

Das Ausführungsbeispiel gemäß FIG 32 ist in FIG 33 in einer Schnittdarstellung entlang der Line A-A in FIG 32 gezeigt. In FIG 32 ist zu erkennen, dass ein Transporthilfsmittel 59 (ebenso 58, 60, 61) mit einem Behältnis 27 auf einem Schienenweg 56 angerutscht kommt. Dieser Schienenweg 56 spaltet sich in drei übereinander angeordnete Schienenwege 56 auf, die Abzweigung ist mit Bezugszeichen 8 angegeben. Jeder Schienenweg umfasst, wie aus FIG 33 ersichtlich, zwei Schienen 7, die über eine Halterung 57 angeordnet sind. Die Ansteuerung des für den Weitertransport gewünschten Schienenweges 56 erfolgt über eine Weiche 9, hier ein beweglicher Abschnitt des Schienenweges 56 bzw. ein beweglicher Schienenabschnitt, der mit dem restlichen ankommenden Schienenweg 56 über ein Gelenk 77, insbesondere ein Drehgelenk, verbunden ist. Die Weiche 9 wird über einen Druckkolben 78 (oder eine vergleichbare Bewegungseinrichtung) gesteuert, der den beweglichen Abschnitt des Schienenweges hebt oder senkt. Auf diese Weise lässt sich der gewünschte Schienenweg 56 ansteuern.

Liegt die weiterführende Schiene über der Schiene, auf der sich der Behälter aktuell befindet, könnte der bewegliche Schienenabschnitt (die Weiche 9), der mittels des Druckkolbens oder Ähnlichem angehoben (oder abgesenkt) wird, und/oder der darauf folgende Schienenabschnitt auch Rollen oder vergleichbare Gleithilfsmittel auf der Oberfläche aufweisen, die ein Gleiten auch bei geringem Gefälle gewährleistet. So könnte über eine relativ kurze Strecke die für ein Abzweigen notwendige Höhe (wegen der nach unten hängenden Höhe des Behältnisses) gewonnen werden. Im Falle eines Abbiegens auf eine unter der aktuell genutzten Schiene liegenden Schiene könnte umgekehrt auf dem nachfolgenden Schienenverlauf mit stärkerem Gefälle eine schlechter gleitende Oberfläche aufgebracht werden, um überhöhte Geschwindigkeiten zu verhindern.

Eine alternative Abzweigung 8 ist in FIG 34 dargestellt, und zwar eine Abzweigung 8 nach Art eines Mobile. Eine derartige Einrichtung ist auch zur Überbrückung großer Höhenunterschiede geeignet, von Vorteil ist hier insbesondere das Heruntergleiten über mehrer untereinander angeordnete Schienen in einem in seiner horizontalen Erstreckung engem Raum. Die Weiche 9 selbst ist hier wie in FIG 32 ausgebildet, die Steuerung erfolgt über einen Druckkolben 78 oder eine vergleichbare Einrichtung. Allerdings wird das Transporthilfsmittel 59 (ebenso 58, 60, 61) bzw. das Behältnis 27 hier nach unten aus dem ankommenden Schienenweg 56 ausgelenkt auf einen entgegengesetzt geneigten Schienenweg 56. Die beim Auslenken aufgrund der größeren Schienenneigung in der Weiche 9 entstehende erhöhte Geschwindigkeit wird auf dem entgegengesetzt geneigten Schienenweg 56 sofort durch den Anstieg dieses Schienenweges aufgefangen. Transporthilfsmittel 59 und/oder Behältnis 27 werden vollständig abgebremst und aufgrund der Neigung des weiterführenden Schienenweges 56 in entgegengesetzte Richtung beschleunigt. Danach geht es in normalem Gefälle und somit mit normaler Geschwindigkeit weiter.

Damit die Führungskomponenten 63 bzw. 75, insbesondere die zu mehr als der Hälfte, insbesondere zu mindestens zwei Dritteln des Schienenumfangs die Schienen 7 umgreifenden Führungskomponenten 63, auch die weiterführenden Schienen 7 umgreifen können, sind diese in dem Bereich, in dem die Transporthilfsmittel 59 von der Weiche 9 auf diese Schienen 7 aufgleiten, mit einem kleineren Durchmesser ausgebildet. Insbesondere können sie zum oberen Schienenende hin spitz zulaufen und dort eine Sicherheitssperre zur Verhinderung eines ungewollten Austritts der Transporthilfsmittel 59 aufweisen. Auf diese Weise ist sichergestellt, dass sich die Führungskomponenten 63 bzw. 75 auf den weiterführenden Schienen 7 von alleine einfädeln können.

Ein seitliches Abzweigen könnte über eine relativ lange Weiche verwirklicht werden. Während das Transporthilfsmittel bzw. Behältnis auf dieser Weiche (ein Schienenstück) entlang rutscht, könnte diese Weiche (das Schienenstück) seitlich geschwenkt werden und so ein unproblematisches Abbiegen ermöglichen. Ein Sensor könnte hierbei ermitteln, wann sich das Transporthilfsmittel bzw. das Behältnis auf der Weiche bzw. dem schwenkbaren Schienenstück befindet. Falls die Geschwindigkeit hier zu hoch ist, könnte das Transporthilfsmittel bzw. das Behältnis in geeigneter Weise abgebremst werden. Alternativ hierzu kann auch vorgesehen werden, das zu transportierende Behältnis bzw. das Transporthilfsmittel auf einen Stück Schiene ohne Gefälle abzubremsen. Nach dem Bremsen könnte dieses Schienenstück geschwenkt werden. Ist der richtige Anknüpfungspunkt erreicht, könnte die Weiche bzw. das Schienenstück abgesenkt und das Transporthilfsmittel bzw. das Behältnis wird wieder beschleunigt und rutscht weiter. Diese Lösung könnte beispielsweise nach Art eines aus der Eisenbahntechnik bekannten Karussells ausgestaltet werden, so dass zahlreiche Anknüpfungspunkte mit dieser Weiche ansteuerbar sind.

Auch kann eine Abzweigung über eine Art Aufzug verwirklicht werden. Hierzu wird das Transporthilfsmittel bzw. Behältnis auf einem Schienenabschnitt zum Stehen gebracht. Dieser Schienenabschnitt wird dann an die gewünschte Anschlussstelle nach oben oder unten bewegt. Dort wird der Schienenabschnitt wieder geneigt und das Transporthilfsmittel bzw. Behältnis gleitet auf dem gewünschten Schienenweg weiter.

Grundsätzlich ist auch ein seitliches Abbiegen mittels einer Weiche möglich, die analog zu den aus der Eisenbahntechnik bekannten Weichen aufgebaut ist.

Nachfolgend soll das bereits angesprochene Rondell 74, das schematisch in FIG 35 gezeigt ist, näher erläutert werden. Den Tischen 5 ist in FIG 35 jeweils ein Rondell 74 zugeordnet. Auf diesem Rondell 74 endet der jeweilige Schienenweg 56. Das Rondell 74 umfasst zwei übereinander angeordnete, kreisförmige Ebenen, eine obere und eine untere Ebene, die bevorzugt unabhängig voneinander drehbar sind (von Hand, beispielsweise durch die Gäste selbst, in einer Variante aber auch elektrisch). Die Drehbarkeit ermöglicht es jedem Gast, auf alle Bereiche der Rondellebenen von seinem Sitzplatz aus zugreifen zu können. Die untere Rondellebene befindet sich auf Tischhöhe oder knapp über Tischhöhe, die obere Rondellebene ist mit ausreichend Abstand über der unteren Ebene angeordnet, so dass im Zwischenraum, auf der unteren Rondellebene, beispielsweise sauberes Geschirr, Besteck und Gläser für die Gäste gelagert werden kann. Die Rondelle sind somit verhältnismäßig hoch, beispielsweise liegt die obere Rondellebene etwa 30 bis 50 cam über Tischhöhe. Da die Schienen 7 immer auf der oberen Ebene ankommen, ergibt sich nahezu automatisch eine verhältnismäßig hohe Anbringung der ankommenden Schienen 7. In Verbindung mit den bereits erläuterten Schienenspiralen über den Rondellen ist es somit möglich, dass der ankommende Schienenweg 56 bzw. die Schienen 7 immer derart hoch verlaufen, dass der Tisch 5 problemlos zugänglich ist. Die Spirale endet direkt an der oberen Ebene des Rondells 74, auf der auch die Transporthilfsmittel mit den transportierten Behältnissen für Speisen bzw. Getränke ankommen. Die Führung der angekommenen Transporthilfsmittel auf der oberen Ebene wurde bereits erläutert.

Die untere Rondellebene kann neben der Bereitstellung von sauberen Geschirr, Besteck und Gläsern auch für das Einstellen von benutztem Geschirr, Besteck und Gläsern sowie gegebenenfalls von Transporthilfsmitteln, Behältnissen, Töpfe, Deckeln, Befestigungseinrichtung, usw. benutzt werden. Dies ist insbesondere dann wichtig, wenn kein Abtransportsystem hierfür vorgesehen ist. Auch Tischabfälle können in das Rondell gegeben werden. Um eine zügige Entleerung der unteren Rondellebene zu ermöglichen, ist es zweckmäßig, die untere Ebene des Rondells in vier im Wesentlichen gleich große Segmente zu unterteilen (Viertelkreis-Segmente). Zwei gegenüberliegende Segmente können beispielsweise für die Bereitstellung von sauberen Tellern, Gläsern, Besteck, Essig, Öl, Salz und Pfeffer, Servietten, usw. verwendet werden. Die beiden anderen Segmente können für den Abtransport der oben genannten Gegenstände und Utensilien genutzt werden. Hierzu ist es wiederum zweckmäßig, diese Segmente als herausnehmbare Tabletts zu gestalten bzw. diese Segmente mit entsprechenden Tabletts zu versehen. Diese Tabletts weisen die Form eines Kreissektors auf. Sie können beispielsweise aus der unteren Ebene direkt in einen Geschirrwagen umgeladen werden. Ein Praxistest hat ergeben, dass es die Handhabbarkeit verbessert, wenn die Vierteilkreissegmente für die Entsorgung jeweils zwei herausnehmbare Tabletts aufweisen, d.h. jedes Tablett weist im Wesentlichen die Form eines Achtelkreissektors auf.

Auf den herausnehmbaren Tabletts kann beispielsweise eine Vorrichtung zum Halten von Topfdeckeln und eine Box zur Lagerung der Transporthilfsmittel sowie der Gummibänder, mit denen die Deckel auf den Behältnissen bzw. Töpfen gehalten werden, vorhanden sein. Auf dem verbleibenden Platz können die nicht mehr benötigten Behältnisse, Töpfe, usw. gestapelt werden.

Die Tische 5 haben, wie in FIG 35 ersichtlich, im Wesentlichen eine runde Form, und zwar im Wesentlichen die Form eines Kreissegments, insbesondere eines Dreiviertelkreissegments. An jedem Tisch ist daher in dem fehlenden Kreissegment ein direkter Zugang zum Rondell möglich. Hier kann das Personal die untere Ebene des Rondells mit frischen Geschirr usw. beladen und die Tabletts mit dem gebrauchten Geschirr usw. sowie gegebenenfalls mit den gelagerten Transporthilfsmitteln usw. entnehmen und diese Segmente des Rondells wieder mit leeren Tabletts bestücken.

Das zweistöckige Rondell 74 ist im Wesentlichen in der Mitte des Tisches 5 angeordnet. Untere und obere Rondellebene sind an einer vertikalen Rondellachse drehbar gelagert, die gleichzeitig die Nabe für die beiden drehbaren, kreisförmigen Rondellebenen bildet. Unter der oberen Ebene des Rondells und/oder unter der unteren Ebene des Rondells, in einem Spalt zwischen Tischplatte und unterer Rondellebene, ist mindestens eine schwenkbare Halterung für einen Monitor, insbesondere mindestens einen Touchscreen-Monitor, angeordnet. Diese Halterung ist an der Rondellachse drehbar gelagert. Sie reicht bis über die Rondellebenen hinaus, so dass der Monitor vor dem Rondell um den gesamten kreissektorförmigen Tisch gedreht werden kann. Auf diese Weise hat jeder Gast an seinem Sitzplatz Zugang zum Monitor, kann damit beispielsweise die Speisekarte einsehen und Bestellungen aufgeben. Bei größeren Tischen ist das Vorsehen von zwei oder mehreren derartigen Halterungen mit Monitor zweckmäßig.

Sofern der schwenkbare Monitor mit einer schwenkbaren Halterung (auch: Arm, Schwenkarm) unter der unteren Ebene des Rondells geführt ist, kann diese Halterung zusätzlich auf dem Tisch, beispielsweise über Rollen, gelagert sein. Dies erleichtert die Führung der Monitore, da deren Gewicht nicht von der Lagerung an der Rondellachse getragen werden muss. Die Halterung ist zweckmäßigerweise nach dem Hervortreten aus der unteren Rondellebene nach oben gebogen bzw. weist einen in einem Winkel von ca. 90° zum horizontalen Halterungsabschnitt nach oben geführten Halterungsabschnitt auf, an der der Monitor (Touchscreen) in einer für ein Betrachten und eine Bedienung geeigneten Höhe befestigt bzw. befestigbar ist.

Alternativ zu dem vorbeschriebene Schienensystem 6 mit Schienenwegen 56, die aus jeweils zwei parallel zueinander verlaufenden Schienen 7 aufgebaut sind, kann jeder Schienenweg eines Schienensystems gemäß der Erfindung auch als Einzelschienen (z.B. Ein-Rohr-Schienensystem), beispielsweise vergleichbar der Schiene einer Magnetschwebebahn, ausgebildet sein. In diesem Fall wird das Transporthilfsmittel nicht auf zwei oder mehreren parallelen Schienen geführt, sondern nur auf einer Schiene (bzw. einem Rohr), die es zumindest weitgehend umgreift. Dieses Schiene kann im Querschnitt kreisförmig oder rund sein, aber auch eine rechteckige Ausbildung ist möglich. Auf einer rechteckigen Schiene (Rohr) könnte ein seitliches Kippen des Transporthilfsmittels während des Transportes alleine durch die Form der Schiene verhindert werden (vgl. Prinzip der Führung einer Magnetschwebebahn). Bei einer Schiene mit kreisförmigem oder rundem Querschnitt kann ein seitliches Kippen der Transporthilfsmittel beispielsweise dadurch verhindert werden, dass am unteren Ende der Schiene durchgehend ein nach unten hervorstehendes Führungselement, beispielsweise ein Blech oder ein Rechteckrohr oder Ähnliches, vorgesehen ist. An diesem Führungselement könnte die Schiene bzw. das Schienensystem auch aufgehängt bzw. befestigt sein. Das seitliche Wegkippen der Transporthilfsmittel könnte mittels dieses Führungselements, insbesondere mittels des Bleches oder eines Rechteckrohres, beispielsweise dadurch verhindert werden, dass das Transporthilfsmittel von beiden Seiten an dem Führungselement angreift, beispielsweise über Rollen und dadurch die vorgesehene aufrechte Haltung des Transporthilfsmittels sichergestellt ist. Wesentlich ist, dass das Transporthilfsmittel sich nicht über das Führungselement hinwegdrehen kann. Hinsichtlich konkreter Ausgestaltungen hierzu sei beispielhaft auch auf die Konstruktion moderner Achterbahnen verwiesen, die auf dem Einschienenprinzip aufbauen.

Es ist auch möglich, ein Ein-Rohr-Schienensystem in der Art zu bauen, dass die Führung der Transporthilfsmittel bzw. Behältnisse im Rohr verläuft, wobei hier wieder der bereits erläuterte Schubladeneffekt entsteht und als selbststeuerndes System hinsichtlich der Transportgeschwindigkeit genutzt werden kann. Beispielsweise kann an einer Seite des Rohres eine Nut vorgesehen sein. An dem Gleiteinsatz im Rohr ist dann ein Arm befestigt, der durch diese Nut nach außen führt. An diesem Arm können dann die Transporthilfsmittel bzw. Behältnisse befestigt werden, beispielsweise durch spezielle Vorrichtungen, Halterungen, Griffe, Klemmbefestigungen, usw. Ein Vorteil dieser Variante eines Ein-Rohr-Schienensystems ist, dass der Arm, der aus der Nut herausragt, gleichzeitig dafür sorgt, dass sich die Transporthilfsmittel bzw. Behältnisse nicht um das Rohr verdrehen können. Dieses Prinzip ist auch auf die bereits beschriebenen Schienensysteme mit zwei oder mehr Schienen übertragbar.

Auch hinsichtlich zahlreicher weiterer Ausbildungen der vorliegenden Erfindung kann auf Techniken aus Achterbahnen verwiesen werden. Beispielsweise kann es auch im Restaurantsystem gemäß der Erfindung wie bei Achterbahnen erforderlich sein, zunächst "künstlich" die für den Transport mittels Schwerkraft erforderliche Höhe zu schaffen, das heißt die Transporthilfsmittel und Behältnisse zunächst in eine entsprechende Höhe zu befördern. Wie bereits dargelegt, kann es auch im Restaurantsystem wie bei Achterbahnen erforderlich sein, während des Transportvorgangs die Geschwindigkeit an kritischen Stellen zu messen und gegebenenfalls ein gezieltes Abbremsen vorzusehen. Das Abbremsen der Transporteinrichtungen bzw. Behältnisse kann durch alle bekannten Bremsverfahren erfolgen. Bei dem bereits erläuterten Aufbau eines Schienenweges aus vier in zwei Schienenebenen angeordneten Schienen kann die Rutschbahn beispielsweise über eine Bewegung der seitlichen Schienen, z.B. mittels eines Hydraulikzylinders, aufeinander zu die Rutschbahn verengt werden, so dass die Transporthilfsmittel bzw. Behältnisse durch erhöhte Reibung an diesen seitlichen Schienen abgebremst werden. Bei den vorbeschriebenen Schienenwegen aus zwei parallelen Schienen bzw. aus lediglich einer Schiene kann die Bremsung dadurch erreicht werden, dass ein Stück einer Schiene, z.B. mittels eines Hydrauliksystems, seitlich nach außen bzw. innen gedrückt wird, wodurch sich die Schiene verbreitert bzw. verengt. Auf diese Weise wird das Spiel des Transporthilfsmittels bzw. der Führungskomponenten des Transporthilfsmittels auf der Schiene verringert, die Reibung erhöht sind, was wiederum zur Reduzierung der Geschwindigkeit bis hin zum Stillstand des Transporthilfsmittels führt. Bei auf Rollen oder Rädern geführten Transporthilfsmitteln könnten selbstverständlich auch die Rollen oder Räder gebremst werden, z.B. durch bekannte Bremsen wie Scheiben- oder Trommelbremsen oder Ähnliches.

Nachfolgend wird beispielhaft für das Restaurantsystem gemäß der Erfindung der Ablauf eines Restaurantbesuchs dargestellt. Am Eingang erhält der Gast zunächst eine anonyme Restaurantkarte (auch: Kundenkarte), beispielsweise eine Karte mit einem RFID-Chip. Mit dieser Restaurantkarten loggt er sich an seinem Sitzplatz in das IT-Sytem des Restaurants ein und bestellt über den Touchscreen-Monitor Speisen und Getränke. Jeder Sitzplatz an jedem Tisch ist mit einem Farbpunkt markiert, auf dem auch eine Nummer (für Farbenblinde) steht. Nachdem der Gast sich in der bevorzugt bebilderten Speisekarte, soweit er will, informiert hat, erfolgt die Bestellung. Bei der Bestellung gibt der Gast am Touchscreen-Monitor die Farbmarkierung seines Sitzplatzes ein. Die Bestellung wird anschließend ausgelöst, beispielsweise indem der Gast seine Restaurantkarte an ein Lesegerät in der Nähe des bzw. an dem Bildschirms hält. Bei der Anlieferung der bestellten Speisen und Getränke über das Transportsystem (mittels Schwerkraft) sind die Behältnisse farbig in der Sitzplatzfarbe des Bestellers markiert, z.B. durch ein Fähnchen, durch einen farbigen Topfgriff, usw. Auf diese Weise sieht der Besteller (sofern mehrere verschiedene Personen oder Besuchergruppen an einem Tisch sitzen) bereits beim Anrutschen, für wen am Tisch die Speisen bzw. Getränke sind. Auf der Markierung, beispielsweise dem Fähnchen, kann ferner aufgedruckt oder durch einen entsprechenden Aufkleber angegeben sein, was sich im jeweiligen Behältnis befindet und für wen es ist. Verlässt der Gast das Restaurant, gibt er am Ausgang seine Restaurantkarte ab und begleicht seine Rechnung.

In einer Weiterbildung könnte direkt nach der Bestellung auf dem Touchscreen-Monitor, auf dem Handy-Display oder auf anderen vorhandenen Anzeigeeinrichtungen gleich der Rechnungsbetrag angezeigt werden. Dieser kann vom Kunden dann gleich beglichen werden, beispielsweise per Handy, Kreditkartekarte, EC-Karte, Scheckkarte, usw.

Auch kann vorgesehen sein, dass nur bereits bezahlte Bestellungen vom IT-System des Restaurants an den Arbeitsbereich (die Küche) weitergegeben werden.

Alternativ oder ergänzend können auch personifizierte Kundenkarten vorgesehen sein, hier kann der Gast andere Bezahlarten vereinbaren. Die personalisierte Kundenkarte kann mit einer Reihe von Vorteilen für den Kunden verbunden sein, beispielsweise ein Bonus bei regelmäßigem Besuch, ein Bonus bei Abgabe von Essens- und Restaurantbewertungen sowie bei Empfehlungen. Außerdem können auf Basis der personalisierten Kundenkarten Neukunden geworben werden. Kommt der geworbene Kunde innerhalb einer Frist, erhält sowohl der Werbende als auch der Geworbene einen Bonus. Aus den regelmäßigen Bewertungen der Restaurantgäste können umfangreiche laufende Daten über die Zielkunden und über Veränderungen in der Kundeneinschätzung der Qualität des Restaurants gewonnen werden. Außerdem können Bewertungsergebnisse mit Anwesenheitszeiten des Service- oder Küchenpersonals abgeglichen werden. Außerdem kann dem Kunden mit der personalisierten Restaurantkarte die Möglichkeit eingeräumt werden, seine ganzen Restaurantbesuche bequem am Monatsende per Sammelrechnung zu bezahlen.

Alternativ zur Bestellung über den Touchscreen-Monitor kann der Kunde auch per Handy vor Ort (an seinem Sitzplatz) oder bereits vor seinem Eintreffen bestellen. Auch eine Vorab-Bestellung über das Internet kann vorgesehen sein. Hierzu ist es zweckmäßig, dass die tagesaktuelle Speisekarte sowohl über das Internet als auch über das Handy heruntergeladen werden kann. So kann der Kunde bereits bequem von zu Hause aus oder von unterwegs bestellen und per Handy, Scheck- oder Kreditkarte oder Restaurantkundenkarte bezahlen. Bei Ankunft ist das Essen dann bereits fertig und kann beispielsweise per Abholnummer am Tisch oder an einem Drive-in-Parkplatz (siehe unten) ausgeliefert werden.

Die vorbeschriebenen IT-Lösungen für das Restaurantsystem gemäß der Erfindung führen zu deutlichen Kostensenkungen bei gleichzeitiger Erhöhung des Komforts für die Gäste.

Mit dem Restaurantsystem gemäß der Erfindung lässt sich auch ein völlig neues, effizientes Drive-in-Konzept verwirklichen. Im Prinzip kann der gesamte Platz, der bei herkömmlichen Drive-in-Bereichen für das Durchfahren der Kraftfahrzeuge erforderlich ist, entfallen. Statt dessen kann eine nahezu beliebige Anzahl normaler Parkplätze, möglichst in der Nähe des Arbeitsbereichs des Restaurantsystems gelegen, in spezielle Drive-in-Parkplätze umgewandelt werden. Vom Arbeitsbereich führt dann ein Schienenweg zu jedem dieser Parkplätzen. So kann entweder bereits von unterwegs per Handy oder vor Ort am Parkplatz mittels Touchscreen bestellt und mittels Handy, Scheckkarte usw. bezahlt werden. Anschließend rutschen die Speisen und Getränke auf den Schienen direkt zu den Autos. Ein wesentlicher Vorteil ist, dass nahezu beliebig viele Drive-in-Gäste gleichzeitig bedient werden können. Das Anstehen in einer Autoschlange entfällt, eine deutliche Komfortsteigerung für den Kunden, bei drastisch reduzierten Kosten (weniger Platzbedarf und weniger Personal).

Insgesamt wird mit der Erfindung ein Restaurantsystem angegeben, bei dem ohne Bedienung Speisen und Getränke zielgerichtet zu den Gästen an den Tischen gebracht werden. Durch die angeführten Weiterbildungen ist es ferner möglich, das Bestell- und Bezahlwesen voll elektronisch durchzuführen.

Die Logistikkette eines Restaurants ist bei dem Restaurantsystem gemäß der Erfindung vollständig automatisiert geschlossen. Dadurch lässt sich eine umfassende Informationstechnologie (IT) für alle Bereiche eines Restaurantbetriebs installieren. Bestellungen, Bezahlungen und Auslieferungen der Speisen und Getränke können zumindest weitgehend ohne den Einsatz von Mitarbeitern ausgeführt werden. In einem Restaurants können somit alle Prozesse, die dem Kunden keinen direkten Nutzen bringen, ohne den Einsatz (teurer) Mitarbeiter erledigt werden. Beispielsweise bringt es dem Kunden sicherlich keinen direkten Nutzen, wenn eine Bedienung das Essen und die Getränke zum Tisch bringt, sofern er nicht als Alternative hierzu das Essen und die Getränke selbst abholen muss (wie in Selbstbedienungs-Restaurants). Die Erfindung zeigt, dass sich diese Servierarbeiten wesentlich intelligenter mittels eines Transportsystems durchführen lassen. Mitarbeiter werden nur noch dort eingesetzt, wo es dem Kunden auch direkten Nutzen bringt.

Die Prozesskette eines Restaurants wird durch das Restaurantsystem gemäß der Erfindung auch auf der Bedienseite durch das Transportsystem, das die Speisen und Getränke mittels Schwerkraft transportiert, innovativ geschlossen. Ergänzend kann auch die Bestellung und die Bezahlung problemlos über moderne Informationstechnologien gelöst werden. Alle Prozesse lassen sich zumindest weitgehend über einen Restaurantcomputer steuern. Dadurch lassen sich die bisher als diametral angesehenen Aspekte Komfort und Ambiente auf der einen Seite und niedrige Kosten auf der anderen Seite optimal miteinander kombinieren.

Insgesamt zeichnet sich das bei dem Restaurantsystem gemäß der Erfindung vorgesehene Transportsystem mit einem Transport mittels Schwerkraft durch seine einfache und kostengünstige Konzeption aus. Das vorgeschlagene Restaurantsystem verbindet nicht nur den Komfort eines herkömmlichen Bedienrestaurants mit der günstigen Kostenstruktur eines Selbstbedienrestaurants. Vielmehr werden die Prozesse durch die technologische, informationstechnologische und organisatorische Gesamtlösung des vorgeschlagenen Restaurantsystems noch erheblich effizienter gestaltet und damit die Kosten deutlich gesenkt, bei erheblicher Steigerung des Nutzens und Komforts für die Gäste.

### Bezugszeichenliste

- 2: Restaurantsystem
- 3: Arbeitsbereich
- 4: Gästebereich
- 5: Tisch
- 6: Transportsystem, Schienensystem
- 7: Gleitschienen, Schienen
- 7a...e: Schienen
- 8: Abzweigung
- 9: Weiche
- 9a: Stellorgan
- 9b: Führungselement
- 10: Arbeitstheke
- 11: Arbeitspersonal
- 12: Treppe
- 13: Gäste
- 14: Mitteltheke
- 15: Reinigung- und Entsorgungsbereich
- 16: Abtransportsystem
- 17: Gleitschienen
- 18: Gleitfläche der Gleitschienen 7, 17
- 19: Führungsränder
- 20: Schienenende
- 21: Drehlagerung, Drehpunkt
- 22: Führungsraster
- 23: Ausnehmungen im Führungsraster 22
- 24: Schienenende
- 25: Träger
- 26: Seilsystem, Seilzug
- 27: Behältnisse
- 28: Schüssel
- 29: Gleitfläche
- 30: Deckel, Abschlussdeckel
- 31: Deckel, Zwischendeckel
- 32: Randsteg
- 33: Deckelrand
- 34a,b,c: Schüsseln
- 35: Haken
- 36: Gleitvorrichtung
- 37: Becher, Tasse, Glas, Flasche, Getränkebehälter, Trinkgefäß
- 38: Unterteller
- 39: Unterseite des Untertellers 38
- 40: Halterung
- 41: Standelement
- 42: Saugnäpfe
- 43: Unterseite des Getränkebehälters 37
- 44: Wippmechanismus
- 45: Getränkeeinsatz
- 46: oberer Abschnitt des Getränkeeinsatzes 45
- 47: kleine Schüssel
- 48: kleine Ausnehmung
- 49: Ausnehmung
- 50: Griff
- 51: Innenseite des Griffes 50
- 52, 53, 54: Abtransportschienen, Entsorgungsschienen
- 55: Lastenaufzug
- 56: Schienenweg
- 57: Halterung
- 58,59,60,61: Transporthilfsmittel
- 62: Griff
- 63: Führungskomponente
- 64: Bolzen
- 65: Ringkomponente
- 66: Formkörper
- 67: Haltevorrichtung
- 68: Befestigungseinrichtung, Gummiband
- 69: Griff
- 70: Flaschenhalterung, Getränkeeinsatz
- 71: Flaschenaufnahme
- 72: Haltestege
- 73: Deckel
- 74: Rondell
- 75: Führungskomponente
- 76: U-Profil
- 77: Gelenk
- 78: Druckkolben
- 79: Ringelement
- 80: Haltestift, Schraube
- 81: Befestigungseinrichtung
- 82: Sicherungsgurt
speziell in FIG 23 und FIG 24:
- R-Nr. 1 bis 10: Räume
- a bis o: Positionen
- 1 bis 9: Schienen
- 1-1 bis 9-2: Tische, zugeordnet den einzelnen Schienen (jeweils erste Ziffer)

## Patentansprüche

1. Restaurantsystem (2), umfassend
a) mindestens einen Arbeitsbereich (3) zum Kochen und/oder Zubereiten von Speisen und/oder Getränken,
b) mindestens einen Gästebereich (4), insbesondere mit einem oder mehreren Tischen (5) für Restaurantgäste,
c) wobei Arbeitsbereich (3) und Gästebereich (4) über ein Transportsystem (6) für Speisen und/oder Getränke verbunden sind, und
d) wobei das Transportsystem (6) dazu ausgebildet ist, Speisen und/oder Getränke vom Arbeitsbereich (3) zum Gästebereich (4) zu transportieren,
**dadurch gekennzeichnet, dass**
e) der Transport von Speisen und/oder Getränken vom Arbeitsbereich (3) zum Gästebereich (4) über das Transportsystem (6) zumindest abschnittsweise mittels Schwerkraft erfolgt.

2. Restaurantsystem nach Anspruch 1,
**dadurch gekennzeichnet, dass**
der Arbeitsbereich (3) höher als der Gästebereich (4) angeordnet ist.

3. Restaurantsystem nach Anspruch 1 oder 2,
**dadurch gekennzeichnet, dass**
das Transportsystem (6) ein Schienensystem (6) mit einem oder mehreren Schienenwegen (56) und/oder mit mindestens einer Schiene (7) umfasst oder ist.

4. Restaurantsystem nach Anspruch 3,
**dadurch gekennzeichnet, dass**
das Schienensystem Gleitschienen (7) umfasst.

5. Restaurantsystem nach Anspruch 4,
**dadurch gekennzeichnet, dass**
die Gleitschienen (7) Gleitflächen aufweisen.

6. Restaurantsystem nach einem der Ansprüche 3 bis 5,
**dadurch gekennzeichnet, dass**
eine erste Art von Schienenweg (56) von einer Schiene (7), insbesondere einer im Querschnitt kreisförmigen oder ovalen oder rechteckigen Schiene oder einer U-förmige Schiene (7) mit Gleitfläche (18) und Führungsrändern (19), gebildet ist.

7. Restaurantsystem nach einem der Ansprüche 3 bis 6,
**dadurch gekennzeichnet, dass**
eine zweite Art von Schienenweg (56) zwei zumindest im Wesentlichen parallel verlaufende Schienen (7), insbesondere zwei im Querschnitt zumindest im Wesentlichen kreisförmige oder ovale oder rechteckige Schienen (7), aufweist.

8. Restaurantsystem nach einem der Ansprüche 3 bis 7,
**dadurch gekennzeichnet, dass**
eine dritte Art von Schienenweg (56) vier zumindest im Wesentlichen parallel verlaufende Schienen, insbesondere vier im Querschnitt zumindest im Wesentlichen kreisförmige oder ovale oder rechteckige Schienen, aufweist, wobei zwei innere Schienen einen geringeren Abstand zueinander aufweisen als zwei äußere Schienen, wobei die beiden inneren Schienen eine Gleitebene und die beiden äußeren Schienen eine Führungsebene definieren, und wobei die Gleitebene unterhalb der Führungsebene angeordnet ist.

9. Restaurantsystem nach einem der Ansprüche 3 bis 8,
**dadurch gekennzeichnet, dass**
mehrere nebeneinander und/oder parallel laufende Schienen, insbesondere nach Art von Bahnschienen ausgebildete Schienen, zueinander in ihrer Höhe versetzt angeordnet sind, vorzugsweise um den Transport verschieden großer Behältnisse zu ermöglichen.

10. Restaurantsystem nach einem der Ansprüche 3 bis 9,
**dadurch gekennzeichnet, dass**
das Schienensystem (6) in Transportrichtung Abzweigungen (8) aufweist, an denen der Transportweg durch steuerbare Weichen (9) einstellbar oder eingestellt ist, insbesondere über mindestens eine vom Arbeitsbereich (3) aus betätigbare Bedieneinrichtung.

11. Restaurantsystem nach einem der Ansprüche 3 bis 10,
**dadurch gekennzeichnet, dass**
Transporthilfsmittel (37, 38, 41, 58, 59, 60, 61), insbesondere Gleitunterlagen und/oder Gleitvorrichtungen, vorgesehen sind, die hinsichtlich ihrer Abmessungen und/oder ihrer Gleiteigenschaften mit den Schienen (7) korrespondieren und die für den Transport von Behältnissen (27), insbesondere Töpfen und/oder Geschirr, vorzugsweise Gleitschüsseln (28, 34a) und/oder Gleitteller und/oder Gleittöpfe und/oder Gleitpfannen, und/oder Gläser und/oder Becher und/oder Flaschen und/oder Karaffen, für Speisen und/oder Getränke ausgebildet sind, wobei vorzugsweise die Behältnisse stabil in oder auf die Transporthilfsmittel stellbar sind.

12. Restaurantsystem nach Anspruch 11,
**dadurch gekennzeichnet, dass**
die Transporthilfsmittel (37, 38, 41, 58, 59, 60, 61) Führungskomponenten (63) aufweisen, die die Schienen (7) zumindest teilweise umgreifen, die insbesondere mindestens die Hälfte des Schienenumfangs umgreifen, die vorzugsweise mindestens zwei Drittel des Schienenumfangs umgreifen.

13. Restaurantsystem nach Anspruch 11 oder 12,
**dadurch gekennzeichnet, dass**
das Transporthilfsmittel (58, 59, 60, 61) zwei Führungskomponenten (63) aufweist, die miteinander verbunden sind,
insbesondere über eine Ringkomponente (65), in die das zu transportierende Behältnis (27) einhängbar oder eingehängt ist, wobei die Ringkomponente (65) vorzugsweise beweglich mit den Führungskomponenten (63) verbunden ist, insbesondere über seitliche Ringelemente (79), die auf Bolzen (64), die auf den Führungskomponenten (63) vorgesehen sind, aufgesteckt sind, oder
insbesondere über das Behältnis (27) selbst, das an und/oder auf die Führungskomponenten (63) oder an und/oder auf Formkörper (66), die an den Führungskomponenten (63) vorgesehen sind, angebracht und/oder aufgesteckt ist, insbesondere über Griffe (62).

14. Restaurantsystem nach einem der Ansprüche 3 bis 13,
**dadurch gekennzeichnet, dass**
Behältnisse (27, 28, 34a,b,c), insbesondere Töpfe und/oder Geschirr, vorzugsweise Gleitschüsseln (28, 34a) und/oder Gleitteller und/oder Gleittöpfe und/oder Gleitpfannen, und/oder Gläser und/oder Becher und/oder Tassen und/oder Flaschen, für die zu transportierenden Speisen und/oder Getränke vorgesehen sind, die hinsichtlich ihrer Abmessungen und/oder Gleiteigenschaften mit den Schienen (7) korrespondieren.

15. Restaurantsystem nach Anspruch 14,
**dadurch gekennzeichnet, dass**
das Behältnis, insbesondere die Gleitschüssel (34a,b,c) und/oder der Gleittopf und/oder die Gleitpfanne, mehrteilig aufgebaut ist, wobei ein erstes Behältnis, insbesondere eine erste Schüssel (34a), hinsichtlich ihrer Abmessungen und/oder Gleiteigenschaften mit den Schienen (7) korrespondiert, insbesondere einen für die Schiene (7) ausgebildeten Gleitboden aufweist, und in das erste Behältnis, insbesondere in die erste Schüssel (34a), mindestens ein weiteres Behältnis, insbesondere eine weitere Schüssel (34b,c), einhängbar oder eingehängt ist.

16. Restaurantsystem nach einem der Ansprüche 11 bis 15,
**dadurch gekennzeichnet, dass**
ein Getränkeeinsatz (45, 70) für das Transporthilfsmittel (37, 38, 41, 58, 59, 60, 61) und/oder das Behältnis (27, 28, 34a,b,c), insbesondere die Gleitschüssel (28) und/oder den Gleittopf und/oder die Gleitpfanne, vorgesehen ist, mit dem Getränkebehälter (37) oder Flaschen oder Karaffen oder Suppenbehälter umfallsicher mittels des Transporthilfsmittels und/oder Behältnisses, insbesondere der Gleitschüsseln (28) und/oder dem Gleittopf und/oder der Gleitpfanne, transportierbar sind.

17. Restaurantsystem nach einem der Ansprüche 11 bis 16,
**dadurch gekennzeichnet, dass**
ein Griff (50), insbesondere ein abnehmbarer Griff (50), vorgesehen ist, mit dem die Behältnisse (27, 28, 34a,b,c), insbesondere die Gleitschüsseln (28, 34a), aus dem Schienensystem (6) und/oder den Transporthilfsmitteln (37, 38, 41, 58, 59, 60, 61) entnehmbar sind.

18. Restaurantsystem nach einem der Ansprüche 3 bis 17,
**dadurch gekennzeichnet, dass**
der Arbeitsbereich (3) mit mindestens einem, insbesondere jedem, Tisch (5) des Gästebereichs (4) über mindestens eine Schiene (7) und/oder mindestens einen Schienenweg (56) verbunden oder verbindbar ist.

19. Restaurantsystem nach einem der Ansprüche 3 bis 18,
**dadurch gekennzeichnet, dass**
die zwischen Arbeitsbereich (3) und Gästebereich (4) angeordnete Schiene (7) zumindest abschnittsweise bewegbar ist, insbesondere über mindestens eine vom Arbeitsbereich (3) aus betätigbare Bedieneinrichtung und/oder über ein Seilsystem (26) und/oder über einen Wippmechanismus (44).

20. Restaurantsystem nach Anspruch 19,
**dadurch gekennzeichnet, dass**
die Schiene (7), vorzugsweise über ein Seilsystem (26) oder über einen Wippmechanismus (44), derart beweglich ist, dass ein dem Gästebereich zugewandtes Ende (20) der Schiene (7) in vertikaler Richtung beweglich ist, insbesondere in einer unteren Position an oder auf dem Tisch (5) liegt und in einer oberen Position über dem Gästebereich (4) freischwebend angeordnet ist, wobei vorzugsweise nur in der unteren Position ein Transport von Speisen und/oder Getränken über die Schiene (7) möglich ist.

21. Restaurantsystem nach Anspruch 19 oder 20,
**dadurch gekennzeichnet, dass**
die Schiene (7) in horizontaler Richtung drehbar ist, insbesondere durch eine Drehlagerung (21).

22. Restaurantsystem nach Anspruch 21,
**dadurch gekennzeichnet, dass**
die Drehbewegung der Schiene (7) nur in einer, insbesondere über eine vorgegebene Höhe hinausgehenden, angehobenen Position des dem Gästebereich zugewandten Endes (20) der Schiene möglich ist und in niedrigeren Positionen blockiert ist, insbesondere durch ein Führungsraster (22) für die Schiene (7).

23. Restaurantsystem nach einem der Ansprüche 3 bis 22,
**dadurch gekennzeichnet, dass**
die Schiene (7) zwischen Arbeitsbereich (3) und Gästebereich (4) in einer Transportstellung zumindest in einem Mittelabschnitt im Wesentlichen eine gleichbleibende Steigung aufweist.

24. Restaurantsystem nach einem der Ansprüche 3 bis 23,
**dadurch gekennzeichnet, dass**
dass Geschwindigkeitssensoren zur Ermittlung der Transportgeschwindigkeit vorgesehen sind und/oder Bremseinrichtungen zum Reduzieren der Transportgeschwindigkeit.

25. Restaurantsystem nach einem der Ansprüche 3 bis 24,
**dadurch gekennzeichnet, dass**
die Schiene (7) zum Gästebereich (4) hin einen Auslaufabschnitt aufweist, in dem der Betrag der Steigung der Schiene (7) geringer als im Mittelabschnitt ist, insbesondere zumindest abschnittsweise kontinuierlich abnimmt, und/oder eine Gleitfläche (18) der Schiene (7) einen größeren Reibungskoeffizienten aufweist als im Mittelabschnitt.

26. Restaurantsystem nach einem der Ansprüche 3 bis 25,
**dadurch gekennzeichnet, dass**
der Schienenweg (56) im Gästebereich, insbesondere an den Tischen (5), auf einem Rondell (74), insbesondere einem zweistöckigen Rondell (74) mit zwei vorzugsweise unabhängig voneinander um eine Rondellachse drehbaren, übereinander angeordneten Ebenen, einer unteren und einer oberen Ebene, endet oder ausläuft.

27. Restaurantsystem nach Anspruch 26,
**dadurch gekennzeichnet, dass**
die untere Ebene des Rondells (74) ein oder mehrere kreissegmentförmige, herausnehmbare Tabletts aufweist.

28. Restaurantsystem nach Anspruch 26 oder 27,
**dadurch gekennzeichnet, dass**
an dem Rondell (74), insbesondere an der Rondellachse, über eine oder mehrere schwenkbare und/oder drehbare Halterungen ein oder mehrere Monitore, insbesondere Touchscreen-Monitore, angebracht sind.

29. Restaurantsystem nach einem der Ansprüche 3 bis 28,
**dadurch gekennzeichnet, dass**
die Schiene (7) zwischen Arbeitsbereich (3) und Gästebereich (4) zumindest abschnittsweise abgedeckt ist, insbesondere vollflächig oder durch Gitterstäbe.

30. Restaurantsystem nach einem der vorhergehenden Ansprüche,
**dadurch gekennzeichnet, dass**
das Transportsystem ein Seilsystem umfasst oder ist und/oder dass das Transportsystem (6), insbesondere das Schienensystem (6), Kugelbahnen und/oder Kugelbänder und/oder Rollbänder und/oder Fließbänder umfasst.

31. Restaurantsystem nach einem der vorhergehenden Ansprüche,
**dadurch gekennzeichnet, dass**
a) mindestens ein Reinigungs- und/oder Entsorgungsbereich (15) vorgesehen ist,
b) wobei der Reinigungs- und/oder Entsorgungsbereich (15) niedriger als der Gästebereich (4) angeordnet ist,
c) wobei Gästebereich (4) und Reinigungs- und/oder Entsorgungsbereich (15) über ein Abtransportsystem (16), insbesondere für Transporthilfsmittel und/oder Behältnisse, insbesondere Geschirr, vorzugsweise Gleitschüsseln und/oder Gleitteller und/oder Gleittöpfe und/oder Gleitpfannen, und/oder Gläser und/oder Becher und/oder Flaschen, und/oder Transporthilfsmittel und/oder Tischabfälle, verbunden sind,
d) wobei das Abtransportsystem (16) dazu ausgebildet ist, Behältnisse und/oder Transporthilfsmittel und/oder Tischabfälle vom Gästebereich (4) zum Reinigungs- und/oder Entsorgungsbereich (15) zu transportieren,
e) wobei der Abtransport der Behältnisse und/oder Transporthilfsmittel und/oder Tischabfälle vom Gästebereich (4) zum Reinigungs- und/oder Entsorgungsbereich (15) über das Abtransportsystem (16) zumindest abschnittsweise mittels Schwerkraft erfolgt.

32. Restaurantsystem nach Anspruch 31,
**dadurch gekennzeichnet, dass**
das Abtransportsystem (16) ein Abtransport-Schienensystem umfasst oder ist, das vorzugsweise hinsichtlich seiner Abmessungen und Gleiteigenschaften dem Schienensystem (6) des Transportsystems entspricht.

33. Restaurantsystem nach einem der vorhergehenden Ansprüche,
**dadurch gekennzeichnet, dass**
zwischen Gästebereich (4) und Arbeitsbereich (3) ein Bestellsystem vorgesehen ist, insbesondere ein Seilzugbestellsystem, bei dem Bestellzettel über ein Seilzugsystem, insbesondere eine Miniseilbahn, vom Gästebereich zum Arbeitsbereich befördert werden, wobei vorzugsweise das Seilzugsystem vom Gästebereich und/oder vom Arbeitsbereich aus bedienbar ist.

34. Restaurantsystem nach Anspruch 33,
**dadurch gekennzeichnet, dass**
das Bestellsystem, insbesondere das Seilzugsystem, auch für die Rechnungsausgabe an die Gäste und/oder für die Bezahlung verwendbar ist.

35. Restaurantsystem nach einem der vorhergehenden Ansprüche,
**dadurch gekennzeichnet, dass**
am Transportsystem (6), insbesondere unterhalb der Schienen (7) und/oder seitlich an den Schienen (7) und/oder in den Schienen (7) und/oder über und/oder unter und/oder neben Abdeckungen der Schienen (7), Leitungen, vorzugsweise Schläuche oder Rohre, angeordnet und/oder ausgebildet sind, über die Getränke vom Arbeitsbereich (3) zum Gästebereich (3), insbesondere zu den Tischen (5) des Gästebereichs (4), transportierbar ist.

36. Restaurantsystem nach Anspruch 35,
**dadurch gekennzeichnet, dass**
am Ende der Leitungen im Gästebereich (4) jeweils ein Zapfhahn oder Ventil vorgesehen ist, über den das gewünschte Getränk zapfbar ist.

37. Restaurantsystem nach Anspruch 36,
**dadurch gekennzeichnet, dass**
vor jedem Zapfhahn oder Ventil in oder an der jeweiligen Leitung ein Messgerät zur Erfassung der gezapften Getränkemenge installiert ist.

38. Restaurantsystem nach einem der Ansprüche 35 bis 37,
**dadurch gekennzeichnet, dass**
eine zentrale Verteilstelle, vorzugsweise im Arbeitsbereich (4), vorgesehen ist, die die von einem Gast bestellte Getränkeart- und -menge in einer der Leitungen am Gästebereich (4), insbesondere am jeweiligen Tisch (5), bereitstellt, wobei diese bereitgestellte Getränkeart und -menge bevorzugt über ein Ventil oder einen Zapfhahn im Gästebereich (4), insbesondere am jeweiligen Tisch (5), entnehmbar ist.

39. Restaurantsystem nach einem der Ansprüche 35 bis 38,
**dadurch gekennzeichnet, dass**
an oder nahe dem Zapfhahn oder Ventil ein weiteres Ventil in der Leitung vorgesehen ist, an das zum Spülen der Leitung eine Rückleitung angeschlossen ist, über die zugeführtes Spülwasser abführbar ist.

40. Restaurantsystem nach einem der vorhergehenden Ansprüche,
**dadurch gekennzeichnet, dass**
der Gästebereich oder ein Teil des Gästebereichs in mehrere Teilbereiche unterteilt ist, die nach Art einer Wendeltreppe stufenartig zueinander versetzt angeordnet sind, wobei die einzelnen Teilbereiche über Abzweigungen aus einem Haupttransportweg und/oder über mehrere übereinander und/oder nebeneinander angeordnete Transportwege des Transportsystems mit Speisen und/oder Getränken versorgbar sind.

41. Restaurantsystem nach einem der vorhergehenden Ansprüche,
**dadurch gekennzeichnet, dass**
der Gästebereich oder ein Teil des Gästebereichs ein Drive-in-Bereich ist, insbesondere ein Drive-in-Bereich mit Parkplätzen, an denen Schienenwege und/oder Schienen des Transportsystems enden.

42. Restaurantsystem nach einem der vorhergehenden Ansprüche,
**dadurch gekennzeichnet, dass**
das Transportsystem ausgebildet ist für einen zielgerichteten und automatischen Transport von Speisen und/oder Getränken in den Gästebereich, insbesondere an den Tisch eines Gastes, für den die Speisen und/oder Getränke bestimmt sind.

43. Restaurantsystem nach einem der vorhergehenden Ansprüche,
**dadurch gekennzeichnet, dass**
das Transportsystem zumindest teilweise von einer Informationstechnologie gesteuert wird, in die vorzugsweise neben dem Transport der Speisen und Getränke auch andere Restaurantaufgaben, insbesondere ein Bestellsystem und/oder ein Bezahlsystem, integriert sind.

## Claims

1. Restaurant system (2), comprising
a) at least one working area (3) for cooking and/or preparing meals and/or beverages,
b) at least one customer area (4), in particular with one or more tables (5) for restaurant customers,
c) working area (3) and customer area (4) being connected via a transport system (6) for meals and/or beverages, and
d) the transport system (6) being designed to transport meals and/or beverages from the working area (3) to the customer area (4), **characterized in that**
e) the transport of meals and/or beverages from the working area (3) to the customer area (4) via the transport system (6) takes place, at least in some sections, by means of gravity.

2. Restaurant system according to Claim 1, **characterized in that** the working area (3) is arranged at a higher level than the customer area (4).

3. Restaurant system according to Claim 1 or 2, **characterized in that** the transport system (6) comprises or is a rail system (6) with one or more rail lines (56) and/or with at least one rail (7).

4. Restaurant system according to Claim 3, **characterized in that** the rail system comprises sliding rails (7).

5. Restaurant system according to Claim 4, **characterized in that** the sliding rails (7) have sliding surfaces.

6. Restaurant system according to one of Claims 3 to 5, **characterized in that** a first type of rail line (56) is formed by a rail (7), in particular a rail which is circular or oval or rectangular in cross section, or a U-shaped rail (7), with a sliding surface (18) and guide edges (19).

7. Restaurant system according to one of Claims 3 to 6, **characterized in that** a second type of rail line (56) has two rails (7) running at least substantially parallel, in particular two rails (7) which are at least substantially circular or oval or rectangular in cross section.

8. Restaurant system according to one of Claims 3 to 7, **characterized in that** a third type of rail line (56) has four rails running at least substantially parallel, in particular four rails which are at least substantially circular or oval or rectangular in cross section, two inner rails being at a smaller distance from each other than two outer rails, the two inner rails defining a sliding plane and the two outer rails defining a guide plane, and the sliding plane being arranged below the guide plane.

9. Restaurant system according to one of Claims 3 to 8, **characterized in that** a plurality of rails running next to one another and/or in parallel, in particular rails designed in the manner of railway rails, are offset with respect to one another in their height, preferably in order to permit the transport of containers of differing sizes.

10. Restaurant system according to one of Claims 3 to 9, **characterized in that** the rail system (6) has, in the transport direction, branch lines (8) at which the transport route can be adjusted or is adjusted by controllable switching points (9), in particular via at least one operating device which can be actuated from the working area (3).

11. Restaurant system according to one of Claims 3 to 10, **characterized in that** transport aids (37, 38, 41, 58, 59, 60, 61) are provided, in particular sliding bases and/or sliding apparatuses, which correspond in respect of their dimensions and/or their sliding properties to the rails (7) and are designed for the transport of containers (27), in particular pots and/or tableware, preferably sliding dishes (28, 34a) and/or sliding plates and/or sliding pots and/or sliding pans, and/or glasses and/or tumblers and/or bottles and/or carafes, for meals and/or beverages, with it preferably being possible for the containers to be placed in a stable manner into or onto the transport aids.

12. Restaurant system according to Claim 11, **characterized in that** the transport aids (37, 38, 41, 58, 59, 60, 61) have guide components (63) which at least partially engage around the rails (7), which in particular engage around at least half of the rail circumference, and which preferably engage around at least two thirds of the rail circumference.

13. Restaurant system according to Claim 11 or 12, **characterized in that** the transport aid (58, 59, 60, 61) has two guide components (63) which are connected to each other,
in particular via a ring component (65) in which the container (27) to be transported can be hung or is hung, the ring component (65) preferably being connected moveably to the guide components (63), in particular via lateral ring elements (79) which are placed onto bolts (64) which are provided on the guide components (63), or
in particular via the container (27) itself, which is fitted and/or placed, in particular via handles (62), next to and/or onto the guide components (63) or next to and/or onto moulded bodies (66) which are provided on the guide components (63).

14. Restaurant system according to one of Claims 3 to 13, **characterized in that** containers (27, 28, 34a,b,c), in particular pots and/or tableware, preferably sliding dishes (28, 34a) and/or sliding plates and/or sliding pots and/or sliding pans, and/or glasses and/or tumblers and/or cups and/or bottles, are provided for the meals and/or beverages to be transported, which containers correspond in respect of their dimensions and/or sliding properties to the rails (7).

15. Restaurant system according to Claim 14, **characterized in that** the container, in particular the sliding dish (34a,b,c) and/or the sliding pot and/or the sliding pan, is of multipart construction, a first container, in particular a first dish (34a), corresponding in respect of its dimensions and/or sliding properties to the rails (7), in particular having a sliding bottom designed for the rail (7), and at least one further container, in particular a further dish (34b,c), being able to be hung or being hung in the first container, in particular in the first dish (34a).

16. Restaurant system according to one of Claims 11 to 15, **characterized in that** a beverage insert (45, 70) is provided for the transport aid (37, 38, 41, 58, 59, 60, 61) and/or the container (27, 28, 34a,b,c), in particular the sliding dish (28) and/or the sliding pot and/or the sliding pan, with which beverage insert beverage containers (37) or bottles or carafes or soup containers can be transported by means of the transport aid and/or container, in particular the sliding dishes (28) and/or the sliding pot and/or the sliding pan, in a manner secure against tipping over.

17. Restaurant system according to one of Claims 11 to 16, **characterized in that** a handle (50), in particular a removable handle (50), is provided, with which the containers (27, 28, 34a,b,c), in particular the sliding dishes (28, 34a), can be removed from the rail system (6) and/or the transport aids (37, 38, 41, 58, 59, 60, 61).

18. Restaurant system according to one of Claims 3 to 17, **characterized in that** the working area (3) is connected or can be connected to at least one, in particular each, table (5) of the customer area (4) via at least one rail (7) and/or at least one rail line (56).

19. Restaurant system according to one of Claims 3 to 18, **characterized in that** the rail (7) arranged between working area (3) and customer area (4) is moveable, at least in some sections, in particular via at least one operating device which can be actuated from the working area (3), and/or via a cable system (26) and/or via a rocker mechanism (44).

20. Restaurant system according to Claim 19, **characterized in that** the rail (7) is moveable, preferably via a cable system (26) or via a rocker mechanism (44), in such a manner that an end (20) of the rail (7) that faces the customer area is moveable in the vertical direction, in particular lies, in a lower position, next to or on the table (5) and, in an upper position, is arranged such that it is freely suspended above the customer area (4), with transport of meals and/or beverages via the rail (7) preferably being possible only in the lower position.

21. Restaurant system according to Claim 19 or 20, **characterized in that** the rail (7) is rotatable in the horizontal direction, in particular by a rotary mounting (21).

22. Restaurant system according to Claim 21, **characterized in that** the rotational movement of the rail (7) is possible only in a raised position, in particular going beyond a predetermined height, of that end (20) of the rail which faces the customer area, and is blocked in lower positions, in particular by a guide grid (22) for the rail (7).

23. Restaurant system according to one of Claims 3 to 22, **characterized in that** the rail (7) between working area (3) and customer area (4) has essentially a constant slope, at least in a central section, in a transport position.

24. Restaurant system according to one of Claims 3 to 23, **characterized in that** speed sensors are provided for determining the transport speed, and/or braking devices are provided for reducing the transport speed.

25. Restaurant system according to one of Claims 3 to 24, **characterized in that**, towards the customer area (4), the rail (7) has a slowing-down section in which the amount of slope of the rail (7) is less than in the central section, in particular decreases continuously, at least in some sections, and/or a sliding surface (18) of the rail (7) has a greater coefficient of friction than in the central section.

26. Restaurant system according to one of Claims 3 to 25, **characterized in that** the rail line (56) ends or peters out in the customer area, in particular at the tables (5), on a round tower (74), in particular a two-storey round tower (74) with two levels, a lower and an upper level, which are preferably rotatable independently of each other about a round-tower spindle and are arranged one above the other.

27. Restaurant system according to Claim 26, **characterized in that** the lower level of the round tower (74) has one or more removable trays in the shape of a segment of a circle.

28. Restaurant system according to Claim 26 or 27, **characterized in that** one or more monitors, in particular touch screen monitors, are attached to the round tower (74), in particular to the round-tower spindle, via one or more pivotable and/or rotatable holders.

29. Restaurant system according to one of Claims 3 to 28, **characterized in that** the rail (7) between working area (3) and customer area (4) is covered, at least in some sections, in particular all-over or by lattice bars.

30. Restaurant system according to one of the preceding claims, **characterized in that** the transport system comprises or is a cable system and/or **in that** the transport system (6), in particular the rail system (6), comprises ball-bearing conveyors and/or ball-bearing belts and/or roller belts and/or belt conveyors.

31. Restaurant system according to one of the preceding claims, **characterized in that**
a) at least one cleaning and/or waste-disposal area (15) is provided,
b) the cleaning and/or waste-disposal area (15) being arranged at a lower level than the customer area (4),
c) customer area (4) and cleaning and/or waste-disposal area (15) being connected via a removal system (16), in particular for transport aids and/or containers, in particular tableware, preferably sliding dishes and/or sliding plates and/or sliding pots and/or sliding pans, and/or glasses and/or tumblers and/or bottles, and/or for transport aids and/or table waste,
d) the removal system (16) being designed in order to transport containers and/or transport aids and/or table waste from the customer area (4) to the cleaning and/or waste-disposal area (15),
e) the removal of the containers and/or transport aids and/or table waste from the customer area (4) to the cleaning and/or waste-disposal area (15) via the removal system (16) taking place, at least in some sections, by means of gravity.

32. Restaurant system according to Claim 31, **characterized in that** the removal system (16) comprises or is a removal rail system which preferably corresponds in respect of its dimensions and sliding properties to the rail system (6) of the transport system.

33. Restaurant system according to one of the preceding claims, **characterized in that** an ordering system is provided between customer area (4) and working area (3), in particular a cable-pull ordering system, in which order slips are conveyed via a cable-pull system, in particular a mini cableway, from the customer area to the working area, with it preferably being possible for the cable-pull system to be operated from the customer area and/or from the working area.

34. Restaurant system according to Claim 33, **characterized in that** the ordering system, in particular the cable-pull system, can also be used for issuing the bill to the customers and/or for the payment.

35. Restaurant system according to one of the preceding claims, **characterized in that** pipelines, preferably tubes or pipes, are arranged and/or formed on the transport system (6), in particular below the rails (7) and/or laterally on the rails (7) and/or in the rails (7) and/or above and/or below and/or next to coverings of the rails (7), via which pipelines beverages can be transported from the working area (3) to the customer area (4), in particular to the tables (5) of the customer area (4).

36. Restaurant system according to Claim 35, **characterized in that** a respective tap or valve via which the desired beverage can be drawn off is provided at the end of the pipelines in the customer area (4).

37. Restaurant system according to Claim 36, **characterized in that** a measuring device for detecting the quantity of beverage drawn off is installed upstream of each tap or valve in or on the respective pipeline.

38. Restaurant system according to one of Claims 35 to 37, **characterized in that** a central distributing point is provided, preferably in the working area (3), said distributing point supplying the type and quantity of beverage ordered by a customer to the customer area (4), in particular to the particular table (5), in one of the pipelines, this supplied type and quantity of beverage being removable preferably via a valve or a tap in the customer area (4), in particular at the particular table (5).

39. Restaurant system according to one of Claims 35 to 38, **characterized in that** on or next to the tap or valve, a further valve is provided in the pipeline, to which, in order to flush the pipeline, a return pipeline is connected, via which supplied flushing water can be conducted away.

40. Restaurant system according to one of the preceding claims, **characterized in that** the customer area or part of the customer area is divided into a plurality of subareas which are offset in a stepped manner with respect to one another in the manner of a spiral staircase, the individual subareas being able to be supplied with meals and/or beverages via branch lines from a main transport route and/or via a plurality of transport routes of the transport system that are arranged one above another and/or next to one another.

41. Restaurant system according to one of the preceding claims, **characterized in that** the customer area or part of the customer area is a drive-in area, in particular a drive-in area with parking spaces, at which rail lines and/or rails of the transport system end.

42. Restaurant system according to one of the preceding claims, **characterized in that** the transport system is designed for a targeted and automatic transport of meals and/or beverages into the customer area, in particular to the table of a customer for whom the meals and/or beverages are intended.

43. Restaurant system according to one of the preceding claims, **characterized in that** the transport system is at least partially controlled by information technology in which, preferably, in addition to the transport of the meals and beverages, other restaurant tasks, in particular an ordering system and/or a payment system, are also integrated.

## Revendications

1. Système de restaurant (2), comportant
a) au moins une zone de travail (3) pour cuisiner et/ou préparer des mets et/ou boissons,
b) au moins une zone de restauration (4), en particulier avec une ou plusieurs tables (5) pour les clients du restaurant,
c) la zone de travail (3) et la zone de restauration (4) étant reliées via un système de transport (6) pour les mets et/ou boissons, et
d) le système de transport (6) étant configuré pour transporter les mets et/ou boissons depuis la zone de travail (3) vers la zone de restauration (4),
**caractérisé en ce que**
e) le transport des mets et/ou boissons depuis la zone de travail (3) vers la zone de restauration (4) via le système de transport (6) est effectué au moins par zones sous l'effet de la force de gravité.

2. Système de restaurant selon la revendication 1, **caractérisé en ce que** la zone de travail (3) est disposée plus haut que la zone de restauration (4).

3. Système de restaurant selon la revendication 1 ou 2, **caractérisé en ce que** le système de transport (6) comporte ou est un système de rail (6) avec une ou plusieurs voies à rail (56) et/ou au moins un rail (7).

4. Système de restaurant selon la revendication 3, **caractérisé en ce que** le système de rail comporte des glissières (7).

5. Système de restaurant selon la revendication 4, **caractérisé en ce que** les glissières (7) ont des surfaces de glissement.

6. Système de restaurant selon l'une quelconque des revendications 3 à 5, **caractérisé en ce qu'**un premier type de voie à rail (56) est formé par un rail (7), en particulier un rail avec une section circulaire ou ovale ou rectangulaire, ou par un rail (7) en forme de U avec une surface de glissement (18) et des bords de guidage (19).

7. Système de restaurant selon l'une quelconque des revendications 3 à 6, **caractérisé en ce qu'**un deuxième type de voie à rail (56) comporte deux rails (7), qui s'étendent au moins sensiblement parallèlement, en particulier deux rails (7) avec une section au moins sensiblement circulaire ou ovale ou rectangulaire.

8. Système de restaurant selon l'une quelconque des revendications 3 à 7, **caractérisé en ce qu'**un troisième type de voie à rail (56) comporte quatre rails qui s'étendent au moins sensiblement parallèlement, en particulier quatre rails avec une section au moins sensiblement circulaire ou ovale ou rectangulaire, deux rails intérieurs étant séparés l'un de l'autre par une distance inférieure à celle entre deux rails extérieurs, les deux rails intérieurs définissant un plan de glissement et les deux rails extérieurs définissant un plan de guidage, et le plan de glissement étant disposé en dessous du plan de guidage.

9. Système de restaurant selon l'une quelconque des revendications 3 à 8, **caractérisé en ce que** plusieurs rails situés les uns à côté des autres et/ou parallèles entre eux, en particulier des rails du type rail de chemin de fer, sont disposés en étant décalés en hauteur les uns par rapport aux autres, de préférence pour permettre le transport de récipients de dimensions différentes.

10. Système de restaurant selon l'une quelconque des revendications 3 à 9, **caractérisé en ce que** le système de rail (6) comporte des embranchements (8) dans la direction de transport, au niveau desquels la voie de transport peut être réglée ou est réglée par des aiguillages (9) propres à être commandés, en particulier via au moins un dispositif de commande pouvant être actionné depuis la zone de travail (3).

11. Système de restaurant selon l'une quelconque des revendications 3 à 10, **caractérisé en ce qu'**il est prévu des moyens auxiliaires de transport (37, 38, 41, 58, 59, 60, 61), en particulier des supports coulissants et/ou des dispositifs coulissants qui, par leurs dimensions et/ou leurs propriétés de glissement, correspondent avec les rails (7) et qui sont configurés pour le transport de récipients (27), en particulier des pots et/ou de la vaisselle, de préférence des plats creux coulissants (28, 34a) et/ou des assiettes coulissantes et/ou des pots coulissants et/ou des poêlons coulissants, et/ou des verres et/ou des gobelets et/ou des bouteilles et/ou des carafes, pour des mets et/ou des boissons, sachant que de préférence les récipients peuvent être posés de manière stable dans ou sur les moyens auxiliaires de transport.

12. Système de restaurant selon la revendication 11, **caractérisé en ce que** les moyens auxiliaires de transport (37, 38, 41, 58, 59, 60, 61) comportent des composants de guidage (63), qui enserrent au moins en partie les rails (7), qui enserrent en particulier au moins la moitié de la périphérie d'un rail, qui enserrent de préférence au moins les deux tiers de la périphérie d'un rail.

13. Système de restaurant selon la revendication 11 ou 12, **caractérisé en ce que**
le moyen auxiliaire de transport (58, 59, 60, 61) comporte deux composants de guidage (63), qui sont reliés l'un à l'autre,
en particulier par l'intermédiaire d'un composant annulaire (65), dans lequel peut être accroché ou est accroché le récipient (27) à transporter, le composant annulaire (65) étant relié de préférence de manière mobile aux composants de guidage (63), en particulier par des éléments annulaires (79) latéraux, qui sont enfichés sur des boulons (64), qui sont prévus sur les composants de guidage (63), ou
en particulier par l'intermédiaire du récipient (27) lui-même, qui est monté et/ou est enfiché, en particulier par l'intermédiaire de poignées (62), contre et/ou sur des corps profilés (66), qui sont prévus sur les composants de guidage (63).

14. Système de restaurant selon l'une quelconque des revendications 3 à 13, **caractérisé en ce que** pour les mets et/ou les boissons à transporter sont prévus les récipients (27, 28, 34a, b, c), en particulier des pots et/ou de la vaisselle, de préférence des plats creux coulissants (28, 34a) et/ou des assiettes coulissantes et/ou des pots coulissants et/ou des poêlons coulissants, et/ou des verres et/ou des gobelets et/ou des tasses et/ou des bouteilles, lesquels, par leurs dimensions et/ou leurs propriétés de glissement, correspondent avec les rails (7).

15. Système de restaurant selon la revendication 14, **caractérisé en ce que** le récipient, en particulier le plat creux coulissant (34a, b, c) et/ou le pot coulissant et/ou le poêlon coulissant, est constitué de plusieurs parties, un premier récipient, sachant qu'en particulier un premier plat creux (34a) qui, par ses dimensions et/ou ses propriétés de glissement, correspond avec les rails (7), comporte en particulier un fond coulissant, conçu pour le rail (7), et au moins un autre récipient, en particulier un autre plat creux (34b, c), peut être accroché ou est accroché dans le premier récipient, en particulier dans le premier plat creux (34a).

16. Système de restaurant selon l'une quelconque des revendications 11 à 15, **caractérisé en ce qu'**il est prévu un insert pour boisson (45, 70) sur le moyen auxiliaire de transport (37, 38, 41, 58, 59, 60, 61) et/ou sur le récipient (27, 28, 34a, b, c), en particulier le plat creux coulissant (28) et/ou le pot coulissant et/ou le poêlon coulissant, au moyen duquel des conteneurs de boisson (37) ou bouteilles ou carafes ou des conteneurs pour potages peuvent être transportés sans risque de tomber avec le moyen auxiliaire de transport et/ou le récipient, en particulier les plats creux coulissants (28) et/ou le pot coulissant et/ou le poêlon coulissant.

17. Système de restaurant selon l'une quelconque des revendications 11 à 16, **caractérisé en ce qu'**il est prévu une poignée (50), en particulier une poignée amovible (50), avec laquelle les récipients (27, 28, 34a, b, c), en particulier les plats creux coulissants (28, 34a), peuvent être retirés hors du système de rail (6) et/ou des moyens auxiliaires de transport (37, 38, 41, 58, 59, 60, 61).

18. Système de restaurant selon l'une quelconque des revendications 3 à 17, **caractérisé en ce que** la zone de travail (3) est reliée ou peut être reliée à au moins une table (5), de préférence à chaque table, de la zone de restauration (4) par l'intermédiaire d'au moins un rail (7) et/ou d'au moins une voie à rail (56).

19. Système de restaurant selon l'une quelconque des revendications 3 à 18, **caractérisé en ce que** le rail (7), agencé entre la zone de travail (3) et la zone de restauration (4), peut être déplacé au moins par zones, en particulier par l'intermédiaire d'au moins un dispositif de commande propre à être actionné à partir de la zone de travail (3) et/ou par l'intermédiaire d'un système de câble (26) et/ou d'un mécanisme à bascule (44).

20. Système de restaurant selon la revendication 19, **caractérisé en ce que** le rail (7) est mobile, de préférence par l'intermédiaire d'un système de câble (26) ou par l'intermédiaire d'un mécanisme à bascule (44), de telle sorte qu'une extrémité (20) du rail (7), orientée vers la zone de restauration, est mobile dans la direction verticale, en particulier est située, dans une position inférieure, contre ou sur la table (5) et, dans une position supérieure, est disposée en porte-à-faux au-dessus de la zone de restauration (4), un transport des mets et/ou boissons via le rail (7) étant possible de préférence uniquement dans la position inférieure.

21. Système de restaurant selon la revendication 19 ou 20, **caractérisé en ce que** le rail (7) est apte à tourner dans la direction horizontale, en particulier par l'intermédiaire d'un palier rotatif (21).

22. Système de restaurant selon la revendication 21, **caractérisé en ce que** le mouvement de rotation du rail (7) est possible uniquement lorsque l'extrémité (20) du rail, orientée vers la zone de restauration, est dans une position relevée, en particulier au-delà d'une hauteur prédéfinie, et ledit mouvement de rotation est bloqué dans les positions plus basses, en particulier par un cadre de guidage (22) pour le rail (7).

23. Système de restaurant selon l'une quelconque des revendications 3 à 22, **caractérisé en ce que** le rail (7), dans une position de transport entre la zone de travail (3) et la zone de restauration (4), présente, au moins dans la partie centrale, sensiblement une pente ascendante constante.

24. Système de restaurant selon l'une quelconque des revendications 3 à 23, **caractérisé en ce qu'**il est prévu des capteurs de vitesse destinés à détecter la vitesse de transport et/ou des dispositifs de freinage destinés à réduire la vitesse de transport.

25. Système de restaurant selon l'une quelconque des revendications 3 à 24, **caractérisé en ce que** le rail (7) comporte un tronçon de sortie menant vers la zone de restauration (4), dans lequel la valeur de la pente ascendante du rail (7) est inférieure à celle dans la partie centrale, en particulier diminue en continu au moins par zones, et/ou une surface de glissement (18) du rail (7) possède un coefficient de frottement supérieur à celui dans la zone centrale.

26. Système de restaurant selon l'une quelconque des revendications 3 à 25, **caractérisé en ce que** la voie à rail (56) dans la zone de restauration, en particulier au niveau des tables (5), se termine ou aboutit sur un carrousel (74), en particulier un carrousel (74) à deux étages avec deux plans disposés l'un au-dessus de l'autre, à savoir un plan inférieur et un plan supérieur, aptes à tourner de préférence indépendamment l'un de l'autre autour d'un axe du carrousel.

27. Système de restaurant selon la revendication 26, **caractérisé en ce que** le plan inférieur du carrousel (74) comporte une ou plusieurs tablettes amovibles, en forme de segment de cercle.

28. Système de restaurant selon la revendication 26 ou 27, **caractérisé en ce qu'**un ou plusieurs moniteurs, en particulier des moniteurs à écran tactile, sont montés sur le carrousel (74), en particulier sur l'axe du carrousel, au moyen d'un ou de plusieurs supports aptes à pivoter et/ou aptes à tourner.

29. Système de restaurant selon l'une quelconque des revendications 3 à 28, **caractérisé en ce que** le rail (7) entre la zone de travail (3) et la zone de restauration (4) est recouvert au moins par zones, en particulier par une surface pleine ou par des barreaux de grille.

30. Système de restaurant selon l'une quelconque des revendications précédentes, **caractérisé en ce que** le système de transport comporte ou est un système à câble et/ou **en ce que** le système de transport (6), en particulier le système de rail (6), comporte une voie de roulement à billes et/ou des bandes de roulement à billes et/ou des bandes de roulement à rouleaux et/ou des tapis roulants.

31. Système de restaurant selon l'une quelconque des revendications précédentes, **caractérisé en ce que**
a) il est prévu au moins une zone de nettoyage et/ou zone de desserte (15),
b) la zone de nettoyage et/ou zone de desserte (15) étant disposée plus bas que la zone de restauration (4),
c) la zone de restauration (4) et la zone de nettoyage et/ou zone de desserte (15) étant reliées par l'intermédiaire d'un système d'évacuation (16), en particulier pour des moyens auxiliaires de transport et/ou des récipients, en particulier de la vaisselle, de préférence des plats creux coulissants et/ou des assiettes coulissantes et/ou des pots coulissants et/ou des poêlons coulissants, et/ou des verres et/ou des gobelets et/ou des bouteilles, et/ou des moyens auxiliaires de transport et/ou des déchets de table,
d) le système d'évacuation (16) étant configuré pour transporter des récipients et/ou des moyens auxiliaires de transport et/ou des déchets de table depuis la zone de restauration (4) vers la zone de nettoyage et/ou zone de desserte (15),
e) l'évacuation des récipients et/ou des moyens auxiliaires de transport et/ou des déchets de table s'effectuant au moins par zones sous l'effet de la force de gravité, depuis la zone de restauration (4) vers la zone de nettoyage et/ou zone de desserte (15) par l'intermédiaire du système d'évacuation (16).

32. Système de restaurant selon la revendication 31, **caractérisé en ce que** le système d'évacuation (16) comporte ou est un système d'évacuation à rail qui, de préférence par ses dimensions et ses propriétés de glissement, correspond au système de rail (6) du système de transport.

33. Système de restaurant selon l'une quelconque des revendications précédentes, **caractérisé en ce qu'**entre la zone de restauration (4) et la zone de travail (3), il est prévu un système de passation de commande, en particulier un système de passation de commande avec câble sous gaine, dans lequel un bon de commande est convoyé par un système de câble sous gaine, en particulier une mini-voie à câble, depuis la zone de restauration vers la zone de travail, sachant que de préférence le système de câble sous gaine peut être commandé à partir de la zone de restauration et/ou à partir de la zone de travail.

34. Système de restaurant selon la revendication 33, **caractérisé en ce que** le système de passation de commande, en particulier le système de câble sous gaine, est également utilisable pour transmettre la facture aux clients et/ou pour le paiement.

35. Système de restaurant selon l'une quelconque des revendications précédentes, **caractérisé en ce que** sur le système de transport (6), en particulier en dessous des rails (7) et/ou à côté des rails (7) et/ou dans les rails (7) et/ou au-dessus et/ou au-dessous et/ou à côté de systèmes de recouvrement des rails (7) sont disposées et/ou réalisées des conduites, de préférence des tuyaux flexibles ou des tubes, par lesquelles les boissons peuvent être transportées depuis la zone de travail (3) vers la zone de restauration (4), en particulier vers les tables (5) de la zone de restauration (4).

36. Système de restaurant selon la revendication 35, **caractérisé en ce qu'**au niveau de l'extrémité des conduites, dans la zone de restauration (4), est prévu dans chaque cas un robinet de soutirage ou une vanne, par l'intermédiaire duquel la boisson souhaitée peut être soutirée.

37. Système de restaurant selon la revendication 36, **caractérisé en ce qu'**un dispositif de mesure, destiné à enregistrer la quantité de boisson soutirée, est installé devant chaque robinet de soutirage ou vanne dans ou au niveau de la conduite.

38. Système de restaurant selon l'une quelconque des revendications 35 à 37, **caractérisé en ce qu'**il est prévu un point de distribution central, de préférence dans la zone de travail (4), par lequel le type de boisson et la quantité de boisson, commandés par un client, sont mis à disposition dans l'une des conduites au niveau de la zone de restauration (4), en particulier au niveau de la table (5) concernée, le type de boisson et la quantité de boisson mis à disposition pouvant être soutirés de préférence par l'intermédiaire d'une vanne ou d'un robinet de soutirage dans la zone de restauration (4), en particulier au niveau de la table (5) concernée.

39. Système de restaurant selon l'une quelconque des revendications 35 à 38, **caractérisé en ce qu'**au niveau ou à proximité du robinet de soutirage ou vanne, il est prévu une vanne supplémentaire dans la conduite, à laquelle est raccordée une conduite de retour pour le rinçage de la conduite, via laquelle l'eau de rinçage acheminée peut être évacuée.

40. Système de restaurant selon l'une quelconque des revendications précédentes, **caractérisé en ce que** la zone de restauration ou une partie de la zone de restauration est divisée en plusieurs zones partielles, qui sont disposées en étant décalées par niveaux les unes par rapport aux autres à la manière d'un escalier en colimaçon, les différentes zones partielles pouvant être approvisionnées avec les mets et/ou les boissons par l'intermédiaire d'embranchements partant d'une voie de transport principale et/ou par l'intermédiaire de plusieurs voies de transport du système de transport, disposées les unes au-dessus des autres et/ou les unes à côté des autres.

41. Système de restaurant selon l'une quelconque des revendications précédentes, **caractérisé en ce que** la zone de restauration ou une partie de la zone de restauration est une zone de drive-in, en particulier une zone de drive-in avec des places de parking, au niveau desquelles aboutissent des voies à rail et/ou des rails du système de transport.

42. Système de restaurant selon l'une quelconque des revendications précédentes, **caractérisé en ce que** le système de transport est configuré pour un transport ciblé et automatique des mets et/ou boissons vers la zone de restauration, en particulier à la table d'un client, auquel sont destinés les mets et/ou boissons.

43. Système de restaurant selon l'une quelconque des revendications précédentes, **caractérisé en ce que** le système de transport est commandé au moins en partie par une technologie d'information, dans laquelle sont intégrés, outre le transport des mets et/ou boissons, également d'autres fonctions de restauration, en particulier un système de passation de commande et/ou un système de paiement.
